# EUROPEAN PATENT APPLICATION

(11) **EP 4 822 857 A1**
(43) Date of publication of application: **14.10.2026**
(21) Application number: 23960610.6
(22) Date of filing: 08.12.2023
(51) Int. Cl.: H01M 50/30

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: WU, Kai, Ningde, Fujian 352100 (CN); XING, Chengyou, Ningde, Fujian 352100 (CN); MENG, Wanqiu, Ningde, Fujian 352100 (CN); WANG, Peng, Ningde, Fujian 352100 (CN); JIN, Haizu, Ningde, Fujian 352100 (CN); LI, Quankun, Ningde, Fujian 352100 (CN)
(74) Representative: Kraus & Lederer PartGmbB
(86) International application number: PCT/CN2023/137669
(87) International publication number: WO 2025/118299

(57) **Abstract**

The present application discloses a battery cell, a battery, and an electrical device. The battery cell comprises a casing and an exhaust assembly; the casing is provided with a wall portion; the exhaust assembly is arranged on the wall portion and comprises a one-way valve and a gas-permeable film assembly; the exhaust assembly is used for discharging gas inside the casing. By means of the arrangement, the gas inside the casing can be discharged out of the casing in time, so that the gas pressure of the interior of the casing is not too high, thereby reducing the risk that the valve of a pressure relief mechanism is opened in advance, and greatly prolonging the service life of the battery cell.

## Description

### TECHNICAL FIELD

The present application relates to the field of new energy technologies, and in particular, to a battery cell, a battery, and an electrical device.

### BACKGROUND

As global energy and environmental issues continue to intensify, new energy, as one of the fields of sustainable development, is developing rapidly. Batteries, as a new energy mode, are being applied more and more widely, and have high requirements for reliability and service life in use. During the charging and discharging process of a battery, generation of gas inside the battery causes the internal pressure of the battery to increase. To ensure the safety of the battery cell, a pressure relief mechanism is generally provided on the housing of the battery cell to relieve the internal pressure of the battery cell, so that when the internal pressure or temperature of the battery cell reaches a threshold, the pressure relief mechanism can be actuated to relieve the pressure inside the battery cell. However, the pressure relief mechanism of existing battery cells may be actuated prematurely to relieve pressure during use, resulting in poor use stability of the battery cell, which is not conducive to improving the service life and use reliability of the battery cell. The above statements are only used to provide background technical information related to the present application and do not necessarily constitute the prior art.

### SUMMARY

The main technical problem solved by the present application is to provide a battery cell, a battery, and an electrical device, which can discharge gas inside the battery housing to the outside of the housing in a timely manner, so that the air pressure inside the housing of the battery is not too high, thereby reducing the risk of a pressure relief mechanism being actuated prematurely, and greatly improving a service life of the battery cell. To solve the above technical problem, a technical solution adopted by the present application is to provide a battery cell, the battery cell includes a housing and an exhaust assembly, the housing has a wall portion, the exhaust assembly is arranged on the wall portion, the exhaust assembly includes a one-way valve and a gas-permeable film assembly, the gas-permeable film assembly includes a gas-permeable film, and the exhaust assembly is configured to discharge gas from inside the housing. Through such arrangement, gas inside the housing may be discharged out of the housing in a timely manner, so that the air pressure inside the housing is not too high, thereby reducing the risk of the pressure relief mechanism being actuated prematurely, and greatly improving the service life of the battery cell.

In one implementation, the one-way valve includes a valve body and a valve core, the valve body has a valve cavity inside, the valve body is provided with an air inlet and an air outlet, the air inlet is configured to communicate the valve cavity with an interior of the housing, and the air outlet is configured to communicate the valve cavity with an exterior of the housing. The valve core is arranged in the valve cavity, the valve core is configured to block an air inlet passage of the valve cavity, and the valve core is configured to open the air inlet passage under the action of gas inside the housing and release the gas inside the battery cell. In this way, entry of external water vapor into the interior of the housing can be reduced while gas inside the housing is discharged.

In one implementation, the wall portion has a first exhaust hole, the first exhaust hole communicates the interior of the housing with the exterior of the housing, and the exhaust assembly is configured such that gas discharged through the first exhaust hole flows through the one-way valve and the gas-permeable film assembly. In this way, on the one hand, the gas-permeable film may be used to block the overflow of electrolyte and the entry of external water vapor, and on the other hand, the one-way valve may be used to regulate the intermittent exhaust of the battery cell, which is beneficial to maintaining the sealing performance of the housing.

In one implementation, along a thickness direction of the wall portion, the gas-permeable film of the gas-permeable film assembly is closer to the interior of the housing than the one-way valve. In this way, when gas inside the housing is discharged, the gas can first pass through the gas-permeable film and then through the one-way valve, so as to block the electrolyte from entering the one-way valve, thereby reducing the risk of the valve core of the one-way valve being corroded by the electrolyte.

In one implementation, the gas-permeable film is arranged on an air inlet side of the air inlet of the valve cavity of the one-way valve. In this way, the gas-permeable film may be used to block the electrolyte from entering the valve cavity of the one-way valve, and the assembly of the exhaust assembly is facilitated.

In one implementation, the gas-permeable film is arranged on an air outlet side of the air inlet of the valve cavity of the one-way valve. In this way, the gas-permeable film may be used to block the electrolyte from entering the valve cavity of the one-way valve.

In one implementation, the gas-permeable film is arranged on an air inlet side of the air outlet of the valve cavity of the one-way valve. In this way, the valve opening time of the one-way valve can be shortened, which is beneficial to maintaining the sealing performance of the housing.

In one implementation, the gas-permeable film is arranged on an air outlet side of the air outlet of the valve cavity of the one-way valve. In this way, the assembly of the exhaust assembly can be facilitated.

In one implementation, the wall portion has an outer surface and an inner surface arranged opposite each other, the outer surface is arranged toward the exterior of the housing, and the inner surface is arranged toward the interior of the housing; the one-way valve is arranged on the outer surface of the wall portion, and at least part of the valve body of the one-way valve protrudes from the outer surface of the wall portion; and at least part of the gas-permeable film assembly is arranged on the outer surface. In this way, the occupation of the internal space of the housing by the exhaust assembly can be reduced.

In one implementation, the wall portion has an outer surface and an inner surface arranged opposite each other, the outer surface is arranged toward the exterior of the housing, and the inner surface is arranged toward the interior of the housing; the one-way valve is arranged on the outer surface of the wall portion, and at least part of the valve body of the one-way valve protrudes from the inner surface of the wall portion; and the gas-permeable film assembly is arranged on the part of the valve body protruding from the inner surface. In this way, when the one-way valve is opened, the environment in which it is located is the interior of the housing, which is beneficial to maintaining the sealing performance of the housing.

In one implementation, the wall portion has an outer surface and an inner surface arranged opposite each other, the outer surface is arranged toward the exterior of the housing, and the inner surface is arranged toward the interior of the housing; the one-way valve is arranged on the outer surface of the wall portion, and at least part of the valve body of the one-way valve protrudes from the outer surface of the wall portion; and at least part of the gas-permeable film assembly is arranged on the inner surface of the wall portion. In this way, the assembly of the exhaust assembly can be facilitated.

In one implementation, the wall portion has an outer surface and an inner surface arranged opposite each other, the outer surface is arranged toward the exterior of the housing, and the inner surface is arranged toward the interior of the housing; the one-way valve is arranged on the outer surface of the wall portion, and the valve body of the one-way valve faces the interior of the housing and at least part of the valve body protrudes from the inner surface of the wall portion; and the gas-permeable film assembly is arranged on the side of the one-way valve facing the exterior of the housing. In this way, the assembly of the exhaust assembly can be facilitated.

In one implementation, the gas-permeable film assembly is connected to the one-way valve, and the one-way valve is connected to the wall portion. In this way, the assembly of the exhaust assembly can be facilitated.

In one implementation, the one-way valve is connected to the gas-permeable film assembly, and the gas-permeable film assembly is connected to the wall portion. In this way, the assembly of the exhaust assembly can be facilitated.

In one implementation, the gas-permeable film assembly and the one-way valve are each independently connected to the wall portion. In this way, the assembly of the exhaust assembly can be facilitated.

In one implementation, the valve body includes a valve seat and a valve cover. The valve cover includes a cover top wall and a cover side wall connected to the cover top wall. The cover top wall, the cover side wall, and the valve seat enclose to form the valve cavity. The valve seat is provided with the air inlet of the valve cavity, and the valve cover is provided with the air outlet of the valve cavity. In this way, discharge of gas is facilitated.

In one implementation, the valve seat has a first through hole penetrating the valve seat, and the air inlet is the first through hole. In this way, discharge of gas is facilitated.

In one implementation, the cover side wall has a second through hole penetrating the cover side wall, and the air outlet is the second through hole. In this way, discharge of gas is facilitated.

In one implementation, along a direction away from the cover top wall, the second through hole extends to an end of the cover side wall. In this way, discharge of gas is facilitated.

In one implementation, the second through hole is provided in plurality, and the plurality of second through holes are distributed at intervals in a circumferential direction of the side wall. In this way, discharge of gas is facilitated.

In one implementation, a first guide post is convexly provided on a side of the cover top wall facing the valve seat, the cover top wall has a third through hole penetrating the cover top wall and the first guide post, and the air outlet is the third through hole. In this way, discharge of gas is facilitated.

In one implementation, the valve cover further includes a flanging wall, the cover side wall connects the cover top wall and the flanging wall, the flanging wall extends relative to the cover side wall toward a side away from the valve cavity, and the flanging wall is connected to the valve seat. In this way, assembly of the one-way valve is facilitated.

In one implementation, a side of the valve seat facing the valve cover is provided with a first recessed groove recessed relative to a surface of the valve seat, and at least part of the flanging wall is accommodated in the first recessed groove and connected to the valve seat. In this way, the installation height of the one-way valve can be reduced.

In one implementation, a surface of the flanging wall facing the cover top wall is flush with a surface of the valve seat facing the valve cover; or the surface of the flanging wall facing the cover top wall is lower than the surface of the valve seat facing the valve cover. In this way, the connection strength can be improved while reducing the installation height of the one-way valve.

In one implementation, the flanging wall is connected to the valve seat by welding; where, in the circumferential direction of the cover side wall, at least part of a first weld mark of the flanging wall and the valve seat is staggered from the second through hole on the cover side wall. In this way, the damage to the valve core component caused by the high temperature of the welding process can be reduced.

In one implementation, an outer peripheral surface of the valve seat is convexly provided with a connecting protrusion, an inner peripheral surface of the flanging wall is provided with an accommodating groove, and the connecting protrusion is accommodated in the accommodating groove and connected to the flanging wall. In this way, the connection strength can be improved while reducing the installation height of the one-way valve.

In one implementation, the connecting protrusion is connected to the flanging wall by welding, where the flanging wall has an upper surface and a lower surface arranged opposite each other, the upper surface is arranged toward the cover top wall, and the second weld mark at which the connecting protrusion is welded to the flanging wall is located on the lower surface of the flanging wall. In this way, the damage to the valve core component caused by the high temperature of the welding process can be reduced.

In one implementation, the wall portion is provided with a first exhaust hole, the first exhaust hole includes a through hole section and a first hole section, the through hole section and the first hole section are arranged along the thickness direction of the wall portion, the through hole section communicates the interior of the housing with the exterior of the housing, the first hole section is located on a side of the through hole section facing away from the interior of the housing, an aperture of the first hole section is larger than an aperture of the through hole section, the one-way valve is at least partially accommodated in the first hole section, the valve body of the one-way valve faces the exterior of the housing and at least part of the valve body protrudes from the outer surface of the wall portion. In this way, the assembly of the one-way valve can be facilitated.

In one implementation, the gas-permeable film assembly is arranged on a side of the wall portion facing the interior of the housing, where the gas-permeable film assembly includes a gas-permeable film and a connecting member, the connecting member is provided with a first gas-permeable hole, the gas-permeable film is arranged on the connecting member and covers the first gas-permeable hole, and the connecting member is connected to the wall portion. In this way, the connection strength can be improved.

In one implementation, the wall portion has an outer surface and an inner surface arranged opposite each other, the outer surface is arranged toward the exterior of the housing, the inner surface is arranged toward the interior of the housing, the wall portion has a first recessed platform recessed relative to the inner surface, the first recessed platform is arranged around the through hole section of the first exhaust hole, and the gas-permeable film assembly is at least partially accommodated in the first recessed platform. In this way, the occupation of the internal space of the housing by the gas-permeable film assembly can be reduced.

In one implementation, the wall portion further has a second recessed platform recessed relative to the inner surface, the first recessed platform is closer to the inner surface of the wall portion than the second recessed platform, the first recessed platform is arranged around the second recessed platform, the second recessed platform is arranged around the through hole section of the first exhaust hole, the connecting member is at least partially accommodated in the first recessed platform, and the gas-permeable film is arranged on a side of the connecting member away from the wall portion. In this way, discharge of gas is facilitated.

In one implementation, the gas-permeable film is arranged on the side of the connecting member away from the wall portion. In this way, the electrolyte can be prevented from entering the connecting member region.

In one implementation, the gas-permeable film is arranged on a side of the connecting member close to the wall portion. In this way, discharge of gas is facilitated.

In one implementation, an orthographic projection of the first gas-permeable hole on the wall portion is located in an area in which the through hole section of the first exhaust hole is located. In this way, discharge of gas is facilitated.

In one implementation, the orthographic projection of the first gas-permeable hole on the wall portion does not overlap with the area in which the through hole section of the first exhaust hole is located. In this way, discharge of gas is facilitated.

In one implementation, the wall portion further has a third recessed platform recessed relative to the inner surface, the third recessed platform is closer to the inner surface of the wall portion than the first recessed platform, and the third recessed platform is arranged around the first recessed platform. In this way, the assembly of the wall portion and the insulating member can be facilitated.

In one implementation, at least part of the gas-permeable film assembly is arranged on the outer surface of the wall portion, at least part of the gas-permeable film assembly is accommodated in the first exhaust hole, and the gas-permeable film assembly is located on a side of the one-way valve facing the wall portion. In this way, the gas-permeable film may be used to block the electrolyte from entering the valve cavity of the one-way valve.

In one implementation, the first exhaust hole further includes a second hole section, along the thickness direction of the wall portion, the second hole section is located between the through hole section and the first hole section, the aperture of the second hole section is smaller than the aperture of the first hole section, an aperture of the second hole section is larger than the aperture of the through hole section, and at least part of the gas-permeable film assembly is accommodated in the second hole section. In this way, the assembly of the exhaust assembly can be facilitated.

In one implementation, the gas-permeable film assembly includes a gas-permeable film and a connecting member, the connecting member is provided with a first gas-permeable hole, the gas-permeable film is arranged on the connecting member and covers the first gas-permeable hole, and the connecting member is connected to the wall portion by welding. In this way, the connection strength can be improved.

In one implementation, a stress relief groove is provided around a weld mark between the connecting member and the wall portion. In this way, the stability of the connection can be improved.

In one implementation, a third stress relief groove is provided on the connecting member around a fifth weld mark between the connecting member and the wall portion; and/or a second stress relief groove is provided on the wall portion around the fifth weld mark between the connecting member and the wall portion. In this way, the stability of the connection can be improved.

In one implementation, a weld mark avoidance groove is provided on a side surface of the one-way valve facing the gas-permeable film assembly, and the weld mark avoidance groove covers the weld mark between the connecting member and the wall portion. In this way, the assembly of the exhaust assembly can be facilitated.

In one implementation, the gas-permeable film assembly is arranged on the side of the one-way valve facing the wall portion, the gas-permeable film assembly is connected to the one-way valve, and the one-way valve is connected to the wall portion. In this way, the assembly of the exhaust assembly can be facilitated.

In one implementation, the gas-permeable film assembly is arranged on a side of the valve seat facing the valve cavity, and the one-way valve is connected to the wall portion. In this way, the assembly of the exhaust assembly can be facilitated.

In one implementation, the valve cover or valve seat of the one-way valve is connected to the wall portion by welding. In this way, the connection strength can be improved.

In one implementation, a stress relief groove is provided around a weld mark between the valve cover or valve seat and the wall portion. In this way, the stability of the connection can be improved.

In one implementation, a first stress relief groove is provided on the valve cover or valve seat around a third weld mark between the valve cover or valve seat and the wall portion; and/or a second stress relief groove is provided on the wall portion around the third weld mark between the valve cover or valve seat and the wall portion. In this way, the stability of the connection can be improved.

In one implementation, at least part of the gas-permeable film assembly is arranged on the outer surface of the wall portion, the gas-permeable film assembly includes a gas-permeable film and a connecting member, the connecting member is provided with a first gas-permeable hole, the gas-permeable film is arranged on the connecting member and covers the first gas-permeable hole, and the connecting member is connected to the wall portion. The one-way valve is arranged on a side of the connecting member facing the exterior of the housing, and the one-way valve is connected to the connecting member. In this way, the assembly of the exhaust assembly can be facilitated.

In one implementation, the gas-permeable film assembly includes a gas-permeable film, the gas-permeable film is arranged on the inner surface of the wall portion, the gas-permeable film is connected to the wall portion, and covers the through hole section of the first exhaust hole on the wall portion. In this way, the installation height of the exhaust assembly can be reduced, and the occupation of the internal space of the housing can be reduced.

In one implementation, the gas-permeable film assembly includes a gas-permeable film, the gas-permeable film is arranged on the outer surface of the wall portion, the gas-permeable film is located on the side of the one-way valve facing the wall portion, the one-way valve covers the gas-permeable film, and the gas-permeable film is connected to the wall portion or one-way valve. In this way, the installation height of the exhaust assembly can be reduced.

In one implementation, the valve body includes a valve cover. The valve cover includes a cover top wall and a cover side wall connected to the cover top wall. The cover top wall, the cover side wall, and the wall portion enclose to form the valve cavity. The wall portion is provided with the air inlet of the valve cavity, and the cover side wall is provided with the air outlet of the valve cavity. In this way, discharge of gas is facilitated.

In one implementation, a side of the wall portion facing the exterior of the housing is provided with a second recessed groove recessed relative to the outer surface of the wall portion, the valve cover further includes a flanging wall, the cover side wall connects the cover top wall and the flanging wall, the flanging wall extends relative to the cover side wall toward a side away from the valve cavity, and at least part of the flanging wall is accommodated in the second recessed groove and connected to the wall portion. In this way, the installation height of the one-way valve can be reduced.

In one implementation, the gas-permeable film assembly is arranged on the inner surface of the wall portion; the gas-permeable film assembly includes a gas-permeable film, the gas-permeable film is connected to the wall portion, and the gas-permeable film covers the through hole section of the first exhaust hole of the wall portion. In this way, the installation height of the exhaust assembly can be reduced.

In one implementation, the gas-permeable film assembly includes a gas-permeable film and a connecting member, the connecting member is provided with a first gas-permeable hole, the gas-permeable film is arranged on the connecting member and covers the first gas-permeable hole, the gas-permeable film is arranged on the inner surface or outer surface of the wall portion, and the connecting member is connected to the wall portion or one-way valve. In this way, the connection strength can be improved.

In one implementation, the valve body includes a valve seat and a valve cover. The valve seat includes a seat bottom wall and a seat side wall connected to the seat bottom wall, and the valve cover is arranged at an end of the valve seat away from the seat bottom wall. The valve cover, the seat side wall, and the seat bottom wall enclose to form the valve cavity. The valve seat is provided with a fourth through hole, and the air inlet of the valve cavity is the fourth through hole. In this way, discharge of gas is facilitated.

In one implementation, the valve cover has a fifth through hole penetrating the valve cover, and the air outlet of the valve cavity includes the fifth through hole. In this way, discharge of gas is facilitated.

In one implementation, the valve cover is connected to the valve seat, and the air outlet includes a first exhaust gap formed between the valve cover and the valve seat. In this way, discharge of gas is facilitated.

In one implementation, the valve cover is connected to the wall portion, and the air outlet includes a second exhaust gap formed between the valve cover and the wall portion. In this way, discharge of gas is facilitated.

In one implementation, the valve body includes a valve seat, and the valve seat includes a seat bottom wall and a seat side wall connected to the seat bottom wall. The seat bottom wall, the seat side wall, and the wall portion enclose to form the valve cavity. The valve seat is provided with a fourth through hole, the air inlet of the valve cavity is the fourth through hole, the wall portion is provided with a first exhaust hole, the first exhaust hole communicates the valve cavity with the exterior of the housing, and the air outlet of the valve cavity is the first exhaust hole. In this way, the installation height of the one-way valve can be reduced.

In one implementation, the gas-permeable film assembly is arranged on a side of the seat bottom wall away from the valve cavity, where the gas-permeable film assembly includes a gas-permeable film, the gas-permeable film is connected to the seat bottom wall, and the gas-permeable film covers the fourth through hole. In this way, the installation height of the exhaust assembly can be reduced.

In one implementation, the gas-permeable film assembly is arranged on a side of the seat bottom wall away from the valve cavity, where the gas-permeable film assembly includes a gas-permeable film and a connecting member, the connecting member is provided with a first gas-permeable hole, the gas-permeable film is arranged on the connecting member and covers the first gas-permeable hole, and the connecting member is connected to the seat bottom wall. In this way, the connection strength can be improved.

In one implementation, the seat bottom wall has an inner wall surface and an outer wall surface arranged opposite each other, the inner wall surface is arranged toward the valve cavity, the side of the seat bottom wall away from the valve cavity has a fourth recessed platform recessed relative to the outer wall surface of the seat bottom wall, the fourth recessed platform is arranged around the fourth through hole, and the gas-permeable film assembly is at least partially accommodated in the fourth recessed platform. In this way, the installation height of the exhaust assembly can be reduced.

In one implementation, the seat bottom wall further has a fifth recessed platform recessed relative to the outer wall surface, the fourth recessed platform is closer to the outer wall surface of the seat bottom wall than the fifth recessed platform, the fourth recessed platform is arranged around the fifth recessed platform, the fifth recessed platform is arranged around the fourth through hole, the connecting member is at least partially accommodated in the fourth recessed platform, and the gas-permeable film is arranged on a side of the connecting member facing the seat bottom wall. In this way, discharge of gas is facilitated.

In one implementation, the gas-permeable film is arranged on a side of the connecting member facing the valve cavity; or the gas-permeable film is arranged on a side of the connecting member away from the valve cavity. In this way, discharge of gas is facilitated.

In one implementation, the gas-permeable film assembly is arranged on a side of the seat bottom wall facing the valve cavity, where the valve cavity includes a first cavity and a second cavity that are in communication with each other, the second cavity is closer to the seat bottom wall, along a direction parallel to the seat bottom wall, a cross-sectional area of the first cavity is larger than a cross-sectional area of the second cavity, the valve core is located in the first cavity, and the gas-permeable film assembly is located in the second cavity. In this way, discharge of gas is facilitated.

In one implementation, the seat side wall includes a first side wall portion, a second side wall portion, and a third side wall portion, the first side wall portion and the second side wall portion enclose the first cavity, the third side wall portion and the seat bottom wall enclose the second cavity, and the blocking member of the valve core abuts against the second side wall portion. In this way, discharge of gas is facilitated.

In one implementation, the gas-permeable film assembly includes a gas-permeable film and a connecting member, the connecting member is provided with a first gas-permeable hole, the gas-permeable film is arranged on the connecting member and covers the first gas-permeable hole, and the connecting member is connected to the third side wall portion. In this way, the assembly of the exhaust assembly is facilitated.

In one implementation, a surface of the gas-permeable film assembly facing the valve cavity is lower than a surface of the second side wall portion facing the valve cavity. In this way, discharge of gas is facilitated.

In one implementation, the gas-permeable film is arranged on a side of the connecting member facing the seat bottom wall; or the gas-permeable film is arranged on a side of the connecting member away from the seat bottom wall. In this way, discharge of gas is facilitated.

In one implementation, the battery cell further includes a sealing ring, and the sealing ring is arranged between the gas-permeable film assembly and the seat bottom wall. In this way, maintaining the sealing performance inside the housing is facilitated.

In one implementation, the sealing ring is arranged between the gas-permeable film and the seat bottom wall, the sealing ring is arranged around the fourth through hole, the sealing ring is provided with a second gas-permeable hole, an aperture of the second gas-permeable hole is larger than an aperture of the fourth through hole, and the gas-permeable film covers the second gas-permeable hole. In this way, maintaining the sealing performance between the gas-permeable film and the seat bottom wall is facilitated.

In one implementation, the connecting member is connected to the third side wall portion by welding; or the connecting member is in interference fit with the third side wall portion. In this way, the assembly of the exhaust assembly is facilitated.

In one implementation, the gas-permeable film is arranged at an interval from the valve core. In this way, the risk of loss to the gas-permeable film caused by the valve core can be reduced.

In one implementation, the gas-permeable film assembly is arranged on the side of the one-way valve facing the exterior of the housing, and the gas-permeable film assembly covers the air outlet of the one-way valve. In this way, the assembly of the exhaust assembly is facilitated.

In one implementation, the gas-permeable film assembly includes a gas-permeable film and a connecting member, the connecting member is provided with a first gas-permeable hole, the gas-permeable film is arranged on the connecting member and covers the first gas-permeable hole, and the connecting member is connected to the side of the wall portion or valve cover facing the exterior of the housing. In this way, the connection strength can be improved.

In one implementation, the wall portion is provided with a first exhaust hole, the first exhaust hole includes a through hole section and a first hole section, the through hole section and the first hole section are arranged along the thickness direction of the wall portion, the through hole section communicates the interior of the housing with the exterior of the housing, the first hole section is located on the side of the through hole section facing away from the interior of the housing, the aperture of the first hole section is larger than the aperture of the through hole section, the first hole section is recessed relative to the outer surface, the one-way valve is at least partially accommodated in the first hole section, the valve body of the one-way valve faces the interior of the housing and at least part of the valve body protrudes from the inner surface of the wall portion. In this way, the assembly of the exhaust assembly can be facilitated.

In one implementation, the valve seat of the one-way valve is connected to the wall portion by welding, and a stress relief groove is provided around a weld mark between the valve seat and the wall portion. In this way, the stability of the connection can be improved.

In one implementation, the battery cell further includes a shielding member, the shielding member is installed on the wall portion, the shielding member is located on the side of the wall portion facing the exterior of the housing, and the shielding member covers the one-way valve and the gas-permeable film assembly, where a first discharge passage is formed between the shielding member and the wall portion, and the first discharge passage communicates the air outlet of the one-way valve with the exterior of the housing. In this way, the one-way valve and the gas-permeable film assembly can be protected.

In one implementation, the wall portion has an outer surface and an inner surface arranged opposite each other, the outer surface is arranged toward the exterior of the housing, the inner surface is arranged toward the interior of the housing, the wall portion has a first exhaust hole, the first exhaust hole communicates the interior of the housing with the exterior of the housing, the one-way valve and the gas-permeable film assembly are at least partially accommodated in the first exhaust hole, the wall portion has a sixth recessed platform recessed relative to the outer surface, the sixth recessed platform is arranged around the first exhaust hole, the sixth recessed platform is closer to the outer surface than the first exhaust hole, and the shielding member is at least partially accommodated in the sixth recessed platform. In this way, the installation height of the shielding member can be reduced.

In one implementation, the first discharge passage includes a third exhaust gap, the third exhaust gap is formed between the shielding member and a recessed platform side surface of the sixth recessed platform, and the third exhaust gap is configured to communicate the air outlet and the exterior of the housing. In this way, discharge of gas is facilitated.

In one implementation, the first discharge passage further includes a fourth exhaust gap, the fourth exhaust gap is formed between the shielding member and a recessed platform bottom surface of the sixth recessed platform, and the fourth exhaust gap communicates the third exhaust gap and the air outlet. In this way, discharge of gas is facilitated.

In one implementation, the shielding member covers the valve cover of the one-way valve, a side of the valve cover facing the shielding member is provided with a seventh recessed platform recessed relative to a surface of the valve cover, the seventh recessed platform is arranged around the fifth through hole on the valve cover, and the seventh recessed platform communicates with the first discharge passage. In this way, discharge of gas is facilitated.

In one implementation, the valve core includes an elastic member and a blocking member, the elastic member is arranged in the valve cavity, the blocking member is movably arranged in the valve cavity, and the blocking member is configured to block the air inlet passage under the action of the elastic member, and is configured to open the air inlet passage under the action of the gas inside the housing. In this way, discharge of gas is facilitated.

In one implementation, the valve body includes a valve cover and a valve seat. The valve cover and the valve seat enclose to form the valve cavity, a first guide post is convexly provided on a side of the valve cover facing the blocking member, and part of the elastic member is sleeved on an outer side of the first guide post. In this way, the positioning and guiding of the elastic member can be realized.

In one implementation, a diameter of the first guide post is D1, and an inner diameter of the elastic member is D2, satisfying 0mm<D2-D1≤5mm. In this way, the assembly of the elastic member and the first guide post can be facilitated.

In one implementation, a second guide post is convexly provided on a side of the blocking member facing the valve cover, and part of the elastic member is sleeved on an outer side of the second guide post. In this way, the positioning and guiding of the elastic member can be realized.

In one implementation, a diameter of the second guide post is D3, and the inner diameter of the elastic member is D2, satisfying 0mm<D3-D1≤5mm. In this way, the assembly of the elastic member and the second guide post can be facilitated.

In one implementation, in an axial direction of the elastic member, there is a gap between an end surface of the first guide post away from the valve cover and an end surface of the second guide post close to the valve cover. Optionally, a height H1 of the gap satisfies 0mm<H1≤0.5mm. In this way, the space utilization rate can be improved.

In one implementation, in the axial direction of the elastic member, the distance between the surface of the valve cover facing the valve cavity and the surface of the blocking member facing the valve cover is L1, and the solid length of the elastic member is L2, satisfying L1>L2, where the solid length of the elastic member is a length occupied by a solid of the elastic member after the elastic member is completely compressed; and optionally, L1-L2>0.5mm. In this way, a compression space for the elastic member can be reserved to drive the blocking member to block/open the air inlet passage.

In one implementation, the elastic member is a spring, and the solid length L2 of the elastic member is d1*n1+d2+d3, where d1 is a wire diameter of the spring, n1 is a maximum number of turns of the spring in the axial direction, d2 is a thickness of the outermost spring at one end of the spring, d3 is a thickness of the outermost spring at the other end of the spring, d2≤d1, and d3≤d1.

In one implementation, a plurality of limiting protrusions are convexly provided on an outer peripheral surface of the blocking member, and the plurality of limiting protrusions are arranged at intervals along a circumferential direction of the blocking member. In this way, the blocking member can be guided and limited to improve the stability of the movement of the blocking member.

In one implementation, the blocking member includes a pressing portion and a sealing portion, along the thickness direction of the wall portion, the two ends of the elastic member respectively abut against the valve cover and the pressing portion, the sealing portion is connected to a side of the pressing portion facing away from the valve cover, and the sealing portion is configured to block the air inlet passage. In this way, maintaining the sealing performance of the housing is facilitated.

In one implementation, the material of the sealing portion includes ethylene propylene diene monomer, fluororubber or Teflon.

In one implementation, the material of the elastic member includes steel, iron or aluminum.

In one implementation, the valve cover includes a cover side wall, the cover side wall has a second through hole penetrating the cover side wall, the air outlet is the second through hole, and along the axial direction of the valve cavity, a sealing interface between the valve core and the valve seat is higher than or flush with a bottom wall of the second through hole. In this way, discharge of gas is facilitated.

In one implementation, the gas-permeable film assembly includes a gas-permeable film and a connecting member, the connecting member is provided with a first gas-permeable hole, the gas-permeable film is arranged on the connecting member and covers the first gas-permeable hole, and the gas-permeable film is configured to allow gas inside the battery cell to pass through the gas-permeable film and be discharged. This can improve the connection strength and reduce the risk of deformation of the gas-permeable film.

In one implementation, the connecting member has a first annular table surface recessed relative to a surface of the connecting member, the first annular table surface is arranged around the first gas-permeable hole, and the gas-permeable film is arranged on the first annular table surface. In this way, reducing the installation height of the gas-permeable film assembly is facilitated.

In one implementation, the gas-permeable film assembly further includes a backing member, the backing member is arranged between the gas-permeable film and the connecting member. A gas-permeable rate of the backing member is greater than a gas-permeable rate of the gas-permeable film. This can reduce the risk of deformation of the gas-permeable film.

In one implementation, the connecting member further has a second annular table surface recessed relative to the surface of the connecting member, the second annular table surface is arranged around the first gas-permeable hole, and the backing member is arranged on the second annular table surface. In this way, the installation height of the gas-permeable film assembly can be reduced.

In one implementation, the connecting member is a metal member. This can improve the connection strength.

In one implementation, the battery cell further includes an insulating member, the insulating member is arranged on the side of the wall portion facing the interior of the housing. The insulating member is provided with a second exhaust hole penetrating the body of the insulating member, and the second exhaust hole is in communication with the first exhaust hole on the wall portion. In this way, discharge of gas is facilitated.

In one implementation, the battery cell further includes a protective patch, the protective patch is arranged on the side of the wall portion facing the exterior of the housing, the protective patch is provided with a first avoidance hole penetrating the protective patch, and the first avoidance hole is configured to allow the one-way valve to pass through.

In one implementation, the battery cell further includes a protective patch, the protective patch is arranged on the side of the wall portion facing the exterior of the housing, the protective patch covers the exhaust assembly, a second discharge passage is formed between the protective patch and the wall portion, and the second discharge passage communicates the air outlet of the one-way valve with the exterior of the battery cell. This can prevent foreign matter from entering the exhaust assembly.

In one implementation, the battery cell further includes a shielding member, the shielding member covers the exhaust assembly, and the protective patch covers the shielding member and the first discharge passage formed between the shielding member and the wall portion.

In one implementation, a side of the protective patch facing the wall portion is provided with an adhesive layer, the adhesive layer bonds the protective patch and the wall portion, the adhesive layer is provided with an avoidance groove, and the second discharge passage is formed between the avoidance groove and the wall portion. This facilitates discharge of gas.

In one implementation, the wall portion is provided with a first exhaust hole, at least part of the exhaust assembly is installed in the first exhaust hole, and the first exhaust hole is a liquid injection hole of the battery cell, or the first exhaust hole is arranged at an interval from the liquid injection hole. In this way, the exhaust assembly is used to replace the original sealing structure of the liquid injection hole, which can facilitate the simplification of the structure of the battery cell.

In one implementation, the housing includes a shell and an end cover, an accommodating cavity with an opening is formed inside the shell, and the accommodating cavity is configured to accommodate an electrode assembly; the end cover closes the opening; where the end cover is the wall portion; or the shell includes the wall portion; or the wall portion is the wall located at the top of the housing when the battery cell is in a placed state. In this way, discharge of gas is facilitated.

In one implementation, the battery cell further includes a pressure relief mechanism, the pressure relief mechanism is arranged on the housing, the pressure relief mechanism is configured to be actuated to relieve the internal pressure of the battery cell when the battery cell is in thermal runaway, and an actuation pressure of the pressure relief mechanism is greater than an opening pressure of the one-way valve. In this way, the safety of the battery can be improved.

In one implementation, the wall portion has a first exhaust hole, the first exhaust hole communicates the interior of the housing with the exterior of the housing, and the first exhaust hole communicates with the exhaust assembly; the wall portion has a pressure relief hole, the pressure relief hole communicates the interior of the housing with the exterior of the housing, and the pressure relief hole communicates with the pressure relief mechanism. An aperture of the pressure relief hole is larger than an aperture of the first exhaust hole. In this way, the pressure relief capability of the battery cell is improved.

In one implementation, an exhaust rate of the one-way valve is less than the exhaust rate of the pressure relief mechanism. In this way, the pressure relief capability of the battery cell is improved.

To solve the above technical problem, another technical solution adopted by the present application is to provide a battery, the battery includes the battery cell described above. The battery has at least the same advantages as the battery cell.

To solve the above technical problem, another technical solution adopted by the present application is to provide an electrical device, which includes the battery described above. The electrical device has at least the same advantages as the battery.

The above description is only an overview of the technical solutions of the present application. In order to more clearly understand the technical means of the present application, it can be implemented in accordance with the content of the description, and in order to make the above and other purposes, features and advantages of the present application more obvious and understandable, the specific embodiments of the present application are specifically listed below.

### BRIEF DESCRIPTION OF DRAWINGS

In order to more clearly illustrate the technical solutions in the embodiments of the present application, the drawings required for use in the description of the embodiments will be briefly introduced below. Obviously, the drawings in the following description are only some embodiments of the present application. For those of ordinary skill in the art, other drawings may alternatively be obtained according to these drawings without paying creative labor.
FIG. 1 is a schematic diagram of an exploded structure of a battery cell according to one or more embodiments;
FIG. 2 is a schematic cross-sectional structural diagram of a one-way valve according to one or more embodiments;
FIG. 3a is a schematic structural diagram of a blocking member of a one-way valve according to one or more embodiments;
FIG. 3b is a schematic cross-sectional structural diagram of a one-way valve according to one or more embodiments;
FIG. 3c is a schematic diagram of a state of an elastic member according to one or more embodiments;
FIG. 4 is a schematic diagram of an exploded structure of a one-way valve according to one or more embodiments;
FIG. 5 is a front view of a one-way valve according to one or more embodiments;
FIG. 6 is a schematic diagram of a partial cross-sectional structure of a battery cell according to one or more embodiments;
FIG. 7 is a schematic cross-sectional structural diagram of a one-way valve according to one or more embodiments;
FIG. 8 is a front view of a one-way valve according to one or more embodiments;
FIG. 9 is a bottom view of a one-way valve according to one or more embodiments;
FIG. 10 is a schematic diagram of an exploded structure of a one-way valve according to one or more embodiments;
FIG. 11 is a schematic diagram of a partial cross-sectional structure of a battery cell according to one or more embodiments;
FIG. 12 is a schematic diagram of a partial cross-sectional structure of a battery cell according to one or more embodiments;
FIG. 13 is a front view of a one-way valve according to one or more embodiments;
FIG. 14 is a schematic diagram of an exploded structure of a one-way valve according to one or more embodiments;
FIG. 15 is a schematic diagram of a partial cross-sectional structure of a battery cell according to one or more embodiments;
FIG. 16 is a front view of a one-way valve according to one or more embodiments;
FIG. 17 is a schematic cross-sectional structural diagram of a gas-permeable film assembly according to one or more embodiments;
FIG. 18 is a schematic cross-sectional structural diagram of a gas-permeable film assembly according to one or more embodiments;
FIG. 19 is a schematic diagram of a partial cross-sectional structure of an end cover according to one or more embodiments;
FIG. 20a is a schematic cross-sectional structural diagram of a battery cell according to one or more embodiments;
FIG. 20b is a front view of an end cover of a battery cell according to one or more embodiments;
FIG. 20c is a schematic diagram of a partial exploded structure of a battery cell according to one or more embodiments;
FIG. 21 is a schematic cross-sectional structural diagram of a battery cell according to one or more embodiments;
FIG. 22 is a schematic diagram of a partial cross-sectional structure of an end cover according to one or more embodiments;
FIG. 23a is a schematic cross-sectional structural diagram of a battery cell according to one or more embodiments;
FIG. 23b is a front view of an end cover of a battery cell according to one or more embodiments;
FIG. 23c is a schematic diagram of a partial exploded structure of a battery cell according to one or more embodiments;
FIG. 24 is a schematic diagram of an exploded structure of an exhaust assembly according to one or more embodiments;
FIG. 25 is a schematic cross-sectional structural diagram of an exhaust assembly according to one or more embodiments;
FIG. 26 is a schematic diagram of an exploded structure of an exhaust assembly according to one or more embodiments;
FIG. 27 is a schematic cross-sectional structural diagram of an exhaust assembly according to one or more embodiments;
FIG. 28 is a schematic diagram of an exploded structure of an exhaust assembly according to one or more embodiments;
FIG. 29 is a schematic cross-sectional structural diagram of an exhaust assembly according to one or more embodiments;
FIG. 30 is a schematic cross-sectional structural diagram of an exhaust assembly according to one or more embodiments;
FIG. 31 is a schematic cross-sectional structural diagram of a battery cell according to one or more embodiments;
FIG. 32 is a schematic diagram of an exploded structure of a battery cell according to one or more embodiments;
FIG. 33 is a schematic diagram of a partial exploded structure of a battery cell according to one or more embodiments;
FIG. 34 is a bottom view of an adhesive layer of a protective patch according to one or more embodiments;
FIG. 35 is a schematic diagram of an exploded structure of a battery according to one or more embodiments; and
FIG. 36 is a schematic structural diagram of a vehicle according to one or more embodiments.

In the drawings:
1000, vehicle; 300, motor; 200, controller; 100, battery; 10, box body; 11, first part; 12, second part; 20, battery cell; 21, end cover; 21a, outer surface; 21b, inner surface; 211, second stress relief groove; 212, first weld mark avoidance groove; 291, first exhaust hole; 22, shell; 23, electrode assembly; 24, insulating member; 292, second exhaust hole; 25, electrode terminal; 280, through hole section; 281, first hole section; 282, second hole section; 30, one-way valve; 31, valve body; 311, valve seat; 3111, first through hole; 3112, first recessed groove; 3113, connecting protrusion; 3114, fourth through hole; 3115, seat bottom wall; 3115a, inner wall surface; 3115b, outer wall surface; 3116, seat side wall; 3116a, first side wall portion; 3116b, second side wall portion; 3116c, third side wall portion; 3117, second weld mark avoidance groove; 311a, first stress relief groove; 312, valve cover; 312a, protrusion; 3121, cover top wall; 31211, first guide post; 31212, third through hole; 3122, cover side wall; 31221, second through hole; 31222, flanging wall; 31222a, connecting surface; 31222b, accommodating groove; 31222c, upper surface; 31222d, lower surface; 3123, fifth through hole; 313, valve cavity; 313a, air inlet; 313b, air outlet; 313c, first exhaust gap; 3131, first cavity; 3132, second cavity; 32, valve core; 321, blocking member; 3211, sealing portion; 3212, pressing portion; 3212a, limiting protrusion; 3212b, second guide post; 322, elastic member; 40, gas-permeable film assembly; 41, gas-permeable film; 42, metal member; 421, third stress relief groove; 491, first gas-permeable hole; 43, backing member; 50, shielding member; 501, third exhaust gap; 60, protective patch; 601, first avoidance hole; 602, second avoidance hole; 603, third avoidance hole; 604, information collection hole; 610, adhesive layer; 611, avoidance groove; 70, pressure relief mechanism; 701, pressure relief hole; 80, sealing ring; 801, second gas-permeable hole; 90, exhaust assembly; T1, first annular table surface; T2, second annular table surface; T3, transition surface; S1, first recessed platform; S2, second recessed platform; C1, first transition connecting surface; S3, third recessed platform; C2, second transition connecting surface; S4, fourth recessed platform; S5, fifth recessed platform; C3, third transition connecting surface; S6, sixth recessed platform; S7, seventh recessed platform; W1, first weld mark; W2, second weld mark; W3, third weld mark; W4, fourth weld mark; W5, fifth weld mark; and W6, sixth weld mark.

### DESCRIPTION OF EMBODIMENTS

In order to make the purpose, technical solutions and effects of the present application clearer and more definite, the embodiments of the technical solutions of the present application will be described in detail below in conjunction with the drawings. The following embodiments are only used to more clearly illustrate the technical solutions of the present application, so they are only used as examples and cannot be used to limit the protection scope of the present application.

Unless otherwise defined, all technical and scientific terms used herein have the same meaning as those commonly understood by those skilled in the technical field of the present application; the terms used herein are only for the purpose of describing specific embodiments and are not intended to limit the present application; the terms "include" and "have" and any variations thereof in the description and claims of the present application and the above drawings are intended to cover non-exclusive inclusions.

In the description of the embodiments of the present application, the technical terms "first", "second", or the like. are only used to distinguish different objects, and cannot be understood as indicating or implying relative importance or implicitly indicating the number, specific order or primary-secondary relationship of the indicated technical features. In the description of the embodiments of the present application, the term "plurality" refers to two or more (including two), similarly, "multiple groups" refers to two or more groups (including two groups), "multiple pieces" refers to two or more pieces (including two pieces), unless otherwise clearly and specifically limited.

The reference to "embodiment" herein means that a specific feature, structure or characteristic described in conjunction with the embodiment may be included in at least one embodiment of the present application. The appearance of the phrase in various positions in the description does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of the embodiments of the present application, the term "and/or" is only a description of the association relationship of associated objects, indicating that there may be three relationships, for example, A and/or B, which can mean: A exists alone, A and B exist at the same time, and B exists alone. In addition, the character "/" in this article generally indicates that the associated objects before and after are in an "or" relationship.

Quantities, ratios and other numerical values are presented herein in a range format. It should be understood that such range formats are for convenience and brevity and should be flexibly understood to include not only the numerical values explicitly specified as range limits, but also all individual numerical values or sub-ranges covered within the range, as if each numerical value and sub-range were explicitly specified.

In the description of the embodiments of the present application, the same reference signs represent the same components, and for the sake of brevity, detailed descriptions of the same components are omitted in different embodiments. It should be understood that the thickness, length and width and other dimensions of various components in the embodiments of the present application shown in the drawings, as well as the overall thickness, length and width and other dimensions of the integrated device are only exemplary illustrations and should not constitute any limitation on the present application.

In the description of the embodiments of the present application, the orientation or positional relationship indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", or the like are based on the orientation or positional relationship shown in the drawings, and are only for the convenience of describing the embodiments of the present application and simplifying the description, and do not indicate or imply that the device or element referred to must have a specific orientation, be constructed and operated in a specific orientation, and therefore cannot be understood as a limitation on the embodiments of the present application.

In the description of the embodiments of the present application, unless otherwise clearly specified and limited, the technical terms "install", "connect", "connection", "fix" and other terms should be understood in a broad sense, for example, it may be a fixed connection, a detachable connection, or an integral connection; it may be a mechanical connection or an electrical connection; it may be a direct connection or an indirect connection through an intermediate medium, it can be the internal communication of two elements or the interaction relationship between two elements. For those of ordinary skill in the art, the specific meanings of the above terms in the embodiments of the present application can be understood according to specific circumstances.

Batteries are widely used in the new energy field, mainly including electric vehicles, energy storage systems and renewable energy. In the field of electric vehicles, higher performance such as longer driving range and fast charging has been gradually achieved. In terms of energy storage systems, batteries are widely used in large-scale and distributed energy storage. They can balance grid loads, store renewable energy such as solar and wind energy, and release stored energy during peak periods. In addition, small rechargeable batteries are also widely used in wearable devices, drones and smart homes.

With the charging and discharging process of the battery, some side reactions may produce gas. If the gas produced by the battery is not discharged in a timely manner, it may cause the internal pressure of the battery to increase. Excessive internal pressure may have a negative impact on the performance and appearance of the battery. For example, in severe cases, it may have a destructive impact on the performance and appearance of the battery, such as liquid leakage, bulging, increased battery internal resistance, shortened discharge time, and cycle life. In addition, there are some abnormal operations during the use of the battery, including overcharging, overdischarging, internal faults, or the like. In this case, the chemical reaction inside the battery may be out of control and accompanied by a violent release of gas, and may even cause thermal runaway of the battery. Battery thermal runaway refers to a chain reaction phenomenon caused by various inducements. A large amount of heat and harmful gases emitted by thermal runaway can cause the battery to catch fire and explode.

In order to improve the use safety of the battery cell, a pressure relief mechanism is usually provided on the housing of the battery cell to relieve the internal pressure of the battery cell through the pressure relief mechanism, thereby effectively improving the use safety of the battery cell. However, the instability of the internal pressure during the use of the battery cell may cause the pressure relief mechanism of the battery cell to be actuated prematurely to relieve pressure, resulting in poor use stability of the battery cell, which is not conducive to improving the service life and use reliability of the battery cell.

Based on the above considerations, the embodiments of the present application provide a battery cell, in which an exhaust assembly is provided on the battery cell, and the exhaust assembly can be used to discharge the gas inside the battery cell in a timely manner to maintain the internal pressure of the battery cell stable.

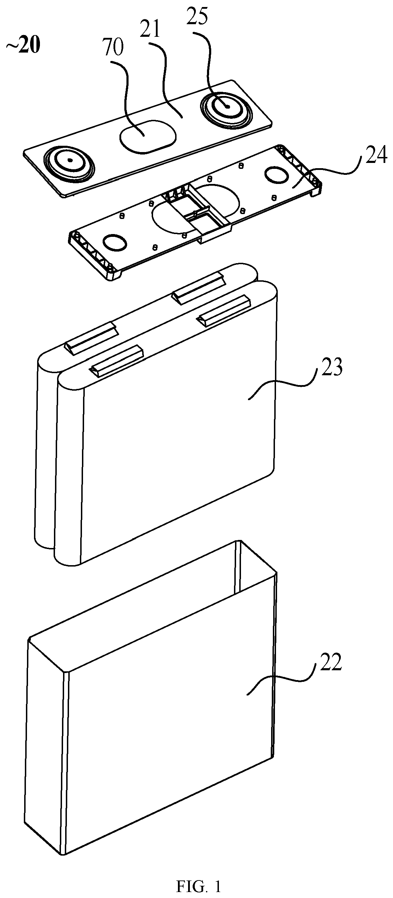

Refer to FIG. 1. FIG. 1 is a schematic diagram of an exploded structure of a battery cell 20 according to one or more embodiments. The battery cell 20 is the smallest unit forming the battery 100. As shown in FIG. 1, the battery cell 20 includes an end cover 21, a shell 22, an electrode assembly 23 and other functional components.

The end cover 21 refers to a component that covers the opening of the shell 22 to isolate the internal environment of the battery cell 20 from the external environment. Without limitation, the shape of the end cover 21 can be adapted to the shape of the shell 22 to fit the shell 22. Optionally, the end cover 21 may be made of a material with a specific hardness and strength (such as aluminum alloy), so that the end cover 21 is not easily deformed when subjected to extrusion and collision. In this way, the battery cell 20 may have higher structural strength, and safety performance can also be improved. Functional components such as electrode terminals 25 may be provided on the end cover 21. The electrode terminals 25 may be used to electrically connect with the electrode assembly 23 to output or input the electric energy of the battery cell 20. For example, the battery cell 20 is provided with two electrode terminals 25, and the two electrode terminals 25 are both installed on the end cover 21. The two electrode terminals 25 are respectively used to electrically connect with two tabs of opposite polarity of the electrode assembly 23 to implement output or input of the positive and negative electrodes of the battery cell 20 respectively. In some embodiments, the end cover 21 may alternatively be provided with a pressure relief mechanism 70 for relieving internal pressure when the internal pressure or temperature of the battery cell 20 reaches a threshold. The material of the end cover 21 may also be various, such as copper, iron, aluminum, stainless steel, aluminum alloy, or plastic, which is not particularly limited in the embodiments of the present application. In some embodiments, an insulating member 24 may alternatively be provided on the inner side of the end cover 21. The insulating member 24 may be used to isolate the electrical connection components in the shell 22 from the end cover 21 to reduce the risk of short circuit. For example, the insulating member 24 may be plastic, rubber, or the like.

The shell 22 is a component used to cooperate with the end cover 21 to form the internal environment of the battery cell 20. The formed internal environment may be used to accommodate the electrode assembly 23, the electrolyte, and other components. The shell 22 and the end cover 21 may be independent components. An opening may be provided on the shell 22, and the end cover 21 may be used to cover the opening at the opening to form the internal environment of the battery cell 20. Without limitation, the end cover 21 and the shell 22 may alternatively be integrated. Specifically, the end cover 21 and the shell 22 may first form a common connecting surface 31222a before other components are placed in the shell. When the interior of the shell 22 needs to be packaged, the end cover 21 is used to cover the shell 22. The shell 22 may have a variety of shapes and sizes, such as rectangular, cylindrical, or hexagonal prism. Specifically, the shape of the shell 22 can be determined according to the specific shape and size of the electrode assembly 23. The material of the shell 22 may be various, such as copper, iron, aluminum, stainless steel, aluminum alloy, or plastic, which is not particularly limited in the embodiments of the present application.

The electrode assembly 23 is a component in the battery cell 20 where electrochemical reactions occur. The shell 22 may contain one or more electrode assemblies 23. The electrode assembly 23 is mainly formed by winding or stacking a positive electrode sheet and a negative electrode sheet, and a separator is usually provided between the positive electrode sheet and the negative electrode sheet. The parts of the positive electrode sheet and the negative electrode sheet that have active materials form the main body of the electrode assembly 23, and the parts of the positive electrode sheet and the negative electrode sheet that have no active materials form tabs respectively. The positive electrode tab and the negative electrode tab may be located together at one end of the main body or at both ends of the main body respectively. During the charging and discharging process of the battery 100, the positive electrode active material and the negative electrode active material react with the electrolyte, and the tabs are connected to the electrode terminals 25 to form a current loop.

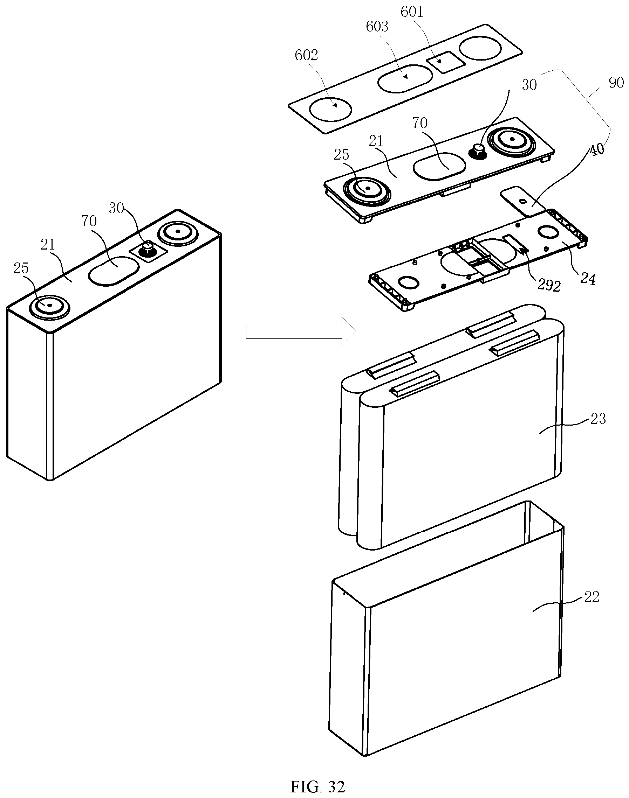

Refer to FIG. 32. FIG. 32 is a schematic diagram of a partial exploded structure of a battery cell 20 according to one or more embodiments. According to some embodiments of the present application, the present application discloses a battery cell 20. The battery cell 20 includes a housing and an exhaust assembly 90. The housing has a wall portion. The exhaust assembly 90 is arranged on the wall portion. The exhaust assembly 90 includes a one-way valve 30 and a gas-permeable film assembly 40. The exhaust assembly 90 is configured to discharge gas from inside the housing.

The one-way valve 30 and the gas-permeable film assembly 40 are used at the same time, so that the exhaust assembly 90 can discharge the gas inside the housing to the outside of the housing. Therefore, when gas is generated inside the housing during the normal use of the battery cell 20, the gas may be discharged out of the housing through the exhaust assembly 90, so as to alleviate the phenomenon that the internal pressure of the battery cell 20 reaches the threshold in advance due to the increase of the internal air pressure of the battery cell 20 to cause the battery cell 20 to actuate pressure relief prematurely, thereby effectively improving the use stability of the battery cell 20 and improving the service life and use reliability of the battery cell 20.

According to some embodiments of the present application, the housing includes an end cover 21 and a shell 22. The wall portion may be the wall of the end cover 21 or the wall of the shell 22. That is, the exhaust assembly 90 may be arranged on the end cover 21 or on the shell 22. In other words, the wall portion for installing the exhaust assembly 90 may be the end cover 21 of the housing or a wall of the shell 22 of the housing. For example, the wall portion is the end cover 21. Certainly, the structure of the battery cell 20 is not limited to this. In other embodiments, the wall portion may alternatively be a bottom wall of the shell 22 opposite to the end cover 21, and the wall portion may alternatively be a side wall of the shell 22 adjacent to and connected to the end cover 21. The following takes the wall portion being the wall of the end cover 21 as an example to illustrate the solution of the present application, but this should not limit the present application.

According to some embodiments of the present application, the exhaust assembly 90 includes a one-way valve 30, and the one-way valve 30 is configured to be actuated and release the gas inside the battery cell 20 when the internal air pressure of the battery cell 20 reaches a threshold. In other words, the one-way valve 30 is configured to discharge the gas inside the housing, that is, the one-way valve 30 can be opened in one direction for exhaust, so that the gas inside the housing may be discharged out of the housing through the one-way valve 30.

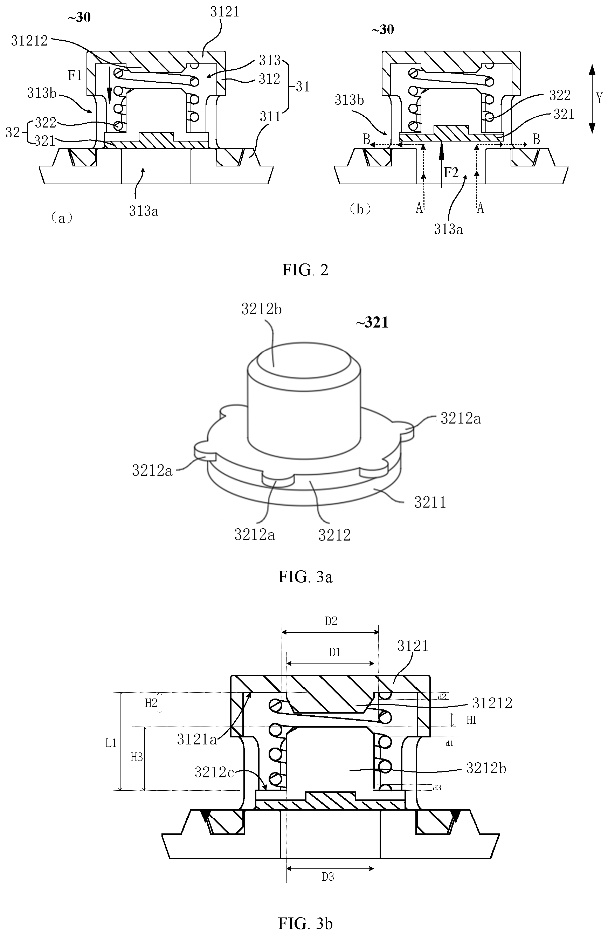

Refer to FIG. 2. FIG. 2 is a schematic cross-sectional structural diagram of a one-way valve 30 according to one or more embodiments. According to some embodiments of the present application, the one-way valve 30 includes a valve body 31 and a valve core 32. The valve body 31 has a valve cavity 313 inside. The valve body 31 is provided with an air inlet 313a and an air outlet 313b. The air inlet 313a is configured to communicate the valve cavity 313 with the interior of the housing, and the air outlet 313b is configured to communicate the valve cavity 313 with an exterior of the housing. The valve core 32 is arranged in the valve cavity 313. The valve core 32 is configured to block an air inlet passage of the valve cavity 313. The valve core 32 is configured to open the air inlet passage under the action of the gas inside the housing and release the gas inside the battery cell 20.

The air inlet 313a is configured to communicate the valve cavity 313 and the interior of the housing, that is, the gas inside the housing can enter the valve cavity 313 through the air inlet 313a. Similarly, the air outlet 313b is configured to communicate the valve cavity 313 and the exterior of the housing, that is, the gas in the valve cavity 313 may be discharged to the exterior of the housing through the air outlet 313b. Through such arrangement, the gas inside the housing of the battery cell 20 can be discharged to the exterior of the housing through the valve cavity 313.

Specifically, when the gas inside the housing of the battery cell 20 is discharged through the one-way valve 30, its discharge path is the interior of the battery cell 20-the air inlet 313a-the valve cavity 313-the air outlet 313b-the exterior of the battery cell 20, and the entire exhaust path forms an exhaust passage. As shown in the path from A to B in (b) of FIG. 2, A is the side inside the housing, and B is the side outside the housing. That is, the gas inside the housing of the battery cell 20 enters the valve cavity 313 from the air inlet 313a, flows through the valve cavity 313 and is then discharged from the air outlet 313b of the valve cavity 313 to the exterior of the housing of the battery 100.

Further, the valve core 32 is configured to block the air inlet passage of the valve cavity 313 and to open the air inlet passage under the action of the gas inside the housing. The air inlet passage is a passage through which the gas inside the housing enters the valve cavity 313 and flows after entering the valve cavity 313, or the air inlet passage may be a part of the exhaust passage, and more specifically, is a part of the path located before the air outlet 313b of the exhaust passage. The blocking of the air inlet passage by the valve core 32 means that gas is not allowed to enter the valve cavity 313, or gas is allowed to enter the valve cavity 313, but gas is not allowed to flow out of the valve cavity 313. It may be that the valve core 32 directly blocks the air inlet 313a and does not allow gas to enter the valve cavity 313; or it may be that the flow path of the gas is blocked, that is, the gas can enter the valve cavity 313 through the air inlet 313a, but its flow path is blocked and cannot continue to flow to the air outlet 313b. When the valve core 32 blocks the air inlet passage, the gas outside the housing cannot enter the interior of the housing, and the gas inside the housing cannot be discharged out of the housing. When the pressure of the gas inside the housing reaches a specific threshold, the gas inside the housing can push the valve core 32 to open the air inlet passage, so that the gas inside the housing can enter the valve cavity 313 and then be discharged out of the housing through the air outlet 313b. In addition, the valve core 32 only allows pressure to be applied from the side inside the housing to open in one direction, allowing gas to flow out, but cannot be opened in the reverse direction from the side outside the housing.

Optionally, the structure of the valve core 32 may be various. For example, in FIG. 2, the valve core 32 may include an elastic member 322 and a blocking member 321. The elastic member 322 is arranged in the valve cavity 313, the blocking member 321 is movably arranged in the valve cavity 313, and the blocking member 321 is configured to block the air inlet passage under the action of the elastic member 322, and is configured to open the air inlet passage under the action of the gas inside the housing.

Specifically, the elastic member 322 is arranged in the valve cavity 313, the blocking member 321 is movably arranged in the valve cavity 313, the elastic member 322 is configured to provide elastic force to the blocking member 321, and sealing and opening of the valve cavity 313 are realized by deformation of the elastic member 322. The blocking member 321 is configured to block the air inlet passage under the action of the elastic member 322, and is configured to open the air inlet passage under the action of the gas inside the housing.

The blocking member 321 is movably arranged in the valve cavity 313, that is, the blocking member 321 can move in the valve cavity 313, so that when the blocking member 321 moves close to the air inlet 313a, it can block the air inlet 313a. On the contrary, when the blocking member 321 moves away from the air inlet 313a, it can open the air inlet 313a.

In some embodiments, the blocking member 321 is in clearance fit with the inner wall of the valve cavity 313.

For example, the air inlet 313a penetrates a bottom surface of the cavity of the valve cavity 313. Correspondingly, the blocking member 321 is movably arranged in the valve cavity 313 along an axial direction of the valve cavity 313 (the Y direction shown in the figure), so that when the blocking member 321 abuts against the bottom surface of the cavity of the valve cavity 313, it can block the air inlet 313a. Certainly, in other embodiments, the air inlet 313a may alternatively be arranged on one side of the valve body 31 in a radial direction of the valve body 31. Correspondingly, the blocking member 321 is movably arranged in the valve cavity 313 along the radial direction of the valve body 31.

The blocking member 321 is configured to block the air inlet 313a under the action of the elastic member 322, and is configured to open the air inlet 313a under the action of the gas inside the housing. That is, the elastic member 322 can provide elastic force for the blocking member 321, so that the blocking member 321 can abut against the bottom surface of the cavity of the valve cavity 313 to block the air inlet 313a. On the contrary, when the force of the gas inside the housing acting on the blocking member 321 is greater than the elastic force of the elastic member 322, the gas inside the housing can overcome the elastic force of the elastic member 322 and push the blocking member 321 to separate from the bottom surface of the cavity of the valve cavity 313. This allows the blocking member 321 to open the air inlet 313a, so that the gas inside the housing can enter the valve cavity 313 through the air inlet 313a and then be discharged through the air outlet 313b.

As shown in FIG. 2, (a) in FIG. 2 is a schematic diagram of the one-way valve 30 in a non-valve-opened state; and (b) in FIG. 2 is a schematic diagram of the one-way valve 30 in a valve-opened state. The elastic member 322 provides an elastic force F1 to the blocking member 321, and the blocking member 321 is pressed to block the air inlet 313a. When a force F2 of the gas inside the housing acting on the blocking member 321 is greater than the elastic force F1 of the elastic member 322, the gas inside the housing can overcome the elastic force of the elastic member 322 and push the blocking member 321 to open the air inlet 313a, so as to allow the gas inside the housing to enter the valve cavity 313 and then be discharged out of the housing through the air outlet 313b. On the contrary, after the gas inside the housing is discharged and the force F2 of the gas inside the housing acting on the blocking member 321 is less than the elastic force F1 of the elastic member 322, the elastic member 322 can drive the blocking member 321 to reset to block the air inlet 313a.

Optionally, the elastic member 322 is a component with elasticity, and its structure may be various, such as an elastic sheet, a spring or elastic rubber. For example, the elastic member 322 is a spring, and the spring is used as the elastic member 322 arranged in the valve cavity 313. On the one hand, it is convenient to assemble the elastic member 322, which is beneficial to reducing the difficulty of assembling the elastic member 322 in the valve cavity 313. On the other hand, it can realize a relatively stable direction in which the elastic member 322 applies elastic force to the blocking member 321. In some embodiments, the material of the elastic member 322 includes steel, iron or aluminum. The elastic member 322 made of steel, iron or aluminum has good toughness and can alleviate the phenomenon of elastic failure of the elastic member 322, which is beneficial to improving the service life of the elastic member 322.

For example, the elastic member 322 is a spring, and the sealing and opening of the valve cavity 313 are realized by deformation of the spring. When the valve cavity 313 is sealed: an initial length of the spring may be set to L0, and the initial length is a natural length of the spring before being compressed; an assembly space of the spring in the valve cavity 313 is L1, and the valve cavity 313 is configured to satisfy L0>L1. After assembly, the spring is compressed, so that a pressing force F1 is applied to the blocking member 321, and the blocking member 321 is closely attached to the wall of the valve cavity 313 to achieve a sealing effect.

When the internal air pressure of the housing increases to a specific value P1, a force F2 applied by the air pressure to a lower surface 31222d of the blocking member 321 at that time. When F2 is greater than the spring pressing force F1, the sealing interface fails, and gas inside the housing enters the valve cavity 313 and is discharged out of the housing through the channel in the valve cavity 313. As the gas inside the housing is discharged, the internal air pressure decreases. When the air pressure reaches a specific value P2, the valve body 31 is closed to implement sealing. The valve body 31 can realize multiple repeated valve opening, exhaust, and closing, so that the internal air pressure of the housing is maintained between P1 and P2, thereby preventing the pressure relief mechanism 70 from being actuated prematurely due to excessive internal air pressure of the housing.

Refer to FIG. 2, FIG. 3a, and FIG. 3b in combination. FIG. 3a is a schematic structural diagram of the blocking member 321 of the one-way valve 30 according to one or more embodiments. FIG. 3b is a schematic cross-sectional structural diagram of the one-way valve 30 according to one or more embodiments. According to some embodiments of the present application, the elastic member 322 is arranged along the axial direction Y of the valve cavity 313, the two ends of the elastic member 322 respectively abut against the blocking member 321 and a top surface of the cavity of the valve cavity 313, and the elastic member 322 is located between the top surface of the cavity of the valve cavity 313 and the blocking member 321 in a compressed state, so that the elastic member 322 can apply elastic force to the blocking member 321, so that the blocking member 321 can abut against the bottom surface of the cavity of the valve cavity 313 to block the air inlet 313a.

Further, a plurality of limiting protrusions 3212a may be convexly provided on the outer peripheral surface of the blocking member 321, and the plurality of limiting protrusions 3212a are arranged at intervals along the circumferential direction of the blocking member 321.

The limiting protrusion 3212a is in guiding fit with the side surface of the cavity of the valve cavity 313, that is, the limiting protrusion 3212a is used to cooperate with the cavity wall surface of the valve cavity 313 when the blocking member 321 moves along the axial direction of the valve cavity 313, so as to play a guiding and limiting role. The limiting protrusion 3212a may be in clearance fit with the cavity side surface of the valve cavity 313. In other embodiments, the one-way valve 30 may alternatively have other structures. For example, the cavity side surface of the valve cavity 313 is provided with a guide groove (not shown in the figure) extending along the axial direction of the valve cavity 313, the limiting protrusion 3212a extends into the guide groove, and the limiting protrusion 3212a can move in the guide groove along the axial direction of the valve cavity 313 when the blocking member 321 opens the air inlet 313a, so as to play a guiding and limiting role. A plurality of guide grooves may be provided, and the plurality of guide grooves cooperate with the plurality of limiting protrusions 3212a respectively. Optionally, the shape of the limiting protrusion 3212a may be various, such as semicircular, triangular, trapezoidal or rectangular structures. For example, in FIG. 3a, the shape of the limiting protrusion 3212a is semicircular.

The plurality of limiting protrusions 3212a arranged at intervals are convexly provided on the outer peripheral surface of the blocking member 321, and the limiting protrusions 3212a are in guiding fit with the cavity side surface of the valve cavity 313. Therefore, when the blocking member 321 moves along the axial direction of the valve cavity 313, the blocking member 321 can be guided and limited by the cooperation of the limiting protrusions 3212a and the cavity side surface of the valve cavity 313, thereby improving the stability of the movement of the blocking member 321.

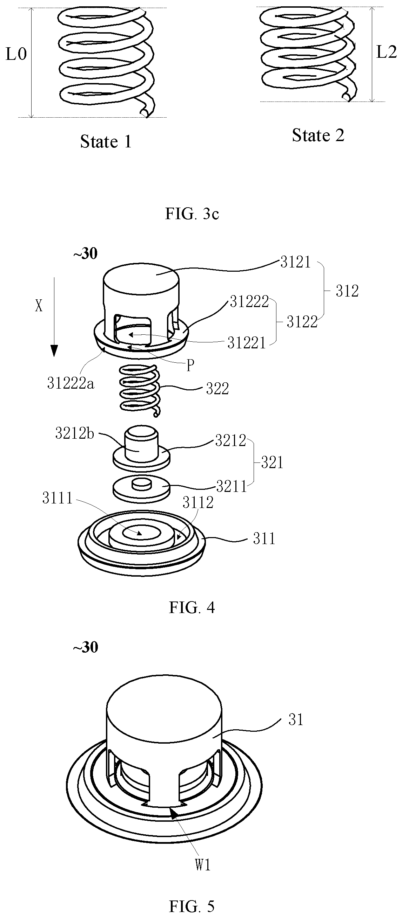

Refer to FIG. 2, FIG. 3b, and FIG. 4 in combination. FIG. 4 is a schematic diagram of an exploded structure of the one-way valve 30 according to one or more embodiments. The valve body 31 includes a valve seat 311 and a valve cover 312. The valve cover 312 and the valve seat 311 enclose to form a valve cavity 313. The two ends of the elastic member 322 respectively abut against the blocking member 321 and the cover top wall 3121 of the valve cover 312. The valve body 31 includes a valve cover 312. A first guide post 31211 is convexly provided on the side of the valve cover 312 facing the blocking member 321, and part of the elastic member 322 is sleeved on the outer side of the first guide post 31211. The first guide post 31211 may be convexly provided on the side of the cover top wall 3121 facing the blocking member 321, and part of the elastic member 322 is sleeved on the outer side of the first guide post 31211 to implement the positioning of the elastic member 322.

Further, the blocking member 321 includes a pressing portion 3212 and a sealing portion 3211. Along the axial direction of the valve cavity 313, the two ends of the elastic member 322 respectively abut against the valve cover 312 and the pressing portion 3212. The sealing portion 3211 is connected to the side of the pressing portion 3212 away from the valve cover 312. The sealing portion 3211 is configured to block the air inlet passage.

The rigidity of the pressing portion 3212 is greater than the rigidity of the sealing portion 3211. The sealing portion 3211 is connected to the side of the pressing portion 3212 away from the cover top wall 3121. The sealing portion 3211 is configured to block the air inlet 313a. The elastic member 322 is arranged between the cover top wall 3121 and the pressing portion 3212. The pressing portion 3212 can be pressed against the sealing portion 3211 under the elastic force of the elastic member 322, so that the upper surface 31222c of the sealing portion 3211 is in effective contact with the pressing portion 3212, and the sealing portion 3211 abuts against the bottom surface of the cavity of the valve cavity 313, thereby blocking the air inlet 313a through the sealing portion 3211.

According to some embodiments of the present application, the rigidity of the pressing portion 3212 is greater than the rigidity of the sealing portion 3211. The arrangement of the pressing portion 3212 can effectively transmit the force applied by the elastic member 322 to the sealing portion 3211. In other words, the rigidity of the pressing portion 3212 is greater than the rigidity of the sealing portion 3211, that is, the deformation resistance of the pressing portion 3212 is greater than the deformation resistance of the sealing portion 3211, so that the pressing portion 3212 can better press the sealing portion 3211 against the bottom surface of the installation cavity to block the air inlet 313a. For example, the material of the pressing portion 3212 may be various, such as steel, iron or aluminum. Similarly, the material of the sealing portion 3211 may alternatively be various, such as rubber, silicone or plastic.

Optionally, the connection structure between the pressing portion 3212 and the sealing portion 3211 may be various, such as snap connection, bolt connection or bonding.

The blocking member 321 is provided to include two parts, namely the pressing portion 3212 and the sealing portion 3211, the pressing portion 3212 is arranged on the side of the sealing portion 3211 facing the valve cover 312, the sealing portion 3211 is configured to block the air inlet 313a, and the two ends of the elastic member 322 respectively abut against the valve cover 312 and the pressing portion 3212, so that the elastic member 322 can apply the elastic force on the sealing portion 3211 through the pressing portion 3212, thereby helping to improve the uniformity of the elastic force of the elastic member 322 acting on the sealing portion 3211, and thus effectively improving the blocking effect of the sealing portion 3211 on the air inlet 313a.

According to some embodiments of the present application, the material of the sealing portion 3211 is selected from materials that can withstand electrolyte, such as fluororubber, PFA, or ethylene propylene diene monomer. Different sealing materials have different physical properties, and the force required to implement sealing is also different.

For example, the limiting protrusion 3212a is convexly provided on the outer peripheral surface of the pressing portion 3212. Certainly, in other embodiments, the blocking member 321 may alternatively be an integral sealing component, such as a rubber pad or a silicone pad, that is, the blocking member 321 only includes the sealing portion 3211, and the two ends of the elastic member 322 respectively abut against the valve cover 312 and the sealing portion 3211. Certainly, in other embodiments, the valve core 32 may alternatively be an integral elastic component, such as elastic rubber.

In one implementation, a second guide post 3212b is convexly provided on the side of the blocking member 321 facing the valve cover 312, and part of the elastic member 322 is sleeved on the outer side of the second guide post 3212b. A second guide post 3212b may be convexly provided on the side of the pressing portion 3212 facing the cover top wall 3121, and part of the elastic member 322 is sleeved on the outer side of the second guide post 3212b.

The one-way valve 30 with such structure can, on the one hand, play a specific positioning role on the elastic member 322 through the first guide post 31211 and the second guide post 3212b, so as to facilitate the assembly of the elastic member 322 and help reduce the assembly difficulty of the elastic member 322. On the other hand, the first guide post 31211 and the second guide post 3212b can play a specific guiding role when the elastic member 322 is compressed, so as to reduce the phenomenon of radial deformation of the elastic member 322 during the compression process, thereby realizing the stable compression of the elastic member 322. This helps improve the use reliability of the elastic member 322, and thus can reduce the risk of the blocking member 321 mistakenly opening the air inlet 313a. The elastic member 322 may be a spring. Certainly, in other embodiments, the elastic member 322 may alternatively be an elastic sheet or elastic rubber.

Refer to FIG. 3b and FIG. 3c in combination. FIG. 3c is a schematic diagram of the state of the elastic member 322 according to one or more embodiments. According to some embodiments of the present application, in the axial direction of the valve cavity 313, the two ends of the elastic member 322 respectively abut against the valve cover 312 and the blocking member 321, and a distance between a first abutting surface of the valve cover 312 and a second abutting surface of the blocking member 321 is L1, and L1 is the assembly space of the elastic member 322. The two ends of the elastic member 322 respectively abut against a surface of the valve cover 312 facing the valve cavity 313 and a surface of the pressing portion 3212 facing the valve cover 312, and a distance between the two is the assembly space L1 of the elastic member 322. Specifically, the cover top wall 3121 has a first abutting surface 3121a facing the valve cavity 313, the pressing portion 3212 has a second abutting surface 3212c facing the cover top wall 3121, and L1 is the distance between the first abutting surface 3121a and the second abutting surface 3212c. The abutting surface is a surface on the valve cover 312 and the blocking member 321 that abuts against the elastic member 322.

According to some embodiments of the present application, in the axial direction of the elastic member 322, there is a gap between the end surface of the first guide post 31211 away from the valve cover 312 and the end surface of the second guide post 3212b close to the valve cover 312. The gap can provide space for the movement of the blocking member 321.

According to some embodiments of the present application, along the axial direction Y of the valve cavity 313, a size of the gap between the valve cover 312 and the blocking member 321 is H1, satisfying 0mm<H1≤0.5mm. In one implementation, the gap size H1 between the valve cover 312 and the blocking member 321 is a gap size when the blocking member 321 blocks the air inlet passage.

The side of the valve cover 312 facing the blocking member 321 is convexly provided with a first guide post 31211, the side of the blocking member 321 facing the valve cover 312 is convexly provided with a second guide post 3212b, and a gap between the valve cover 312 and the blocking member 321 is a gap between an end surface of the first guide post 31211 away from the valve cover 312 and an end surface of the second guide post 3212b close to the valve cover 312, as shown by H1 in FIG. 3b. In other words, in the axial direction Y of the valve cavity 313, the sum of a height H2 of the first guide post 31211 and a height H3 of the second guide post 3212b is less than the assembly space L of the elastic member 322, that is, in the axial direction, the height H2 of the first guide post 31211 + the height H3 of the second guide post 3212b < the spring compression space L1.

For example, the size H1 of the gap between the valve cover 312 and the blocking member 321 may be 0.1mm, 0.2mm, 0.3mm, 0.4mm, 0.5mm, or the like.

By setting the size of the gap between the valve cover 312 and the blocking member 321 in the axial direction Y to be greater than 0mm and less than or equal to 5mm, on the one hand, the blocking of the blocking member 321 by the valve cover 312 can be reduced, so that there is space between the valve cover 312 and the blocking member 321 for the blocking member 321 to move along the axial direction Y. In this way, when the gas inside the housing pushes the blocking member 321, the blocking member 321 can open the air inlet 313a for exhaust. On the other hand, it can alleviate the phenomenon that the one-way valve 30 occupies too much space in the axial direction Y due to the excessive gap between the valve cover 312 and the blocking member 321, which is beneficial to improving the space utilization rate of the battery cell 20.

As shown in FIG. 3c, taking the elastic member 322 being a spring as an example, the initial length L0 of the spring is a natural length of the spring before being compressed. By setting L0>L1, after the spring is assembled into the valve cavity 313, there is a specific initial elastic force to push the sealing portion 3211 to press against the wall surface of the valve cavity 313, improving the sealing performance.

Further, a solid length L2 of the spring is set to satisfy L1>L2. The solid length of the spring is a length occupied by the spring body after the spring is completely compressed. As shown in FIG. 3c, state 1 in FIG. 3c is a state where the spring is not compressed; in this state, there is a gap between the solid structure of the spring and it can be further compressed. State 2 in FIG. 3c is a state after the spring is completely compressed; in this state, there is no gap between the solid structures of the spring and it cannot be further compressed. The solid length L2 of the spring is d1*n1+d2+d3, where d1 is a wire diameter of the spring, n1 is the maximum number of turns of the spring in the axial direction, d2 is the thickness of the outermost spring at one end of the spring, and d3 is the thickness of the outermost spring at the other end of the spring. As shown in FIGs. 3b and 3c, the spring is a spiral cylindrical coil, and the wire diameter d1 of the spring is a diameter of the main body of each turn of the spring. As the number of spiral turns increases, the length occupied by the spring entity is the sum of each turn of the spring entity, that is, d1*n1. As shown in FIG. 3b, the number of turns of the spring is 4 turns, and the solid length of this part after being completely compressed is d1*4. The end of the spring can be ground flat to facilitate assembly. The so-called grinding flat treatment refers to grinding away a part of the originally cylindrical spring entity to make its top surface flatter. After the grinding treatment, the spring entity becomes thinner, that is, it is no longer a complete cylinder, then the thickness d2 and d3 of the spring entity in this area may be less than the wire diameter d1 of the spring. Certainly, in some embodiments, the end of the spring may not be processed. In this case, the thickness of the spring entity is equal to the wire diameter d1 of the spring, that is, d2≤d1 and d3≤d1. Therefore, the overall length of the spring entity is L2=d1*n1+d2+d3. By setting L1>L2, the spring may not be completely compressed after assembly, and there is still space for compression movement.

According to some embodiments of the present application, the compression margin of the elastic member 322 in a compressed state between the valve cover 312 and the blocking member 321 is greater than or equal to 0.5mm, that is, L1-L2>0.5mm. In this case, the elastic member 322 has enough compression margin for the blocking member 321 to move along the axial direction Y of the valve cavity 313, so that the blocking member 321 can open the air inlet 313a. If the elastic member 322 is a spring, in the axial direction Y of the valve cavity 313, the sum of the gaps between the turns of the spring is greater than or equal to 0.5mm. For example, L1-L2 may be 0.1mm, 0.2mm, 0.3mm, 0.4mm, 0.5mm, or the like.

Still refer to FIG. 3b. According to some embodiments of the present application, the diameter of the first guide post 3121131212 is D1, and the inner diameter of the elastic member 322 is D2, satisfying 0mm<D2-D1≤5mm.

The elastic member 322 is a spring, and the inner diameter D2 of the elastic member 322 is a diameter of the cavity formed inside the spring. 0mm<D2-D1≤5mm, that is, when the first guide post 31211 and the elastic member 322 are arranged coaxially, the size of the gap between the first guide post 31211 and the elastic member 322 is greater than 0mm and less than or equal to 5mm.

For example, a difference between the inner diameter of the elastic member 322 and the diameter of the first guide post 31211 may be 0mm, 0.1mm, 0.2mm, 0.5mm, 0.8mm, 1mm, 1.2mm, 1.5mm, 2mm, 2.5mm, 3mm, 3.5mm, 4mm, 4.5mm, 5mm, or the like.

By setting the difference between the inner diameter of the elastic member 322 and the diameter of the first guide post 31211 to be greater than 0mm and less than or equal to 5mm, on the one hand, it can alleviate the phenomenon that the elastic member 322 is inconvenient to assemble on the first guide post 31211 due to the difference between the inner diameter of the elastic member 322 and the diameter of the first guide post 31211 being less than or equal to 0, thereby reducing the scraping phenomenon during the process of the elastic member 322 being sleeved on the first guide post 31211. On the other hand, it can alleviate the phenomenon that the gap between the elastic member 322 and the first guide post 31211 is excessively large due to the excessive difference between the inner diameter of the elastic member 322 and the diameter of the first guide post 31211, so as to reduce the radial movement or radial deformation of the elastic member 322, thereby improving the uniformity of the elastic force of the elastic member 322 acting on the blocking member 321, and reducing the risk of the blocking member 321 mistakenly opening the air inlet 313a.

Still refer to FIG. 3b. According to some embodiments of the present application, a diameter of the second guide post 3212b is D3, where the diameter of the second guide post 3212b is a diameter of the main body of the second guide post 3212b and does not include an area in which the limiting protrusion 3212a provided on the second guide post 3212b is located. The inner diameter of the elastic member 322 is D2, satisfying 0mm<D3-D1≤5mm.

The elastic member 322 is a spring, and the inner diameter D2 of the elastic member 322 is a diameter of the cavity formed inside the spring.

0mm<D3-D1≤5mm, that is, when the second guide post 3212b and the elastic member 322 are arranged coaxially, the size of the gap between the second guide post 3212b and the elastic member 322 is greater than 0mm and less than or equal to 5mm.

For example, the difference between the inner diameter of the elastic member 322 and the diameter of the second guide post 3212b may be 0mm, 0.1mm, 0.2mm, 0.5mm, 0.8mm, 1mm, 1.2mm, 1.5mm, 2mm, 2.5mm, 3mm, 3.5mm, 4mm, 4.5mm, 5mm, or the like.

By setting the difference between the inner diameter of the elastic member 322 and the diameter of the second guide post 3212b to be greater than 0mm and less than or equal to 5mm, on the one hand, it can alleviate the phenomenon that the elastic member 322 is inconvenient to assemble on the second guide post 3212b due to the difference between the inner diameter of the elastic member 322 and the diameter of the second guide post 3212b being less than or equal to 0, thereby reducing the scraping phenomenon during the process of the elastic member 322 being sleeved on the second guide post 3212b. On the other hand, it can alleviate the phenomenon that the gap between the elastic member 322 and the second guide post 3212b is excessively large due to the excessive difference between the inner diameter of the elastic member 322 and the diameter of the second guide post 3212b, so as to reduce the radial movement or radial deformation of the elastic member 322, thereby improving the uniformity of the elastic force of the elastic member 322 acting on the blocking member 321, and reducing the risk of the blocking member 321 mistakenly opening the air inlet 313a.

In this implementation, by arranging the valve core 32 in the valve cavity 313, the valve core 32 can block the air inlet passage, and when the pressure inside the housing rises, the gas inside the housing can act on the valve core 32 and drive the valve core 32 to open the air inlet passage, so as to implement the one-way exhaust function of the one-way valve 30, so that the one-way valve 30 can discharge the gas inside the housing to the outside of the housing.

According to some embodiments of the present application, an opening pressure of the one-way valve 30 is greater than or equal to 0.2MPa; optionally, greater than or equal to 0.4MPa; or optionally, greater than or equal to 0.8MPa. For example, the opening pressure of the valve core 32 may be 0.20MPa, 0.25MPa, 0.30MPa, 0.35MPa, 0.40MPa, 0.45MPa, 0.50MPa, 0.55MPa, 0.60MPa, 0.65MPa, 0.70MPa, 0.75MPa, 0.80MPa, 0.90MPa, or 1.00MPa.

The test method and principle of the one-way valve opening pressure can be tested based on the helium leak standard. The helium leak standard is defined as: if the leak rate is less than 10^-6Pa.m^3/s, the system is considered to be sealed. If the leak rate is greater than 10^-6Pa.m^3/s, it indicates that the system has gas leakage.

During detection, the one-way valve is used to seal the test chamber, helium is filled into the test chamber, and a helium detector is used to monitor the amount of helium in the environment where the test chamber is located. If helium is detected and the leak rate is greater than 10^-6Pa.m^3/s, it indicates that the test chamber is no longer sealed and helium is leaking out. The helium leak rate is continuously monitored. When the leak rate is greater than 10^-5Pa.m^3/s, it is determined that the one-way valve is opened to release gas, and the pressure of the test chamber at that time is recorded as an opening pressure of the one-way valve.

According to some embodiments of the present application, the battery cell 20 includes an end cover 21. The end cover 21 includes an outer surface 21a and an inner surface 21b arranged opposite each other. The outer surface 21a is arranged toward the exterior of the housing, and the inner surface 21b is arranged toward the interior of the housing. The one-way valve 30 being arranged on the end cover 21 may be that the valve body 31 of the one-way valve 30 faces the exterior of the housing, and at least part of the valve body 31 protrudes from the outer surface 21a of the end cover 21, or the valve body 31 of the one-way valve 30 faces the interior of the housing, and at least part of the valve body 31 protrudes from the inner surface 21b of the end cover 21.

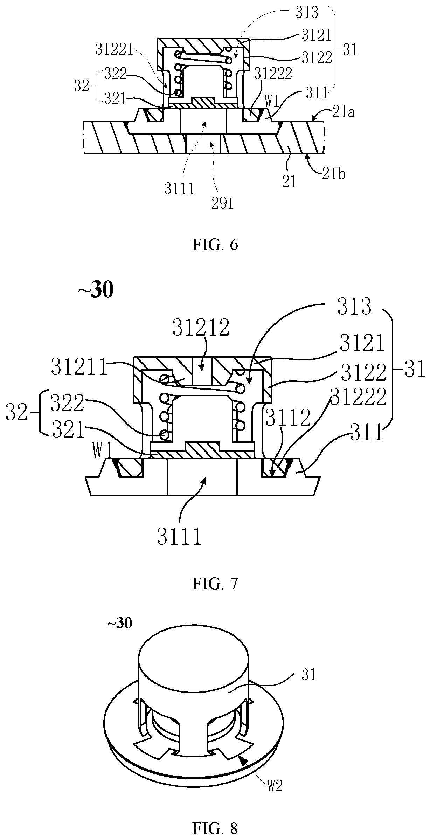

Refer to FIG. 4, FIG. 5, and FIG. 6 in combination. FIG. 5 is a front view of the one-way valve 30 according to one or more embodiments, and FIG. 6 is a schematic diagram of a partial cross-sectional structure of the battery cell 20 according to one or more embodiments. According to some embodiments of the present application, the end cover 21 includes an outer surface 21a and an inner surface 21b arranged opposite each other, the outer surface 21a is arranged toward the exterior of the housing, and the inner surface 21b is arranged toward the interior of the housing. The one-way valve 30 is arranged on the end cover 21, the valve body 31 of the one-way valve 30 is arranged on the outer surface 21a, and at least part of the valve body 31 protrudes from the outer surface 21a of the end cover 21.

In this implementation, the one-way valve 30 includes a valve body 31 and a valve core 32. The valve body 31 has a valve cavity 313 inside, and the valve core 32 is arranged in the valve cavity 313. The valve body 31 includes a valve seat 311 and a valve cover 312. The valve cover 312 includes a cover top wall 3121 and a cover side wall 3122 connected to the cover top wall 3121. The cover top wall 3121, the cover side wall 3122, and the valve seat 311 enclose to form the valve cavity 313, and the valve seat 311 is provided with the air inlet 313a of the valve cavity 313 to communicate the valve cavity 313 with the interior of the housing. The valve cover 312 is provided with the air outlet 313b of the valve cavity 313 to communicate the valve cavity 313 with the exterior of the housing.

The valve core 32 is configured to block the air inlet passage of the valve cavity 313, and the valve core 32 is configured to open the air inlet passage under the action of the gas inside the housing and release the gas inside the battery cell 20. In this implementation, the valve core 32 directly blocks the air inlet 313a of the valve cavity 313, and the air inlet passage includes the flow path of the gas from the interior of the housing of the battery cell 20 to the air inlet 313a of the valve cavity 313 and to the air outlet side of the air inlet 313a.

In this implementation, the valve body 31 of the one-way valve 30 is provided with a valve seat 311 and a valve cover 312. The one-way valve 30 with such structure sets the valve body 31 into two parts, thereby facilitating the assembly of the valve core 32 into the valve cavity 313, which is beneficial to reducing the assembly difficulty of the one-way valve 30.

Still refer to FIG. 4 and FIG. 6. According to some embodiments of the present application, the valve seat 311 has a first through hole 3111 penetrating the valve seat 311, and the air inlet 313a is the first through hole 3111, that is, the first through hole 3111 is used as the air inlet 313a of the valve cavity 313. The cover side wall 3122 has a second through hole 31221 penetrating the cover side wall 3122, and the air outlet 313b is the second through hole 31221, that is, the second through hole 31221 is used as the air outlet 313b of the valve cavity 313. Such arrangement can facilitate the outward transmission of the gas inside the battery 100.

According to some embodiments of the present application, the valve cover 312 includes a cover side wall 3122, the cover side wall 3122 has a second through hole 31221 penetrating the cover side wall 3122, the air outlet 313b is the second through hole 31221, and along the axial direction of the valve cavity 313, the sealing interface between the valve core 32 and the valve seat 311 is higher than or flush with the bottom wall of the second through hole 31221.

According to some embodiments of the present application, along the direction away from the cover top wall 3121, the second through hole 31221 extends to the end of the cover side wall 3122.

As shown in FIG. 4, the direction away from the cover top wall 3121 is the direction from the cover top wall 3121 to the valve seat 311 (the X direction in the figure). The second through hole 31221 is formed by removing part of the structure of the cover side wall 3122. Along the X direction, the cover side wall 3122 is directly hollowed out to the bottom end of the cover side wall 3122. In a further embodiment, along the X direction, a lower opening surface of the second through hole 31221 may be flush with the sealing surface of the blocking member 321, that is, the sealing interface is higher than or flush with the bottom wall of the second through hole 31221. The so-called bottom wall of the second through hole 31221 refers to the lowest point of the second through hole 31221, as shown by the arrow P in FIG. 4, the lower opening surface of the second through hole 31221 along the X direction. Through such arrangement, when the one-way valve 30 is opened for exhaust, that is, when the blocking member 321 opens the sealing interface, the electrolyte liquid carried out with the gas may be discharged outward in a timely manner, so that the electrolyte is not easy to accumulate on the outer edge of the blocking member 321, thereby effectively ensuring the sealing and repeated opening function of the one-way valve 30.

According to some embodiments of the present application, there are a plurality of second through holes 31221, and the plurality of second through holes 31221 are distributed at intervals in the circumferential direction of the cover side wall 3122. Through such arrangement, when the one-way valve 30 is opened to exhaust, the gas may be discharged more quickly, the exhaust time can be shortened, that is, the time that the housing of the battery 100 is in an open state can be shortened, so as to reduce the intrusion of external water vapor into the system of the battery 100 during the valve opening period.

Refer to FIG. 7. FIG. 7 is a schematic cross-sectional structural diagram of a one-way valve 30 according to one or more embodiments. According to some embodiments of the present application, a first guide post 31211 is convexly provided on the side of the cover top wall 3121 facing the valve seat 311, the cover top wall 3121 has a third through hole 31212 penetrating the cover top wall 3121 and the first guide post 31211, or the cover top wall 3121 has a third through hole 31212 penetrating the cover top wall 3121, and the air outlet 313b is the third through hole 31212.

Specifically, the first guide post 31211 is convexly provided on the side of the cover top wall 3121 facing the blocking member 321, and part of the elastic member 322 is sleeved on the outer side of the first guide post 31211. The cover top wall 3121 has a third through hole 31212 penetrating the cover top wall 3121 and the first guide post 31211, and the air outlet 313b is the third through hole 31212. That is, the third through hole 31212 is used as the air outlet 313b of the valve cavity 313. Such arrangement can facilitate the outward transmission of the gas inside the battery 100.

Still refer to FIG. 4, FIG. 5, FIG. 6, and FIG. 7. According to some embodiments of the present application, the valve cover 312 further includes a flanging wall 31222, the cover side wall 3122 connects the cover top wall 3121 and the flanging wall 31222, the flanging wall 31222 extends relative to the cover side wall 3122 toward a side away from the valve cavity 313, and the flanging wall 31222 is connected to the valve seat 311.

According to some embodiments of the present application, the valve cover 312 is connected to the valve seat 311. Specifically, the side of the valve seat 311 facing the valve cover 312 is provided with a first recessed groove 3112 recessed relative to the surface of the valve seat 311, and at least part of the flanging wall 31222 is accommodated in the first recessed groove 3112 and connected to the valve seat 311.

In this implementation, the first recessed groove 3112 is provided on the side of the valve seat 311 facing the valve cover 312, and at least part of the flanging wall 31222 is accommodated in the first recessed groove 3112. The one-way valve 30 with such structure can, on the one hand, reduce the space occupied by the valve body 31 in the thickness direction of the end cover 21, and on the other hand, can improve the structural stability of the valve cover 312 assembled on the valve seat 311.

According to some embodiments of the present application, the flanging wall 31222 is accommodated in the first recessed groove 3112 and connected to the valve seat 311. The thickness of the flanging wall 31222 is less than or equal to the depth of the first recessed groove 3112, so that after the flanging wall 31222 is connected to the valve seat 311, the surface of the flanging wall 31222 facing the cover top wall 3121 is flush with the surface of the valve seat 311 facing the valve cover 312; or the surface of the flanging wall 31222 facing the cover top wall 3121 is lower than the surface of the valve seat 311 facing the valve cover 312. As shown in FIG. 6 and FIG. 7, after the valve cover 312 is connected to the valve seat 311, the surfaces of the flanging wall 31222 and the valve seat 311 are flush. Such arrangement can reduce the overall installation height of the one-way valve 30.

According to some embodiments of the present application, the material of the valve seat 311 may be a metal material, such as copper, iron, aluminum, steel or aluminum alloy. Similarly, the material of the valve cover 312 may alternatively be a metal material, such as copper, iron, aluminum, steel or aluminum alloy. The valve seat 311 and the valve cover 312 may be of the same material or different materials. The valve cover 312 and the valve seat 311 may be assembled by welding (such as laser welding); or may alternatively be assembled by mechanical interference, but the static friction generated by the interference needs to be greater than the rebound force of the elastic member 322.

According to some embodiments of the present application, the flanging wall 31222 is connected to the valve seat 311 by welding. In the circumferential direction of the cover side wall 3122, at least part of a first weld mark of the flanging wall 31222 and the valve seat 311 is staggered from the second through hole 31221 on the cover side wall 3122.

The flanging wall 31222 is connected to the valve seat 311 by welding. Specifically, the flanging wall 31222 is an annular component with a specific thickness, and the outer peripheral surface of the flanging wall 31222 is used as a connecting surface 31222a to be welded to the groove wall surface of the first recessed groove 3112. Further, the connecting surface 31222a of the flanging wall 31222 may be set as an inclined surface, and accordingly the groove wall surface of the first recessed groove 3112 is also set as an inclined surface, so that the connecting surface 31222a of the flanging wall 31222 fits with the groove wall surface of the first recessed groove 3112. As shown in FIG. 6 and FIG. 7, the flanging wall 31222 and the first recessed groove 3112 may form a fitted structure. In this way, the welding quality can be improved, and the strength and stability of the connection can be enhanced. Furthermore, it is preferred that the valve cover 312 and the valve seat 311 are made of the same material to achieve better welding quality.

According to some embodiments of the present application, in the circumferential direction of the cover side wall 3122, at least part of the first weld mark W1 at which the flanging wall 31222 is welded to the valve seat 311 is staggered from the second through hole 31221. As shown in FIG. 5, welding can be performed at a position on the cover side wall 3122 where the second through hole 31221 is not opened. There may be a plurality of first weld marks W1, and the plurality of first weld marks W1 are distributed in the circumferential direction of the cover side wall 3122, and the distribution of the first weld mark W1 may be staggered from the distribution of the second through hole 31221. That is, a plurality of second through holes 31221 are opened at intervals in the circumferential direction of the cover side wall 3122, positions between adjacent second through holes 31221 where no holes are opened have solid walls, and welding is performed at the positions with solid walls. In this way, the solid wall has a specific heat blocking effect, which can protect the blocking member 321 of the valve core 32, reduce the impact of the high temperature during welding on the blocking member 321, and prevent the blocking member 321 from being deformed by heat and causing the sealing interface to fail when the valve is not opened.

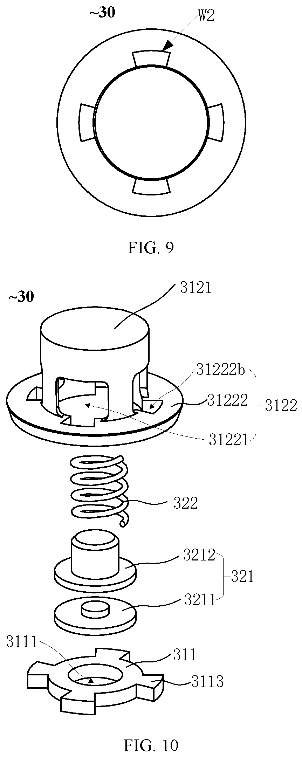

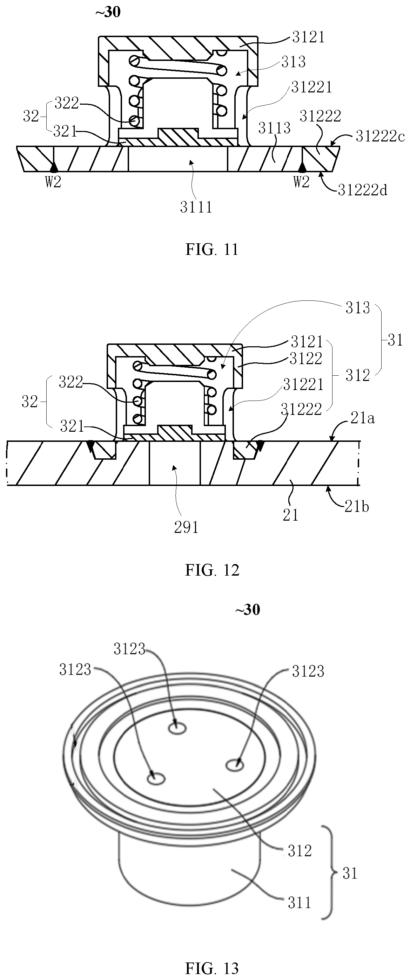

Refer to FIG. 8, FIG. 9, FIG. 10, and FIG. 11 in combination. FIG. 8 is a front view of the one-way valve 30 according to one or more embodiments, FIG. 9 is a bottom view of the one-way valve 30 according to one or more embodiments, FIG. 10 is a schematic diagram of an exploded structure of the one-way valve 30 according to one or more embodiments, and FIG. 11 is a schematic diagram of a partial cross-sectional structure of the battery cell 20 according to one or more embodiments. According to some embodiments of the present application, the valve seat 311 is connected to the valve cover 312. Specifically, the valve cover 312 includes a flanging wall 31222, and the valve seat 311 is connected to the flanging wall 31222. In other words, the valve seat 311 is connected to the flanging wall 31222 of the valve cover 312.

According to some embodiments of the present application, the outer peripheral surface of the valve seat 311 is convexly provided with a connecting protrusion 3113, the inner peripheral surface of the flanging wall 31222 is provided with an accommodating groove 31222b, and the connecting protrusion 3113 is accommodated in the accommodating groove 31222b and connected to the flanging wall 31222.

There are multiple connecting protrusions 3113, and the multiple connecting protrusions 3113 are arranged at intervals along the circumferential direction of the valve seat 311. There are multiple corresponding accommodating grooves 31222b, and the number of the connecting protrusions 3113 is the same as the number of the accommodating grooves 31222b. The shape of the connecting protrusion 3113 matches the shape of the accommodating groove 31222b, so that the connecting protrusion 3113 can be accommodated in the accommodating groove 31222b. Through such arrangement, after the valve cover 312 is connected to the valve seat 311, the surfaces of the flanging wall 31222 and the valve seat 311 are flush. In this way, the valve seat 311 may be embedded in the valve cover 312, which can reduce the overall installation height of the one-way valve 30. Comparing FIG. 6 and FIG. 11, in the scheme of FIG. 6, the valve cover 312 is connected to the valve seat 311, and its installation height is the thickness of the valve cover 312 superimposed on part of the thickness of the valve seat 311. In the scheme of FIG. 11, the valve seat 311 is connected to the valve cover 312, the valve seat 311 is completely accommodated, and its installation height is the thickness of the valve cover 312. Compared with the former, the installation height of this embodiment is lower, reducing the space occupancy rate.

According to some embodiments of the present application, the connecting protrusion 3113 is connected to the flanging wall 31222 by welding. The flanging wall 31222 has an upper surface 31222c and a lower surface 31222d arranged opposite each other. The upper surface 31222c is arranged toward the cover top wall 3121. The second weld mark W2 at which the connecting protrusion 3113 is welded to the flanging wall 31222 of the cover side wall 3122 is located on the lower surface 31222d of the flanging wall 31222. That is, welding is performed from the lower side of the valve cover 312 and the valve seat 311. As shown in FIG. 11, the second weld mark W2 is located on a side away from the valve cavity 313. In this way, the valve seat 311 and the flanging wall 31222 have a specific heat blocking effect, which can protect the blocking member 321 of the valve core 32, reduce the impact of the high temperature during welding on the blocking member 321, and prevent the blocking member 321 from being deformed by heat and causing the sealing interface to fail when the valve is not opened.

Refer to FIG. 12. FIG. 12 is a schematic diagram of a partial cross-sectional structure of a battery cell 20 according to one or more embodiments. According to some embodiments of the present application, the one-way valve 30 is arranged on the outer surface 21a of the end cover 21, the valve body 31 of the one-way valve 30 faces the exterior of the housing, and at least part of the valve body 31 protrudes from the outer surface 21a of the end cover 21.

In this implementation, the one-way valve 30 includes a valve body 31 and a valve core 32. The valve body 31 has a valve cavity 313 inside, and the valve core 32 is arranged in the valve cavity 313. The valve body 31 includes a valve cover 312, and the valve cover 312 includes a cover top wall 3121 and a cover side wall 3122 connected to the cover top wall 3121. The cover top wall 3121, the cover side wall 3122, and the end cover 21 enclose to form the valve cavity 313. The end cover 21 is provided with the air inlet 313a of the valve cavity 313 to communicate the valve cavity 313 with the interior of the housing. The valve cover 312 is provided with the air outlet 313b of the valve cavity 313 to communicate the valve cavity 313 with the exterior of the housing. The valve core 32 is configured to block the air inlet passage of the valve cavity 313, and the valve core 32 is configured to open the air inlet passage under the action of the gas inside the housing and release the gas inside the battery cell 20. In this implementation, the valve core 32 directly blocks the air inlet 313a of the valve cavity 313, and the air inlet passage includes the flow path of the gas from the interior of the housing of the battery cell 20 to the air inlet 313a of the valve cavity 313 and to the air outlet side of the air inlet 313a.

In this implementation, the valve body 31 of the one-way valve 30 may only have the valve cover 312 without the valve seat 311, and the valve cover 312 is directly connected to the end cover 21; in other words, the end cover 21 may be used as the valve seat 311 of the valve body 31. In this way, the installation height of the one-way valve 30 can be reduced. Comparing FIG. 6, FIG. 11, and FIG. 12, in the scheme of FIG. 6, the valve cover 312 is connected to the valve seat 311, and its installation height is the thickness of the valve cover 312 superimposed on part of the thickness of the valve seat 311, and then superimposed on part of the thickness of the end cover 21. In the scheme of FIG. 11, the valve seat 311 is connected to the valve cover 312, the valve seat 311 is completely accommodated, and its installation height is the thickness of the valve cover 312 superimposed on part of the thickness of the end cover 21. In the scheme of FIG. 12, the valve cover 312 can be embedded in the end cover 21, and its installation height can be the thickness of the end cover 21. Compared with the three, the installation height of this embodiment is lower, reducing the space occupancy rate.

According to some embodiments of the present application, the end cover 21 is provided with a first exhaust hole 291, the first exhaust hole 291 communicates the interior of the housing with the exterior of the housing, and the air inlet 313a is the first exhaust hole 291, that is, the first exhaust hole 291 is used as the air inlet 313a of the valve cavity 313. The cover side wall 3122 has a second through hole 31221 penetrating the cover side wall 3122, and the air outlet 313b is the second through hole 31221, that is, the second through hole 31221 is used as the air outlet 313b of the valve cavity 313. Such arrangement can facilitate the outward transmission of the gas inside the battery cell 20. In other implementations, the air outlet 313b may alternatively be located on the cover top wall 3121 and penetrate the third through hole 31212 of the cover top wall 3121 and the first guide post 31211. For details, refer to FIG. 7 and the previous description, which are not repeated here.

According to some embodiments of the present application, the side of the end cover 21 facing the exterior of the housing is provided with a second recessed groove (not labeled in the figure) recessed relative to the outer surface 21a of the end cover 21, and at least part of the flanging wall 31222 of the valve cover 312 is accommodated in the second recessed groove and connected to the end cover 21.

In this implementation, the second recessed groove is provided on the side of the end cover 21 facing the exterior of the housing, and at least part of the flanging wall 31222 is accommodated in the second recessed groove. The one-way valve 30 with such structure can reduce the space occupied by the valve body 31 in the thickness direction of the end cover 21.

According to some embodiments of the present application, the flanging wall 31222 is accommodated in the second recessed groove and connected to the end cover 21. The thickness of the flanging wall 31222 is less than or equal to the depth of the second recessed groove, so that after the flanging wall 31222 is connected to the end cover 21, the surface of the flanging wall 31222 facing the cover top wall 3121 is flush with the surface of the end cover 21 facing the exterior of the housing; or the surface of the flanging wall 31222 facing the cover top wall 3121 is lower than the surface of the end cover 21 facing the exterior of the housing. As shown in FIG. 12, after the valve cover 312 is connected to the end cover 21, the surfaces of the flanging wall 31222 and the end cover 21 are flush. Such arrangement can reduce the overall installation height of the one-way valve 30.

According to some embodiments of the present application, the flanging wall 31222 is connected to the end cover 21 by welding. Specifically, the flanging wall 31222 is an annular component with a specific thickness, and the outer peripheral surface of the flanging wall 31222 is used as a connecting surface 31222a to be welded to the groove wall surface of the second recessed groove. Further, the connecting surface 31222a of the flanging wall 31222 may be provided as an inclined surface, and accordingly the groove wall surface of the second recessed groove is also provided as an inclined surface, so that the connecting surface 31222a of the flanging wall 31222 fits with the groove wall surface of the second recessed groove. As shown in FIG. 12, the flanging wall 31222 and the second recessed groove can form a fitted structure. In this way, the welding quality can be improved, and the strength and stability of the connection can be enhanced. Furthermore, it is preferred that the valve cover 312 and the end cover 21 are made of the same material to achieve better welding quality. For example, aluminum materials are used for both.

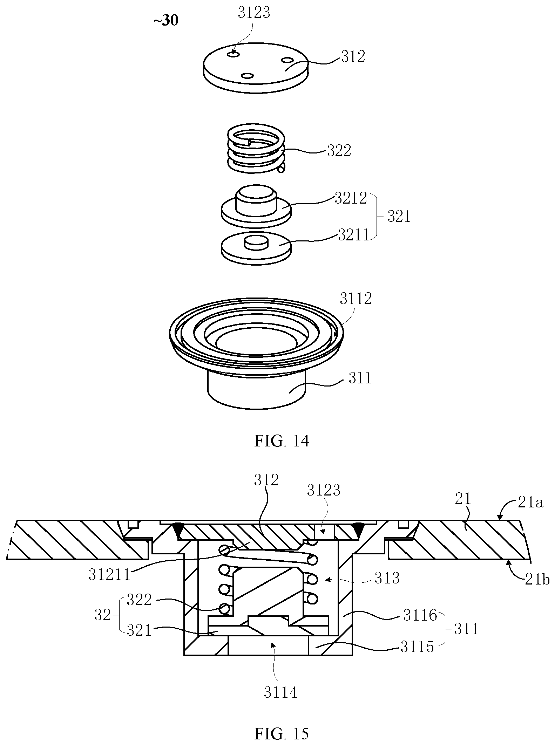

Refer to FIG. 13, FIG. 14, and FIG. 15 in combination. FIG. 13 is a front view of the one-way valve 30 according to one or more embodiments, FIG. 14 is a schematic diagram of an exploded structure of the one-way valve 30 according to one or more embodiments, and FIG. 15 is a schematic diagram of a partial cross-sectional structure of the battery cell 20 according to one or more embodiments. According to some embodiments of the present application, the end cover 21 includes an outer surface 21a and an inner surface 21b arranged opposite each other, the outer surface 21a is arranged toward the exterior of the housing, and the inner surface 21b is arranged toward the interior of the housing. The one-way valve 30 is arranged on the outer surface 21a of the end cover 21, and the valve body 31 of the one-way valve 30 faces the interior of the housing, and at least part of the valve body 31 protrudes from the inner surface 21b of the end cover 21. That is, the valve body 31 extends into the housing along the thickness direction of the end cover 21.

In this implementation, the one-way valve 30 includes a valve body 31 and a valve core 32, the valve body 31 has a valve cavity 313 inside, and the valve core 32 is arranged in the valve cavity 313. The valve body 31 includes a valve seat 311 and a valve cover 312. The valve seat 311 includes a seat bottom wall 3115 and a seat side wall 3116 connected to the seat bottom wall 3115. The valve cover 312 is arranged at the end of the valve seat 311 away from the seat bottom wall 3115. The valve cover 312, the seat side wall 3116, and the seat bottom wall 3115 enclose to form the valve cavity 313, and the valve seat 311 is provided with the air inlet 313a of the valve cavity 313 to communicate the valve cavity 313 with the interior of the housing. The valve core 32 is configured to block the air inlet passage of the valve cavity 313, and the valve core 32 is configured to open the air inlet passage under the action of the gas inside the housing and release the gas inside the battery cell 20. In this implementation, the valve core 32 directly blocks the air inlet 313a of the valve cavity 313, and the air inlet passage includes the flow path of the gas from the interior of the housing of the battery cell 20 to the air inlet 313a of the valve cavity 313 and to the air outlet side of the air inlet 313a.

In this implementation, the valve body 31 of the one-way valve 30 is provided with a valve seat 311 and a valve cover 312. The one-way valve 30 with such structure is provided with the valve body 31 including two parts, thereby facilitating the assembly of the valve core 32 into the valve cavity 313, which is beneficial to reducing the assembly difficulty of the one-way valve 30.

Still refer to FIG. 13, FIG. 14, and FIG. 15. According to some embodiments of the present application, the valve seat 311 has a fourth through hole 3114 penetrating the seat bottom wall 3115, and the air inlet 313a is the fourth through hole 3114, that is, the fourth through hole 3114 is used as the air inlet 313a of the valve cavity 313. Certainly, in other embodiments, the air inlet 313a may alternatively be arranged on the outer peripheral surface of the part of the valve body 31 extending into the housing. When the air inlet 313a is arranged on the outer peripheral surface of the part of the valve body 31 extending into the housing, the direction for arranging the valve core 32 may change accordingly, and the blocking member 321 is movably arranged in the valve cavity 313 along the radial direction of the valve seat 311, so that the valve core 32 blocks the air inlet 313a.

Still refer to FIG. 13, FIG. 14, and FIG. 15. According to some embodiments of the present application, the air outlet 313b may be directly opened on the valve cover 312, that is, the air outlet 313b is a channel provided on the valve cover 312. Specifically, the valve cover 312 has a fifth through hole 3123 penetrating the valve cover 312, and the air outlet 313b is the fifth through hole 3123, that is, the fifth through hole 3123 is used as the air outlet 313b of the valve cavity 313. Such arrangement can facilitate the outward transmission of the gas inside the battery 100.

There may be one or more fifth through holes 3123 provided on the valve cover 312. For example, in FIGs. 13 and 14, three fifth through holes 3123 are provided on the valve cover 312. Certainly, in other embodiments, the fifth through hole 3123 provided on the valve cover 312 may alternatively be two, four, five, six, or the like. As an example, a plurality of fifth through holes 3123 are provided on the valve cover 312, and the plurality of fifth through holes 3123 are arranged at equal intervals. As an example, the plurality of fifth through holes 3123 are arranged at equal intervals around the center of the valve cover 312, so that the gas can flow out more smoothly.

By providing the fifth through hole 3123 on the valve cover 312 of the valve body 31 to form the air outlet 313b of the valve body 31, the valve cavity 313 of the valve body 31 can be in communication with the exterior of the housing through the fifth through hole 3123 provided on the valve cover 312. The valve body 31 with such structure can reduce the interference of the air outlet 313b on the connection between the valve cover 312 and the valve seat 311, which is beneficial to reducing the assembly difficulty of the valve cover 312 and the valve seat 311.

Still refer to FIG. 15. According to some embodiments of the present application, a first guide post 31211 is convexly provided on the side of the valve cover 312 facing the blocking member 321, and part of the elastic member 322 is sleeved on the outer side of the first guide post 31211. The valve cover 312 may alternatively be provided with a third through hole 31212 (not shown in FIG. 15, please refer to FIG. 7 for details) penetrating the valve cover 312 and the first guide post 31211, and the air outlet 313b is the third through hole 31212. That is, the third through hole 31212 is used as the air outlet 313b of the valve cavity 313. Such arrangement can facilitate the outward transmission of the gas inside the battery 100.

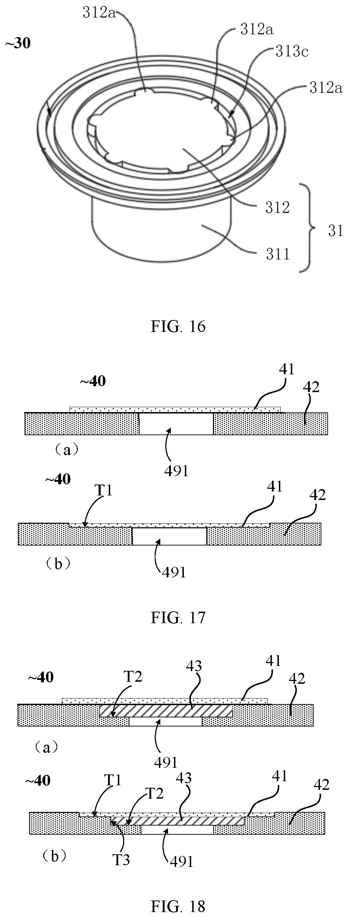

Refer to FIG. 16. FIG. 16 is a front view of the one-way valve 30 according to one or more embodiments. According to some embodiments of the present application, the air outlet 313b may alternatively be arranged between the valve cover 312 and the valve seat 311, that is, the air outlet 313b is a gap formed between the valve cover 312 and the valve seat 311. Specifically, the valve cover 312 is connected to the valve seat 311, and the air outlet 313b is a first exhaust gap 313c formed between the valve cover 312 and the valve seat 311.

The outer peripheral surface of the valve cover 312 is convexly provided with a plurality of protrusions 312a, and the plurality of protrusions 312a are arranged at intervals along the circumferential direction of the valve cover 312. The protrusions 312a are in interference fit with the valve seat 311. The area of the outer peripheral surface of the valve cover 312 where the protrusions 312a are not provided and the valve seat 311 form a first exhaust gap 313c, that is, in the circumferential direction of the valve cover 312, the air outlet 313b is formed between two adjacent protrusions 312a. By providing the first exhaust gap 313c between the valve cover 312 and the valve seat 311 to form the air outlet 313b of the valve cavity 313, the valve cavity 313 of the valve body 31 can be in communication with the exterior of the housing through the first exhaust gap 313c formed between the valve cover 312 and the valve seat 311. The structure is simple and easy to process.

According to some embodiments of the present application, the valve cover 312 may be connected to the valve seat 311, and then the valve seat 311 is used to connect to the end cover 21. Specifically, the end of the valve seat 311 away from the seat bottom wall 3115 is provided with a first recessed groove 3112, and at least part of the valve cover 312 is accommodated in the first recessed groove 3112. At least part of the valve cover 312 is accommodated in the first recessed groove 3112, that is, the valve cover 312 can be entirely located in the first recessed groove 3112, or partially located in the first recessed groove 3112, that is, the valve cover 312 can extend out of the first recessed groove 3112 or not extend out of the first recessed groove 3112. By providing the first recessed groove 3112 on the valve seat 311 and accommodating at least part of the valve cover 312 in the first recessed groove 3112, the one-way valve 30 with such structure can, on the one hand, reduce the space occupied by the valve body 31, and on the other hand, can improve the structural stability of the valve cover 312 assembled on the valve seat 311, and can play a specific protective role on the valve cover 312 to reduce the phenomenon of wear or damage of the valve cover 312.

According to some embodiments of the present application, the valve cover 312 and the valve seat 311 may alternatively be connected to the end cover 21 respectively. Specifically, the valve cover 312 is connected to the end cover 21, and the air outlet 313b may be a second exhaust gap (not shown in the figure) formed between the valve cover 312 and the end cover 21. The valve cover 312 is connected to the end cover 21, so that the valve cover 312 and the valve seat 311 jointly define a valve cavity 313 for accommodating the valve core 32. When the valve is opened, the blocking member 321 opens the fourth through hole 3114, and the gas enters the valve cavity 313. In this case, any opening or gap on the upper part of the valve cavity 313 may be used as the air outlet 313b. In other words, the blocking member 321 controls the sealing of the system of the battery 100, and other areas of the valve cavity 313 do not bear the sealing function. Openings or gaps may be provided to discharge the gas in the valve cavity 313. The second exhaust gap between the valve cover 312 and the end cover 21 may be a gap left by local welding, or a protrusion 312a may be provided on the connecting surface 31222a of the two, so that the protrusion 312a is used for connection, and the area in which the protrusion 312a is not provided forms the second exhaust gap.

According to some embodiments of the present application, the one-way valve 30 is arranged on the end cover 21, the valve body 31 of the one-way valve 30 faces the interior of the housing, and at least part of the valve body 31 protrudes from the outer surface 21a21b of the end cover 21. The one-way valve 30 includes a valve body 31 and a valve core 32, the valve body 31 has a valve cavity 313 inside, and the valve core 32 is arranged in the valve cavity 313. The valve body 31 includes a valve seat 311, and the valve seat 311 includes a seat bottom wall 3115 and a seat side wall 3116 connected to the seat bottom wall 3115. The seat bottom wall 3115, the seat side wall 3116, and the end cover 21 enclose to form the valve cavity 313. The end cover 21 is provided with the air outlet 313b of the valve cavity 313, for example, the first exhaust hole 291 may be used as the air outlet 313b to communicate the valve cavity 313 with the exterior of the housing. The valve seat 311 is provided with the air inlet 313a of the valve cavity 313 to communicate the valve cavity 313 with the interior of the housing, for example, the fourth through hole 3114 penetrating the seat bottom wall 3115 may be used as the air inlet 313a. The valve core 32 is configured to block the air inlet passage of the valve cavity 313, and the valve core 32 is configured to open the air inlet passage under the action of the gas inside the housing and release the gas inside the battery cell 20. In this implementation, the valve body 31 of the one-way valve 30 may only have the valve seat 311 without the valve cover 312, and the valve seat 311 is directly connected to the end cover 21; in other words, the end cover 21 may be used as the valve cover 312 of the valve body 31. In this way, the installation height of the one-way valve 30 can be reduced.

According to some embodiments of the present application, the side of the end cover 21 facing the interior of the housing is provided with a third recessed groove (not shown in the figure) recessed relative to the inner surface 21b of the end cover 21, and at least part of the seat side wall 3116 is accommodated in the third recessed groove and connected to the end cover 21. The connection method is the same as the connection method between the cover side wall 3122 and the end cover 21 in the embodiment shown in FIG. 12, which is not illustrated here. In this implementation, a third recessed groove is provided on the side of the end cover 21 facing the interior of the housing, and at least part of the seat side wall 3116 is accommodated in the third recessed groove. Therefore, the one-way valve 30 with such structure can reduce the space occupied by the valve body 31 in the thickness direction of the end cover 21.

According to some embodiments of the present application, the exhaust assembly 90 includes a gas-permeable film assembly 40, the gas-permeable film assembly 40 includes a gas-permeable film 41, and the gas-permeable film 41 is configured to allow gas inside the battery cell 20 to pass through the gas-permeable film 41 and be discharged.

According to some embodiments of the present application, the gas-permeable film assembly 40 includes a gas-permeable film 41. The gas-permeable film 41 is made of a gas-permeable material and has good gas-permeable performance, which can allow gas molecules to pass through. By using the gas-permeable film assembly 40 as the exhaust assembly 90, the battery cell 20 can discharge internal gas through the gas-permeable film 41 in a sealed state, and discharge the gas inside the housing of the battery 100 to the outside of the housing in a timely manner, so that the air pressure inside the housing of the battery 100 is not too high, thereby reducing the risk of the pressure relief mechanism 70 being actuated prematurely, and greatly improving the service life of the battery cell 20.

Further, the gas-permeable film 41 also has liquid barrier properties and blocks the passage of liquid. Therefore, it can block overflow of electrolyte while discharging gas. In addition, the gas-permeable film 41 can also block external water vapor, dust and impurities from entering the interior of the battery cell 20, protecting the internal environment of the battery cell 20, and effectively improving the reliability of the battery cell 20. The gas-permeable film 41 also has good weather resistance, chemical corrosion resistance, and structural stability. For an automotive power battery 100, the gas-permeable film 41 also needs to be oleophobic. Therefore, the material of the gas-permeable film 41 may be selected from polymer materials, such as polytetrafluoroethylene or polypropylene. In addition, since the gas generated inside the battery 100 causes the internal pressure to rise rapidly, the gas-permeable film 41 needs to have a specific mechanical strength and elasticity.

Refer to FIG. 17. FIG. 17 is a schematic cross-sectional structural diagram of a gas-permeable film assembly 40 according to one or more embodiments. According to some embodiments of the present application, the gas-permeable film assembly 40 includes a gas-permeable film 41 and a connecting member 42, and the connecting member 42 is configured to carry the gas-permeable film 41. The connecting member 42 is provided with a first gas-permeable hole 491, the gas-permeable film 41 is arranged on the connecting member 42, the gas-permeable film 41 covers the first gas-permeable hole 491, and the gas-permeable film 41 is configured to allow gas inside the battery cell 20 to pass through the gas-permeable film 41 and be discharged.

The connecting member 42 can play a supporting role for the gas-permeable film 41 and reduce the risk of excessive deformation of the gas-permeable film 41. In addition, the connecting member 42 can also serve as a medium for connecting other components of the gas-permeable film assembly 40. The gas-permeable film 41 is connected to other components through the connecting member 42 to improve the stability of the connection. The connecting member 42 is provided with at least one first gas-permeable hole 491 as a release channel for the gas inside the battery 100, so that the gas can pass through the connecting member 42. The shape of the first gas-permeable hole 491 includes geometric shapes such as circle, square, and ellipse. The connecting member 42 may alternatively be provided with a plurality of first gas-permeable holes 491. The aperture, shape, and arrangement of the first gas-permeable holes 491 are not specifically limited here. Optionally, the aperture of the first gas-permeable hole 491 may be less than or equal to the aperture of the exhaust hole on the battery cell 20.

In one implementation, the connecting member 42 may be a metal member 42, a resin member, or the like. The material of the metal member 42 may be copper, iron, aluminum, steel, aluminum alloy, or the like. By using the connecting member as the metal member 42, it is beneficial to connect the connecting member to the wall portion by welding. The following takes the connecting member 42 being a metal member 42 as an example to illustrate the solution of the present application, but it should not be limited to this, and it should not limit the solution of the present application. It is still applicable to connecting members of non-metallic materials.

As shown in (a) of FIG. 17, the gas-permeable film 41 may be directly arranged on the surface of the metal member 42. In other implementations, a recessed platform may alternatively be provided on the metal member 42.

Still refer to FIG. 17. According to some embodiments of the present application, the metal member 42 has a first annular table surface T1 recessed relative to the surface of the metal member 42, the first annular table surface T1 is arranged around the first gas-permeable hole 491, and the gas-permeable film 41 is arranged on the first annular table surface T1. Through such arrangement, the installation height of the gas-permeable film assembly 40 can be reduced.

Refer to FIG. 18. FIG. 18 is a schematic cross-sectional structural diagram of a gas-permeable film assembly 40 according to one or more embodiments. According to some embodiments of the present application, the gas-permeable film assembly 40 further includes a backing member 43, the backing member 43 is arranged between the gas-permeable film 41 and the metal member 42, and the gas-permeable rate of the backing member 43 is greater than the gas-permeable rate of the gas-permeable film 41.

The gas-permeable film assembly 40 includes a gas-permeable film 41, a metal member 42, and a backing member 43. The gas-permeable film 41 is arranged on the metal member 42, the backing member 43 is arranged between the gas-permeable film 41 and the metal member 42, and the backing member 43 is configured to support the gas-permeable film 41 and allow the gas passing through the gas-permeable film 41 to pass through.

The backing member 43 can support the gas-permeable film 41, so that the gas-permeable film 41 is not prone to deformation. The backing member 43 is made of a material with better air permeability than the gas-permeable film 41 so as not to affect the air permeability process of the gas-permeable film 41; and the backing member 43 also has the characteristics of corrosion resistance and high temperature resistance. The material of the backing member 43 for selection is rich in types, including polypropylene, polyamide, polytetrafluoroethylene, polyperfluoroethylene propylene, and other porous polymers, or may be metal-organic framework porous material, carbon film, ceramic porous material, or the like, which are not limited here.

As shown in (a) of FIG. 18, the metal member 42 also has a second annular table surface T2 recessed relative to the surface of the metal member 42, the second annular table surface T2 is arranged around the first gas-permeable hole 491, and the backing member 43 is arranged on the second annular table surface T2. The second annular table surface T2 is used to carry the backing member 43, and the gas-permeable film 41 may be directly attached to the surface of the metal member 42. In this way, because the thickness of the gas-permeable film 41 is small, the impact on the overall height of the gas-permeable film assembly 40 is relatively small. By reducing the arrangement of the recessed surface on the metal member 42, on the one hand, the manufacturing process can be simplified, and on the other hand, the strength of the metal member 42 can be improved.

As shown in (b) of FIG. 18, the metal member 42 has a first annular table surface T1 and a second annular table surface T2 recessed relative to the surface of the metal member 42, as well as a transition surface T3. The first annular table surface T1 is arranged around the second annular table surface T2, the transition surface T3 connects the first annular table surface T1 and the second annular table surface T2, the first annular table surface T1 is closer to the surface of the metal member 42 than the second annular table surface T2, the second annular table surface T2 is arranged around the first gas-permeable hole 491, the backing member 43 is arranged on the second annular table surface T2, and the gas-permeable film 41 is arranged on the first annular table surface T1.

The first annular table surface T1 and the second annular table surface T2 are formed by recessing inward from the surface of the metal member 42. The metal member 42 may be stamped to form the recessed first annular table surface T1 and second annular table surface T2, or the metal member 42 may be etched to remove part of the structure to form the recessed first annular table surface T1 and second annular table surface T2. The depth of the first annular table surface T1 and the second annular table surface T2 relative to the surface of the metal member 42 may be set according to the thickness of the gas-permeable film 41 and the backing member 43. Preferably, the depth of the second annular table surface T2 relative to the first annular table surface T1 (that is, the height of the transition surface T3) is equal to the thickness of the backing member 43, so that the second annular table can accommodate the backing member 43, and the surface of the backing member 43 facing the gas-permeable film 41 is flush with the first annular table surface T1. Further, the depth of the first annular table surface T1 relative to the surface of the metal member 42 is equal to the thickness of the gas-permeable film 41, so that the first annular table can accommodate the gas-permeable film 41, and the surface of the gas-permeable film 41 away from the metal member 42 is flush with the surface of the metal member 42.

By providing a recessed platform on the metal member 42, the surface of the gas-permeable film 41 may be flush with the surface of the metal member 42, reducing the overall height of the gas-permeable film assembly 40, and further reducing the installation height of the gas-permeable film assembly 40. In other implementations, if the gas-permeable film assembly 40 does not include a backing member 43, only the first annular table surface T1 may be provided to carry the gas-permeable film 41.

In one implementation, the gas-permeable film 41 is compositely connected to the metal member 42, for example, the gas-permeable film 41 and the metal member 42 may be connected by a nano injection molding process. Nano injection molding refers to a nano molding technology (NMT, namely Nano Molding Technology), which is a process in which metal and plastic are combined with nanotechnology. That is, after the metal surface is nano-treated, the plastic is directly injection molded on the metal surface, so that the metal and plastic may be integrally molded and finally combined into one product. The "nano" here refers to a microporous process, that is, the metal surface is subjected to nano-scale microporous treatment through a specific solution. The main purpose is to make the metal surface better combine with the plastic and improve the connection strength.

According to some embodiments of the present application, the end cover 21 has a first exhaust hole 291, the first exhaust hole 291 communicates the interior of the housing with the exterior of the housing, and the exhaust assembly 90 is configured such that the gas discharged through the first exhaust hole 291 flows through the one-way valve 30 and the gas-permeable film assembly 40.

The first exhaust hole 291 communicates the interior of the housing with the exterior of the housing, that is, the first exhaust hole 291 is a through hole, and the gas inside the housing of the battery cell 20 may be discharged through the first exhaust hole 291 to regulate the pressure inside the housing of the battery cell 20. The exhaust assembly 90 is configured such that the gas discharged through the first exhaust hole 291 flows through the one-way valve 30 and the gas-permeable film assembly 40, which means that when the gas is discharged through the first exhaust hole 291, it also flows through the one-way valve 30 and the gas-permeable film assembly 40 that belong to the same exhaust assembly 90; or in other words, the discharge path of the gas needs to flow through both the one-way valve 30 and the gas-permeable film assembly 40; or in other words, the one-way valve 30 and the gas-permeable film assembly 40 in the same exhaust assembly 90 are connected in series, and when the gas flows through the exhaust assembly 90, it flows through the one-way valve 30 and the gas-permeable film assembly 40 in the exhaust assembly 90 in sequence. It may be that the gas first flows through the gas-permeable film assembly 40 and then through the one-way valve 30; or it may be that the gas first flows through the one-way valve 30 and then through the gas-permeable film assembly 40. The flow sequence may be set as needed, but both structures need to be flowed through, rather than part of the gas only flowing through the one-way valve 30 to be discharged, and another part of the gas only flowing through the gas-permeable film assembly 40 to be discharged. There may be one first exhaust hole 291 on the end cover 21, or there may be multiple first exhaust holes 291 on the end cover 21. When there are multiple first exhaust holes 291, each first exhaust hole 291 is equipped with a set of exhaust assembly 90, and when the gas is discharged through the first exhaust hole 291, it will flow through the one-way valve 30 and the gas-permeable film assembly 40 in the exhaust assembly 90 provided at the first exhaust hole 291. The first exhaust hole 291 may be arranged at any position of the end cover 21, and the aperture of the first exhaust hole 291 may be set as needed. The size and number of the exhaust holes can be designed according to the capacity of the battery cell 20, the type of the battery 100, the volume size, the amount of gas produced, the gas production speed, and the like. As described above, the first exhaust hole 291 may alternatively be arranged on any wall of the shell 22.

In this implementation, the gas-permeable film assembly 40 and the one-way valve 30 are arranged in series. The presence of the one-way valve 30 ensures that the system is not constantly in a gas-permeable state; instead, the one-way valve 30 is actuated to exhaust gas only when pressure accumulates to a specific threshold. This helps to maintain the sealing performance of the battery cell 20 system and reduce the probability of external water vapor entering the battery cell 20 system. In addition, presence of the gas-permeable film 41, on the one hand, can block the overflow of electrolyte, and on the other hand, when the one-way valve 30 is opened, the gas-permeable film 41 can realize the sealing of the system of the battery 100, so that the battery cell 20 can discharge internal gas through the gas-permeable film 41 and the one-way valve 30 in a sealed state, alleviating the disadvantage that the battery cell 20 system is in an open state when the one-way valve 30 discharges gas, making it susceptible to the ingress of external water vapor. In other implementations, the one-way valve 30 and the gas-permeable film assembly 40 in the exhaust assembly 90 may alternatively be arranged in parallel, that is, part of the gas may be discharged through the one-way valve 30, and another part of the gas may be discharged through the gas-permeable film assembly 40. It may alternatively be a mixed connection, that is, there may be a series exhaust assembly 90 or a parallel exhaust assembly 90.

According to some embodiments of the present application, the exhaust assembly 90 includes a one-way valve 30 and a gas-permeable film assembly 40. The gas-permeable film assembly 40 includes a gas-permeable film 41, and the one-way valve 30 includes a valve body 31. The valve body 31 has a valve cavity 313 inside, and the valve body 31 is provided with an air inlet 313a and an air outlet 313b. The air inlet 313a is configured to communicate the valve cavity 313 with the interior of the housing, and the air outlet 313b is configured to communicate the valve cavity 313 with the exterior of the housing. The battery cell 20 has an exhaust passage communicating the air inlet 313a of the valve cavity 313, the valve cavity 313, and the air outlet 313b of the valve cavity 313. The exhaust passage is configured to discharge the gas inside the housing, and the gas-permeable film 41 is arranged on the exhaust passage.

In this implementation, when the gas is discharged through the one-way valve 30, its discharge path is the interior of the battery cell 20-the air inlet 313a-the valve cavity 313-the air outlet 313b-the exterior of the battery cell 20, and the entire exhaust path forms an exhaust passage. That is, the gas inside the battery cell 20 enters the valve cavity 313 from the air inlet 313a, flows through the valve cavity 313 and is then discharged from the air outlet 313b of the valve cavity 313 to the exterior of the battery cell 20. The gas-permeable film 41 is arranged on this exhaust passage, meaning that when the gas passes through this exhaust passage, it also flows through the gas-permeable film 41, that is, it flows through both the one-way valve 30 and the gas-permeable film assembly 40, further indicating the series relationship between the one-way valve 30 and the gas-permeable film assembly 40. The gas-permeable film 41 may be in any node section of the exhaust passage. For example, it may be that, before entering the valve cavity 313 of the one-way valve 30, that is, before entering the air inlet 313a, it first passes through the gas-permeable film 41 and then enters the valve cavity 313. It may alternatively be that, after entering the valve cavity 313 of the one-way valve 30 but before flowing out of the valve cavity 313, it first flows through the gas-permeable film 41 before flowing out of the valve cavity 313 from the air outlet 313b. It may alternatively be that, after flowing out of the valve cavity 313, that is, after flowing out from the air outlet 313b, it is then discharged to the exterior of the battery cell 20 through the gas-permeable film 41.

According to some embodiments of the present application, the gas-permeable film 41 is arranged on the air inlet side of the air inlet 313a of the valve cavity 313 of the one-way valve 30.

According to some embodiments of the present application, the gas-permeable film 41 is arranged on the air inlet side of the air inlet 313a; and/or the gas-permeable film 41 is arranged on the air outlet side of the air inlet 313a; and/or the gas-permeable film 41 is arranged on the air inlet side of the air outlet 313b; and/or the gas-permeable film 41 is arranged on the air outlet side of the air outlet 313b.

According to some embodiments of the present application, the gas-permeable film 41 is arranged between the air inlet 313a and the air outlet 313b of the valve cavity 313 of the one-way valve 30. For example, the gas-permeable film 41 may be arranged on the air outlet side of the air inlet 313a of the valve cavity 313 of the one-way valve 30; or the gas-permeable film 41 may be arranged on the air inlet side of the air outlet 313b of the valve cavity 313 of the one-way valve 30.

According to some embodiments of the present application, the gas-permeable film 41 is arranged on the air outlet side of the air outlet 313b of the valve cavity 313 of the one-way valve 30.

According to some embodiments of the present application, along the thickness direction of the end cover 21, the gas-permeable film 41 of the gas-permeable film assembly 40 is closer to the interior of the housing than the one-way valve 30. The end cover 21 includes an outer surface 21a and an inner surface 21b arranged opposite each other, the outer surface 21a is arranged toward the exterior of the housing, the inner surface 21b is arranged toward the interior of the housing, and the thickness direction along the end cover 21 is the direction from the inner surface 21b to the outer surface 21a. By arranging the gas-permeable film 41 of the gas-permeable film assembly 40 closer to the interior of the housing than the one-way valve 30, the gas of the battery cell 20 can first pass through the gas-permeable film 41 and then through the one-way valve 30 when it is discharged. In this way, while discharging the gas, the gas-permeable film 41 may be used to block the overflow of the electrolyte to prevent the electrolyte from entering the one-way valve 30, reduce the erosion of the one-way valve 30 components by the electrolyte, prevent the electrolyte from accumulating in the one-way valve 30, and block the exhaust passage.

According to some embodiments of the present application, the one-way valve 30 is arranged on the outer surface 21a of the end cover 21, the valve body 31 of the one-way valve 30 faces the exterior of the housing, and at least part of the valve body 31 protrudes from the outer surface 21a of the end cover 21. The gas-permeable film assembly 40 is arranged on the side of the end cover 21 facing the exterior of the housing. At least part of the gas-permeable film assembly 40 is arranged on the outer surface 21a.

According to some embodiments of the present application, the one-way valve 30 is arranged on the end cover 21, the valve body 31 of the one-way valve 30 faces the interior of the housing, and at least part of the valve body 31 protrudes from the inner surface 21b of the end cover 21. The gas-permeable film assembly 40 is arranged on the side of the end cover 21 facing the interior of the housing. Specifically, the valve body 31 of the one-way valve 30 is arranged on the outer surface 21a; and at least part of the valve body 31 protrudes from the inner surface 21b; the gas-permeable film assembly 40 is arranged on the part of the valve body 31 protruding from the inner surface 21b.

According to some embodiments of the present application, the one-way valve 30 is arranged on the end cover 21, the valve body 31 of the one-way valve 30 faces the exterior of the housing, and at least part of the valve body 31 protrudes from the outer surface 21a of the end cover 21. The gas-permeable film assembly 40 is arranged on the side of the end cover 21 facing the interior of the housing. The valve body 31 of the one-way valve 30 is arranged on the outer surface 21a, at least part of the valve body 31 protrudes from the outer surface 21a, and at least part of the gas-permeable film assembly 40 is arranged on the inner surface 21b.

According to some embodiments of the present application, the one-way valve 30 is arranged on the end cover 21, the valve body 31 of the one-way valve 30 faces the interior of the housing, and at least part of the valve body 31 protrudes from the inner surface 21b of the end cover 21. The gas-permeable film assembly 40 is arranged on the side of the end cover 21 facing the exterior of the housing. The valve body 31 of the one-way valve 30 is arranged on the outer surface 21a, at least part of the valve body 31 protrudes from the inner surface 21b, and the gas-permeable film assembly 40 is arranged on the side of the one-way valve 30 facing the exterior of the housing.

According to some embodiments of the present application, the gas-permeable film assembly 40 is connected to the one-way valve 30, and the one-way valve 30 is connected to the end cover 21; or the one-way valve 30 is connected to the gas-permeable film assembly 40, and the gas-permeable film assembly 40 is connected to the end cover 21. In this implementation, the one-way valve 30 and the gas-permeable film assembly 40 may be compounded, and then connected to the end cover 21 after compounding, that is, one of the two has a direct connection relationship with the end cover 21, and it is not necessary for both to be directly connected to the end cover 21. In this way, the assembly process can be simplified.

According to some embodiments of the present application, the gas-permeable film assembly 40 and the one-way valve 30 may alternatively be each independently connected to the end cover 21.

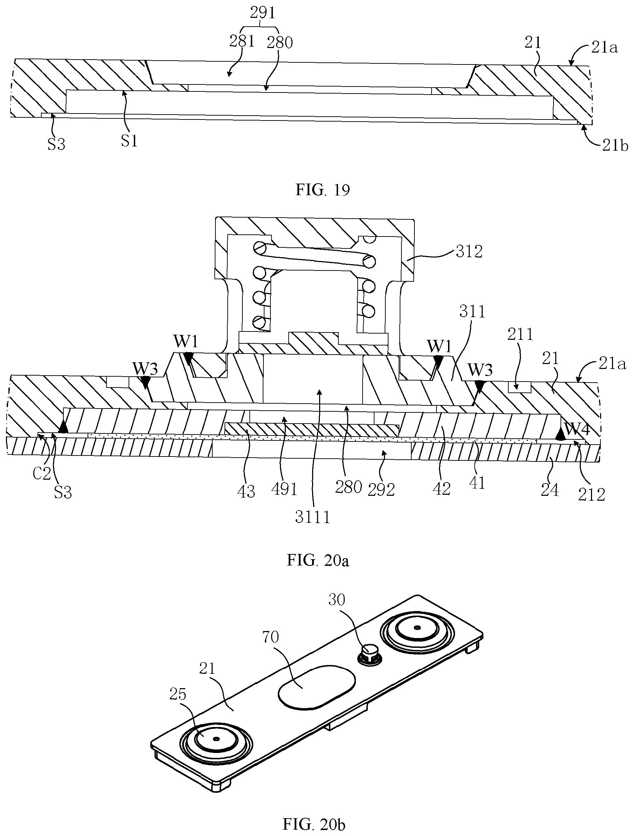

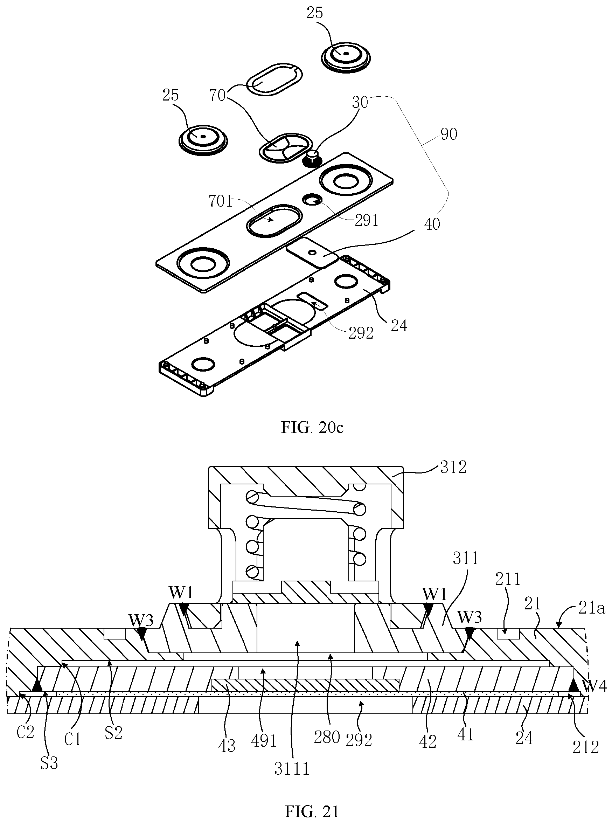

Refer to FIG. 19 and FIG. 20 in combination. FIG. 19 is a schematic diagram of a partial cross-sectional structure of the end cover 21 according to one or more embodiments, FIG. 20a is a schematic cross-sectional structural diagram of the battery cell 20 according to one or more embodiments, FIG. 20b is a front view of the end cover 21 of the battery cell 20 according to one or more embodiments, and FIG. 20c is a schematic diagram of a partial exploded structure of the battery cell 20 according to one or more embodiments. According to some embodiments of the present application, the one-way valve 30 is arranged on the end cover 21, the valve body 31 of the one-way valve 30 faces the exterior of the housing and at least part of the valve body 31 protrudes from the outer surface 21a of the end cover 21, the gas-permeable film assembly 40 is arranged on the side of the end cover 21 facing the interior of the housing; and the one-way valve 30 and the gas-permeable film assembly 40 are each independently connected to the end cover 21.

The end cover 21 is provided with a first exhaust hole 291. The first exhaust hole 291 includes a through hole section 280 and a first hole section 281. The through hole section 280 and the first hole section 281 are arranged along the thickness direction of the end cover 21. The through hole section 280 communicates the interior of the housing with the exterior of the housing. The first hole section 281 is located on the side of the through hole section 280 away from the interior of the housing. The first hole section 281 is recessed relative to the outer surface 21a. The aperture of the first hole section 281 is larger than the aperture of the through hole section 280. The one-way valve 30 is at least partially accommodated in the first hole section 281. The valve body 31 of the one-way valve 30 faces the exterior of the housing and at least part of the valve body 31 protrudes from the outer surface 21a of the end cover 21.

As shown in FIG. 19, the first exhaust hole 291 is a counterbore recessed relative to the outer surface 21a of the end cover 21. When the one-way valve 30 is connected to the end cover 21, part of the structure of the one-way valve 30 may be embedded in the first exhaust hole 291 to reduce the installation height.

According to some embodiments of the present application, the one-way valve 30 is connected to the end cover 21 by welding. As shown in FIG. 20, the valve seat 311 of the one-way valve 30 may be used to weld to the end cover 21; specifically, the valve cover 312 of the one-way valve 30 is connected to the valve seat 311, and the valve seat 311 is welded to the end cover 21. In other implementations, when the one-way valve 30 adopts the embodiment shown in FIG. 11, the valve seat 311 of the one-way valve 30 may alternatively be connected to the valve cover 312, and the valve cover 312 is welded to the end cover 21.

According to some embodiments of the present application, a stress relief groove is provided around the weld mark between the valve cover 312/valve seat 311 and the end cover 21. The stress relief groove may be provided only on the end cover 21, or only on the valve cover 312/valve seat 311, or on both the end cover 21 and the valve cover 312/valve seat 311. As shown in FIG. 20, a second stress relief groove 211 is provided on the end cover 21 around the third weld mark W3 between the valve seat 311 and the end cover 21.

According to some embodiments of the present application, at least part of the gas-permeable film assembly 40 is arranged on the inner surface 21b of the end cover 21, the gas-permeable film assembly 40 includes a gas-permeable film 41 and a metal member 42, the metal member 42 is provided with a first gas-permeable hole 491, the gas-permeable film 41 is arranged on the metal member 42 and covers the first gas-permeable hole 491, and the metal member 42 is connected to the end cover 21.

That is, the gas-permeable film 41 is connected to the end cover 21 through the metal member 42. The metal member 42 may be connected to the end cover 21 by welding, interference fit, or the like. In this way, the connection strength between the gas-permeable film assembly 40 and the end cover 21 can be enhanced.

Still refer to FIG. 19 and FIG. 20. According to some embodiments of the present application, the end cover 21 has an outer surface 21a and an inner surface 21b arranged opposite each other, the outer surface 21a is arranged toward the exterior of the housing, the inner surface 21b is arranged toward the interior of the housing, the end cover 21 has a first recessed platform S1 recessed relative to the inner surface 21b, the first recessed platform S1 is arranged around the first exhaust hole 291, and the gas-permeable film assembly 40 is at least partially accommodated in the first recessed platform S1.

The first recessed platform S1 is formed by recessing from the inner surface 21b of the end cover 21 toward the outer surface 21a of the end cover 21. The end cover 21 may be stamped to form the recessed first recessed platform S1, or the end cover 21 may be etched to remove part of the structure to form the recessed first recessed platform S1. The depth of the first recessed platform S1 relative to the inner surface 21b of the end cover 21 may be set according to the thickness of the gas-permeable film assembly 40. The thickness of the gas-permeable film assembly 40 is the overall thickness including the gas-permeable film 41, the metal member 42, and the backing member 43. As mentioned above, the gas-permeable film 41 and the backing member 43 may be accommodated in the annular platform recessed relative to the surface of the metal member 42 on the metal member 42, that is, the overall thickness of the gas-permeable film assembly 40 may be equal to the thickness of the metal member 42. Preferably, the depth of the first recessed platform S1 relative to the inner surface 21b of the end cover 21 is equal to the thickness of the gas-permeable film assembly 40, so that the gas-permeable film assembly 40 is accommodated in the first recessed platform S1, and the surface of the gas-permeable film assembly 40 facing the interior of the housing is flush with the inner surface 21b of the end cover 21. In this way, the installation height of the gas-permeable film assembly 40 can be reduced, thereby reducing the occupation of the internal space of the housing of the battery cell 20 and improving the space utilization rate inside the housing.

As shown in FIG. 20, the gas-permeable film 41 may be arranged on the side of the metal member 42 facing the interior of the housing; that is, the gas-permeable film 41 is below the metal member 42. Such arrangement can reduce the influence of the working external environment of the battery cell 20 on the gas-permeable film 41. In other implementations, the gas-permeable film 41 may alternatively be arranged on the side of the metal member 42 facing the exterior of the housing, that is, the gas-permeable film 41 is arranged between the metal member 42 and the end cover 21. Such arrangement can reduce the erosion of the gas-permeable film 41 by the electrolyte system.

Refer to FIG. 19 and FIG. 21 in combination. FIG. 21 is a schematic cross-sectional structural diagram of the battery cell 20 according to one or more embodiments. According to some embodiments of the present application, the end cover 21 also has a second recessed platform S2 recessed relative to the inner surface 21b. The second recessed platform S2 is connected to the first recessed platform S1 through a first transition connecting surface 31222aC1. The first recessed platform S1 is closer to the inner surface 21b of the end cover 21 than the second recessed platform S2. The first recessed platform S1 is arranged around the second recessed platform S2. The second recessed platform S2 is arranged around the first exhaust hole 291. The metal member 42 is at least partially accommodated in the first recessed platform S1.

Specifically, the first recessed platform S1 and the second recessed platform S2 are formed by recessing from the inner surface 21b of the end cover 21 toward the outer surface 21a of the end cover 21. The purpose of the first recessed platform S1 is to carry and accommodate the gas-permeable film assembly 40, and its depth of recess relative to the inner surface 21b of the end cover 21 may be set according to the thickness of the gas-permeable film assembly 40 so as to be able to accommodate the gas-permeable film assembly 40. The purpose of the second recessed platform S2 is to form a specific cavity between the gas-permeable film assembly 40 and the end cover 21 so that the gas may be discharged smoothly. The depth of the second recessed platform S2 relative to the first recessed platform S1 (that is, the height of the first transition connecting surface 31222aC1) is set according to requirements.

According to some embodiments of the present application, the gas-permeable film 41 is arranged on the side of the metal member 42 away from the end cover 21, or the gas-permeable film 41 is arranged on the side of the metal member 42 close to the end cover 21.

According to some embodiments of the present application, the orthographic projection of the first gas-permeable hole 491 on the end cover 21 is located in an area in which the through hole section 280 of the first exhaust hole 291 is located. In other implementations, the orthographic projection of the first gas-permeable hole 491 on the end cover 21 may not overlap with the area in which the through hole section 280 of the first exhaust hole 291 is located. That is, in the thickness direction of the end cover 21, the through hole section 280 of the first exhaust hole 291 and the first gas-permeable hole 491 are not arranged correspondingly, so as to facilitate the regulation of exhaust.

Still refer to FIG. 19, FIG. 20, and FIG. 21. According to some embodiments of the present application.

The end cover 21 also has a third recessed platform S3 recessed relative to the inner surface 21b. The third recessed platform S3 is closer to the inner surface 21b of the end cover 21 than the first recessed platform S1. The third recessed platform S3 is arranged around the first recessed platform S1.

The end cover 21 also has a third recessed platform S3 recessed relative to the inner surface 21b. The third recessed platform S3 is connected to the first recessed platform S1 through a second transition connecting surface 31222aC2. The third recessed platform S3 is closer to the inner surface 21b of the end cover 21 than the first recessed platform S1. The third recessed platform S3 is arranged around the first recessed platform S1.

The arrangement of the third recessed platform S3, on the one hand, can accommodate part of the gas-permeable film assembly 40. As shown in FIGs. 20 and 21, the gas-permeable film 41 is arranged on the metal member 42 and protrudes from the surface of the metal member 42. The metal member 42 may be accommodated in the first recessed platform S1, and the gas-permeable film 41 may be accommodated in the third recessed platform S3. On the other hand, when the end cover 21 is assembled with the insulating member 24, space may be left to avoid the weld mark between the metal member 42 and the end cover 21. As shown in FIGs. 20 and 21, a first weld mark avoidance groove 212 is provided between the insulating member 24 and the end cover 21 to avoid the fourth weld mark W4 between the metal member 42 and the end cover 21.

According to some embodiments of the present application, the gas-permeable film assembly 40 is arranged on the side of the end cover 21 facing the interior of the housing. The gas-permeable film assembly 40 includes a gas-permeable film 41, and the gas-permeable film 41 is connected to the end cover 21. That is, the gas-permeable film assembly 40 may only include the gas-permeable film 41, and the gas-permeable film 41 is directly compounded with the end cover 21 and covers the through hole section 280 of the first exhaust hole 291. In this way, when the gas is discharged through the first exhaust hole 291, it first passes through the gas-permeable film 41. As mentioned above, the end cover 21 may be nano-treated, and then the gas-permeable film 41 is compositely connected to the end cover 21. The gas-permeable film 41 may be directly attached to the surface of the end cover 21, or a recessed platform recessed relative to the surface of the end cover 21 may be provided on the end cover 21 to accommodate the gas-permeable film 41, so that the surface of the gas-permeable film 41 is flush with the surface of the end cover 21. In this implementation, by providing the gas-permeable film 41, the battery 100 can discharge the gas inside the battery 100 in a timely manner in a sealed state, and can block the overflow of electrolyte and the entry of external water vapor, thereby protecting the internal environment of the battery cell 20, and effectively improving the reliability of the battery 100. In addition, the gas-permeable film assembly 40 has only one layer of gas-permeable film 41, which has a small thickness and has little impact on the installation height of the battery cell 20. In this implementation, the valve core 32 directly blocks the air inlet 313a of the valve cavity 313, and the air inlet passage includes the flow path of the gas from the interior of the housing of the battery cell 20 to the gas-permeable film assembly 40, to the air inlet 313a of the valve cavity 313, and to the air outlet side of the air inlet 313a.

According to some embodiments of the present application, the positional relationship, the connection method, and the like used when the gas-permeable film assembly 40 is arranged on the side of the end cover 21 facing the interior of the housing are also applicable to the one-way valve 30 shown in FIG. 11. In other words, when the structure of the one-way valve 30 shown in FIG. 12 is selected, the gas-permeable film assembly 40 of the exhaust assembly 90 is arranged on the side of the end cover 21 facing the interior of the housing.

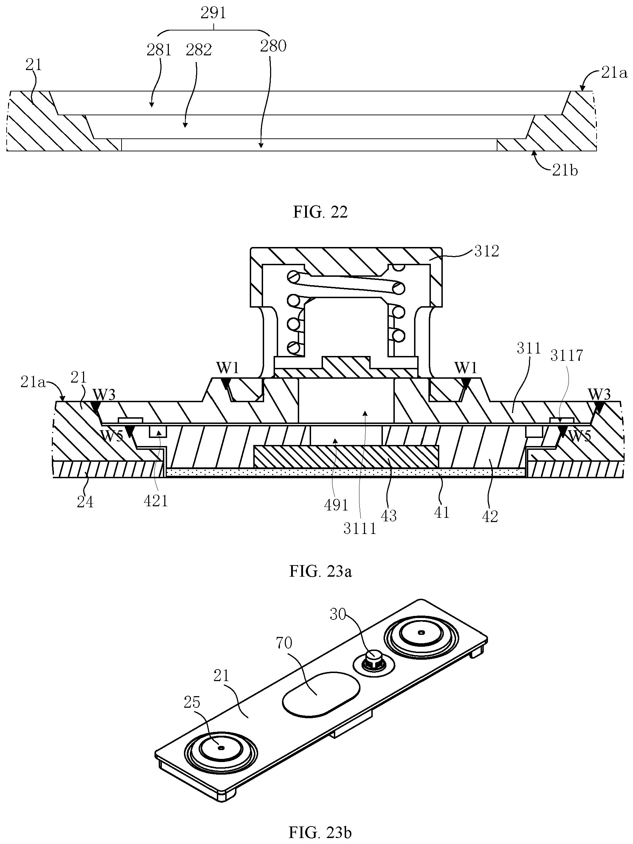

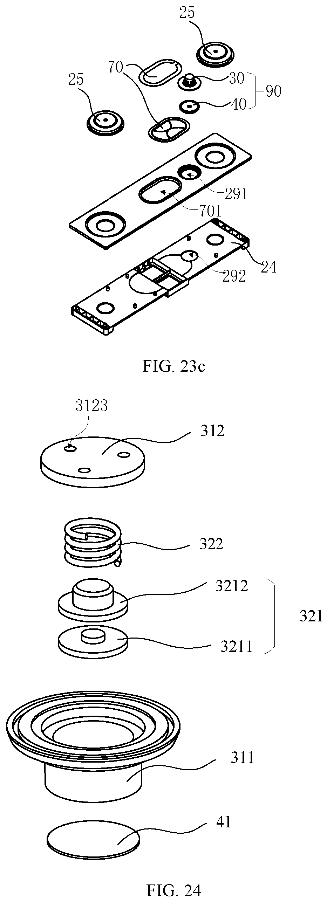

Refer to FIG. 22 and FIG. 23 in combination. FIG. 22 is a schematic diagram of a partial cross-sectional structure of the end cover 21 according to one or more embodiments. FIG. 23a is a schematic cross-sectional structural diagram of the battery cell 20 according to one or more embodiments. FIG. 23b is a front view of the end cover 21 of the battery cell 20 according to one or more embodiments. FIG. 23c is a schematic diagram of a partial exploded structure of the battery cell 20 according to one or more embodiments. According to some embodiments of the present application, the one-way valve 30 is arranged on the end cover 21, the valve body 31 of the one-way valve 30 faces the exterior of the housing, and at least part of the valve body 31 protrudes from the outer surface 21a of the end cover 21. The gas-permeable film assembly 40 is arranged on the side of the end cover 21 facing the exterior of the housing, and the one-way valve 30 and the gas-permeable film assembly 40 are each independently connected to the end cover 21.

As described above, the end cover 21 is provided with a first exhaust hole 291. The first exhaust hole 291 includes a first hole section 281. The one-way valve 30 is at least partially accommodated in the first hole section 281, the valve body 31 of the one-way valve 30 faces the exterior of the housing, and at least part of the valve body 31 protrudes from the outer surface 21a of the end cover 21. In this implementation, the gas-permeable film assembly 40 is arranged on the side of the end cover 21 facing the exterior of the housing, at least part of the gas-permeable film assembly 40 is accommodated in the first exhaust hole 291, and the gas-permeable film assembly 40 is located on the side of the one-way valve 30 facing the end cover 21.

Specifically, the first exhaust hole 291 further includes a second hole section 282. Along the thickness direction of the end cover 21, the second hole section 282 is located between the through hole section 280 and the first hole section 281. The aperture of the second hole section 282 is smaller than the aperture of the first hole section 281. The aperture of the second hole section 282 is larger than the aperture of the through hole section 280. The gas-permeable film assembly 40 is at least partially accommodated in the second hole section 282.

According to some embodiments of the present application, the gas-permeable film assembly 40 includes a gas-permeable film 41 and a metal member 42. The metal member 42 is provided with a first gas-permeable hole 491. The gas-permeable film 41 is arranged on the metal member 42 and covers the first gas-permeable hole 491. The metal member 42 is connected to the end cover 21 by welding.

According to some embodiments of the present application, a stress relief groove is provided around the weld mark between the metal member 42 and the end cover 21. The stress relief groove may be provided only on the end cover 21, or only on the metal member 42, or on both the end cover 21 and the metal member 42. As shown in FIG. 23, a third stress relief groove 421 is provided on the metal member 42 around a fifth weld mark W5 between the metal member 42 and the end cover 21.

According to some embodiments of the present application, a weld mark avoidance groove 611 is provided on the side surface of the one-way valve 30 facing the gas-permeable film assembly 40, and the weld mark avoidance groove 611 covers the weld mark between the metal member 42 and the end cover 21. As shown in FIG. 23, a second weld mark avoidance groove 3117 is provided on the side of the valve seat 311 of the one-way valve 30 facing the gas-permeable film assembly 40 to avoid the fifth weld mark W5 between the metal member 42 and the end cover 21.

According to some embodiments of the present application, the gas-permeable film assembly 40 is arranged on the side of the end cover 21 facing the exterior of the housing. The gas-permeable film assembly 40 includes a gas-permeable film 41, and the gas-permeable film 41 is connected to the end cover 21. That is, the gas-permeable film assembly 40 may only include the gas-permeable film 41, and the gas-permeable film 41 is directly compounded with the end cover 21 and covers the through hole section 280 of the first exhaust hole 291. The gas-permeable film 41 may be pressed between the valve seat 311 of the one-way valve 30 and the end cover 21.

According to some embodiments of the present application, when the one-way valve 30 is arranged on the end cover 21, the valve body 31 of the one-way valve 30 faces the exterior of the housing and at least part of the valve body 31 protrudes from the outer surface 21a of the end cover 21, and the gas-permeable film assembly 40 is arranged on the side of the end cover 21 facing the exterior of the housing. The one-way valve 30 and the gas-permeable film assembly 40 may alternatively be compounded together, and one of them is used to connect to the end cover 21.

According to some embodiments of the present application, the gas-permeable film assembly 40 is arranged on the side of the one-way valve 30 facing the end cover 21, the gas-permeable film assembly 40 is connected to the one-way valve 30, and the one-way valve 30 is connected to the end cover 21. The gas-permeable film assembly 40 may only have the gas-permeable film 41, and the gas-permeable film 41 is attached to the side of the valve seat 311 of the one-way valve 30 facing the end cover 21 and covers the first through hole 3111. The gas-permeable film assembly 40 may alternatively include a gas-permeable film 41 and a metal member 42. The metal member 42 is welded to the valve seat 311 of the one-way valve 30. A recessed platform recessed relative to the surface of the valve seat 311 may be provided on the side of the valve seat 311 facing the end cover 21 to accommodate the gas-permeable film assembly 40. In this way, on the one hand, the installation height can be reduced, and on the other hand, the assembly process can be simplified.

According to some embodiments of the present application, the gas-permeable film assembly 40 may alternatively include a gas-permeable film 41 and a metal member 42. The one-way valve 30 is arranged on the side of the metal member 42 facing the exterior of the housing. The one-way valve 30 is connected to the metal member 42, and the metal member 42 is connected to the end cover 21. In this way, on the one hand, the installation height can be reduced, and on the other hand, the assembly process can be simplified.

According to some embodiments of the present application, the one-way valve 30 may be arranged on the end cover 21, the valve body 31 of the one-way valve 30 faces the interior of the housing, and at least part of the valve body 31 protrudes from the inner surface 21b of the end cover 21, the gas-permeable film assembly 40 is connected to the one-way valve 30, and the one-way valve 30 is connected to the end cover 21. That is, the one-way valve 30 and the gas-permeable film assembly 40 are first compounded and then connected to the end cover 21.

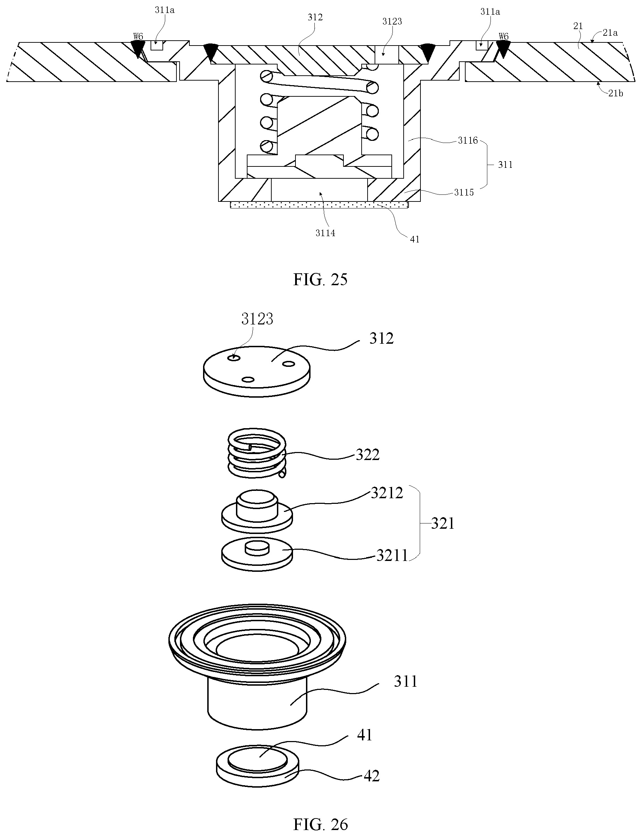

Refer to FIG. 24 and FIG. 25 in combination. FIG. 24 is a schematic diagram of an exploded structure of the exhaust assembly 90 according to one or more embodiments. FIG. 25 is a schematic cross-sectional structural diagram of the exhaust assembly 90 according to one or more embodiments. According to some embodiments of the present application, the gas-permeable film 41 membrane assembly is arranged on the side of the seat bottom wall 3115 of the one-way valve 30 away from the valve cavity 313. The gas-permeable film assembly 40 includes a gas-permeable film 41. The gas-permeable film 41 is connected to the seat bottom wall 3115, and the gas-permeable film 41 covers the fourth through hole 3114. In this implementation, the gas-permeable film assembly 40 is compounded with the one-way valve 30, and the gas-permeable film 41 is attached to the seat bottom wall 3115 of the one-way valve 30, which can reduce the installation height. In addition, only the one-way valve 30 needs to be connected to the end cover 21, which can simplify the assembly process.

As described above, the end cover 21 is provided with a first exhaust hole 291. The first exhaust hole 291 includes a first hole section 281. The one-way valve 30 is at least partially accommodated in the first hole section 281, the valve body 31 of the one-way valve 30 faces the interior of the housing, and at least part of the valve body 31 protrudes from the inner surface 21b of the end cover 21. In this implementation, the valve seat 311 of the one-way valve 30 is connected to the end cover 21 by welding, and a stress relief groove is provided around the weld mark between the valve seat 311 and the end cover 21. The stress relief groove may be provided only on the end cover 21, or only on the valve seat 311, or on both the end cover 21 and the valve seat 311. As shown in FIG. 25, a first stress relief groove 311a is provided on the valve seat 311 around the sixth weld mark W6 between the valve seat 311 and the end cover 21.

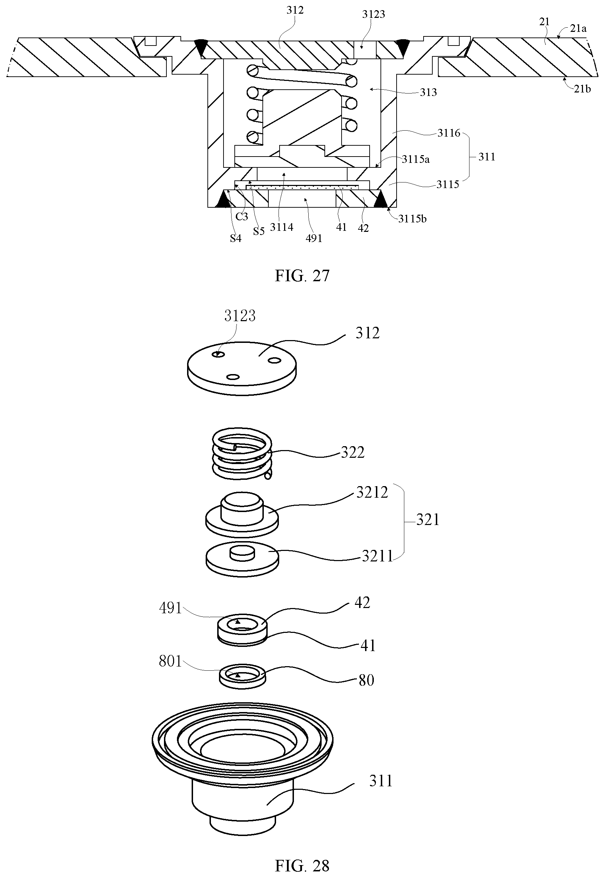

Refer to FIG. 26 and FIG. 27 in combination. FIG. 26 is a schematic diagram of an exploded structure of the exhaust assembly 90 according to one or more embodiments. FIG. 27 is a schematic cross-sectional structural diagram of the exhaust assembly 90 according to one or more embodiments. According to some embodiments of the present application, the gas-permeable film assembly 40 is arranged on the side of the seat bottom wall 3115 of the one-way valve 30 away from the valve cavity 313, where the gas-permeable film assembly 40 includes a gas-permeable film 41 and a metal member 42, the metal member 42 is provided with a first gas-permeable hole 491, the gas-permeable film 41 is arranged on the metal member 42 and covers the first gas-permeable hole 491, and the metal member 42 is connected to the seat bottom wall 3115. In this implementation, the connection strength can be improved by using the metal member 42 to connect to the seat bottom wall 3115.

Still refer to FIG. 27. According to some embodiments of the present application, the seat bottom wall 3115 has an inner wall surface 3115a and an outer wall surface 3115b arranged opposite each other. The inner wall surface 3115a is arranged toward the valve cavity 313. The side of the seat bottom wall 3115 away from the valve cavity 313 has a fourth recessed platform S4 recessed relative to the outer wall surface 3115b of the seat bottom wall 3115. The fourth recessed platform S4 is arranged around the fourth through hole 3114. The gas-permeable film assembly 40 is at least partially accommodated in the fourth recessed platform S4. In this way, the installation height of the gas-permeable film assembly 40 can be reduced, thereby reducing the occupation of the internal space of the housing of the battery cell 20 and improving the space utilization rate inside the housing. The gas-permeable film 41 may be arranged on the side of the metal member 42 facing the interior of the housing; that is, the gas-permeable film 41 is below the metal member 42. Such arrangement can reduce the influence of the working external environment of the battery cell 20 on the gas-permeable film 41. In other implementations, the gas-permeable film 41 may alternatively be arranged on the side of the metal member 42 facing the seat bottom wall 3115, that is, the gas-permeable film 41 is arranged between the metal member 42 and the seat bottom wall 3115. Such arrangement can reduce the erosion of the gas-permeable film 41 by the electrolyte system.

Still refer to FIG. 27. According to some embodiments of the present application, the seat bottom wall 3115 also has a fifth recessed platform S5 recessed relative to the outer wall surface 3115b. The fifth recessed platform S5 is connected to the fourth recessed platform S4 through a third transition connecting surface 31222aC3. The fourth recessed platform S4 is closer to the outer wall surface 3115b of the seat bottom wall 3115 than the fifth recessed platform S5. The fourth recessed platform S4 is arranged around the fifth recessed platform S5. The fifth recessed platform S5 is arranged around the fourth through hole 3114. The metal member 42 is at least partially accommodated in the fourth recessed platform S4. Through such arrangement, a specific cavity is left between the gas-permeable film 41 and the seat bottom wall 3115 to allow the gas to be discharged smoothly. The depth of the fifth recessed platform S5 relative to the fourth recessed platform S4 (that is, the height of the third transition connecting surface 31222aC3) is set according to requirements.

In one implementation, the gas-permeable film 41 is arranged on the side of the metal member 42 facing the seat bottom wall 3115, or the gas-permeable film 41 is arranged on the side of the metal member 42 away from the valve cavity 313. It can facilitate the regulation of exhaust.

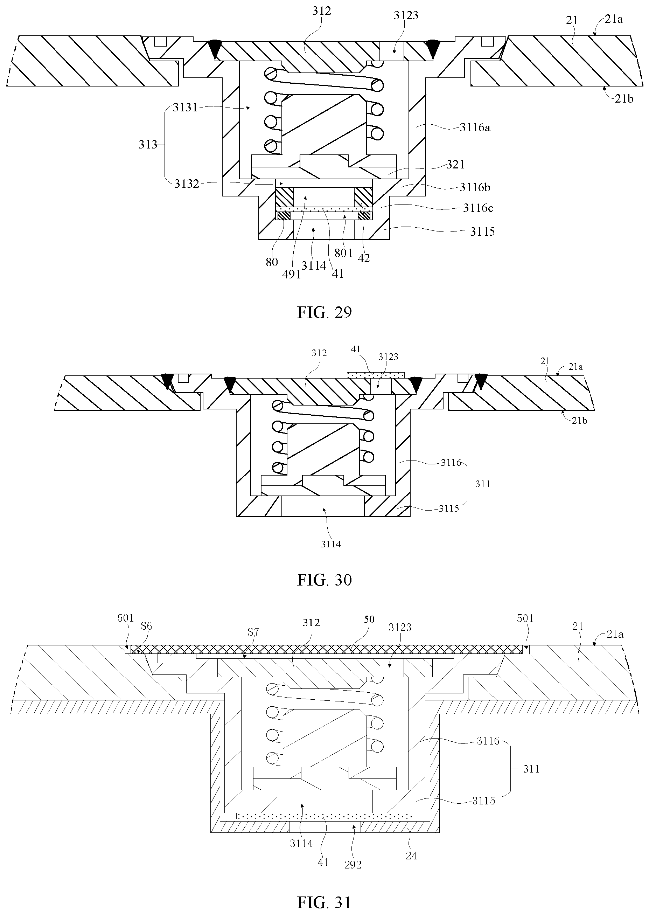

Refer to FIG. 28 and FIG. 29 in combination. FIG. 28 is a schematic diagram of an exploded structure of the exhaust assembly 90 according to one or more embodiments. FIG. 29 is a schematic cross-sectional structural diagram of the exhaust assembly 90 according to one or more embodiments. According to some embodiments of the present application, the gas-permeable film assembly 40 is arranged on the side of the seat bottom wall 3115 facing the valve cavity 313.

The valve cavity 313 includes a first cavity 3131 and a second cavity 3132 that are in communication with each other. The second cavity 3132 is closer to the seat bottom wall 3115. Along the direction parallel to the seat bottom wall 3115, the cross-sectional area of the first cavity 3131 is larger than the cross-sectional area of the second cavity 3132. The valve core 32 is located in the first cavity 3131, and the gas-permeable film assembly 40 is located in the second cavity 3132. Such arrangement can make the gas pass through the gas-permeable film assembly 40 first and then to the valve core 32 after entering the valve cavity 313, which can block the overflow of electrolyte.

Further, the seat side wall 3116 includes a first side wall portion 3116a, a second side wall portion 3116b, and a third side wall portion 3116c. The first side wall portion 3116a and the second side wall portion 3116b enclose the first cavity 3131. The third side wall portion 3116c and the seat bottom wall 3115 enclose the second cavity 3132. The blocking member 321 of the valve core 32 abuts against the second side wall portion 3116b. In this implementation, the second cavity 3132 is an open cavity to communicate with the first cavity 3131. The blocking member 321 of the valve core 32 located in the first cavity 3131 abuts against the second side wall portion 3116b and can use the blocking member 321 to block the second cavity 3132. When the internal air pressure of the battery cell 20 is low, the gas cannot enter the first cavity 3131 from the second cavity 3132. When the internal air pressure of the battery cell 20 is high, the gas enters the second cavity 3132, pushes open the blocking member 321 and enters the first cavity 3131, and is then discharged from the air outlet 313b of the valve cavity 313. In this implementation, the valve core 32 blocks the second cavity 3132 of the valve cavity 313, and the air inlet passage includes the flow path of the gas from the interior of the housing of the battery cell 20 to the air inlet 313a of the valve cavity 313, to the air outlet side of the air inlet 313a, to the gas-permeable film assembly 40, and to the top of the second cavity 3132 of the valve cavity 313.

Still refer to FIG. 29. According to some embodiments of the present application, the gas-permeable film assembly 40 is located in the second cavity 3132, so that when the gas passes through the second cavity 3132 and is discharged from the first cavity 3131, it first passes through the gas-permeable film assembly 40.

The gas-permeable film assembly 40 may only include the gas-permeable film 41. The gas-permeable film 41 is attached to the side of the seat bottom wall 3115 facing the valve cavity 313 and covers the fourth through hole 3114. In this case, the gas entering from the fourth through hole 3114 passes through the gas-permeable film 41, blocking the electrolyte from entering the second cavity 3132.

In another embodiment, the gas-permeable film assembly 40 may alternatively include a gas-permeable film 41 and a metal member 42. The gas-permeable film 41 is arranged on the metal member 42, and the metal member 42 is connected to the wall of the second cavity 3132 (the third side wall portion 3116c), which can improve the stability of the connection and prevent the gas-permeable film 41 from being displaced by the gas.

The gas-permeable film 41 may be arranged on the side of the metal member 42 facing the seat bottom wall 3115, so that the metal member 42 has a supporting force on the gas-permeable film 41 to prevent the gas-permeable film 41 from being displaced by the gas. In other implementations, the gas-permeable film 41 may alternatively be arranged on the side of the metal member 42 away from the seat bottom wall 3115.

Still refer to FIG. 29. According to some embodiments of the present application, when the gas-permeable film 41 is arranged on the side of the metal member 42 facing the seat bottom wall 3115, the surface of the metal member 42 away from the gas-permeable film 41 is lower than the surface of the second side wall portion 3116b. Through such arrangement, there may be a specific cavity between the metal member 42 and the blocking member 321, which is beneficial to the discharge of gas.

Still refer to FIG. 29. According to some embodiments of the present application, the battery cell 20 further includes a sealing ring 80, and the sealing ring 80 is arranged between the gas-permeable film assembly 40 and the seat bottom wall 3115. Through such arrangement, the sealing performance between the gas-permeable film assembly 40 and the seat bottom wall 3115 can be improved.

Further, the sealing ring 80 is arranged between the gas-permeable film 41 and the seat bottom wall 3115. The sealing ring 80 is arranged around the fourth through hole 3114. The sealing ring 80 is provided with a second gas-permeable hole 801. The aperture of the second gas-permeable hole 801 is larger than the aperture of the fourth through hole 3114. The gas-permeable film 41 covers the second gas-permeable hole 801. Through such arrangement, the sealing performance between the gas-permeable film 41 and the seat bottom wall 3115 can be improved, and the sealing ring 80 will not block the flow of gas.

According to some embodiments of the present application, the metal member 42 is connected to the third side wall portion 3116c by welding; or the metal member 42 is in interference fit with the third side wall portion 3116c. In this way, the assembly of the exhaust assembly 90 is facilitated.

According to some embodiments of the present application, the gas-permeable film 41 is arranged at an interval from the valve core 32. As shown in FIG. 29, there is a space between the gas-permeable film 41 and the valve core 32 with the metal member 42 and part of the second cavity 3132. As shown in FIG. 27, there is a space between the gas-permeable film 41 and the valve core 32 with the fifth recessed platform and the hole depth of the fourth through hole 3114. As shown in FIG. 25, there is a space between the gas-permeable film 41 and the valve core 32 with the hole depth of the fourth through hole 3114, that is, the blocking member 321 does not extend into the fourth through hole 3114, or even if the blocking member 321 partially extends into the fourth through hole 3114, it will not extend to the end of the fourth through hole 3114 away from the valve cavity 313. By arranging the gas-permeable film 41 at an interval from the valve core 32 to form a cavity between the two, it is beneficial for the gas passing through the gas-permeable film 41 to apply force to the valve core 32.

According to some embodiments of the present application, the positional relationship, the connection method, and the like used when the aforementioned gas-permeable film assembly 40 is arranged on the side of the seat bottom wall 3115 facing the valve cavity 313 are also applicable to the scheme when the one-way valve 30 is arranged on the end cover 21, the valve body 31 of the one-way valve 30 faces the exterior of the housing, and at least part of the valve body 31 protrudes from the outer surface 21a of the end cover 21. In other words, when the structure of the one-way valve 30 shown in FIG. 6, 11, or 12 is used, the gas-permeable film assembly 40 of the exhaust assembly 90 is arranged on the side of the valve seat 311/end cover 21 facing the valve cavity 313.

Refer to FIG. 30. FIG. 30 is a schematic cross-sectional structural diagram of the exhaust assembly 90 according to one or more embodiments. According to some embodiments of the present application, the one-way valve 30 is arranged on the end cover 21, the valve body 31 of the one-way valve 30 faces the interior of the housing, and at least part of the valve body 31 protrudes from the inner surface 21b of the end cover 21. The gas-permeable film assembly 40 is arranged on the side of the end cover 21 facing the exterior of the housing, and the gas-permeable film assembly 40 covers the exhaust port of the one-way valve 30.

The gas-permeable film assembly 40 may only include the gas-permeable film 41. The gas-permeable film 41 is attached to the side of the valve cover 312 facing the exterior of the housing and covers the fifth through hole 3123. In this case, the gas discharged from the fifth through hole 3123 passes through the gas-permeable film 41 to block the overflow of electrolyte. In other implementations, the gas-permeable film 41 may alternatively be attached to the side of the valve cover 312 facing the interior of the housing and cover the fifth through hole 3123.

In another embodiment, the gas-permeable film assembly 40 may alternatively include a gas-permeable film 41 and a metal member 42. The gas-permeable film 41 is arranged on the metal member 42, and the metal member 42 is connected to the valve cover 312, which can improve the stability of the connection and prevent the gas-permeable film 41 from being displaced by the gas.

In yet another embodiment, when the air outlet 313b of the one-way valve 30 is the first exhaust gap 313c and/or the second exhaust gap, the gas-permeable film assembly 40 includes a gas-permeable film 41 and a metal member 42, and the metal member 42 is connected to the end cover 21, so that the gas-permeable film 41 covers the first exhaust gap 313c and/or the second exhaust gap.

Refer to FIG. 31. FIG. 31 is a schematic cross-sectional structural diagram of the battery cell 20 according to one or more embodiments. According to some embodiments of the present application, the battery cell 20 further includes a shielding member 50, the shielding member 50 is installed on the end cover 21, and the shielding member 50 is located on the side of the end cover 21 facing the exterior of the housing, and shields the exhaust assembly 90.

In this implementation, the one-way valve 30 of the exhaust assembly 90 is arranged on the end cover 21, and the valve body 31 of the one-way valve 30 protrudes from the inner surface 21b of the end cover 21. The gas-permeable film assembly 40 is arranged on the side of the end cover 21 facing the interior of the housing. The shielding member 50 can shield the exhaust assembly 90. The shielding member 50 can play a specific protective and shielding role on the exhaust assembly 90. On the one hand, it can reduce the phenomenon of wear or damage of the exhaust assembly 90 in the external environment, and can reduce the risk of impurities or particles in the external environment entering the exhaust assembly 90, which is beneficial to improving the service life of the exhaust assembly 90. On the other hand, covering the exhaust assembly 90 with the shielding member 50 can improve the aesthetics of the outer surface 21a of the battery cell 20. On the other hand, it is convenient to connect other components such as detection elements on the side of the shielding member 50 away from the exhaust assembly 90, so as to reduce the interference on connection of other components such as detection elements in the area in which the exhaust assembly 90 is arranged on the end cover 21.

According to some embodiments of the present application, the end cover 21 includes an outer surface 21a and an inner surface 21b arranged opposite each other. The outer surface 21a is arranged toward the exterior of the housing, and the inner surface 21b is arranged toward the interior of the housing. A recessed platform recessed relative to the outer surface 21a of the end cover 21 may be provided on the end cover 21 to accommodate the shielding member 50. Specifically, the outer surface 21a of the end cover 21 may be provided with a sixth recessed platform S6 recessed relative to the outer surface 21a of the end cover 21. The sixth recessed platform S6 is arranged around the first exhaust hole 291. The one-way valve 30 and the gas-permeable film assembly 40 are at least partially accommodated in the first exhaust hole 291. The sixth recessed platform S6 is closer to the outer surface 21a than the first exhaust hole 291. The shielding member 50 is at least partially accommodated in the sixth recessed platform S6.

At least part of the shielding member 50 may be accommodated in the sixth recessed platform S6, that is, the shielding member 50 may be entirely located in the sixth recessed platform S6, or only partially located in the sixth recessed platform S6. For example, in FIG. 31, the shielding member 50 is entirely located in the sixth recessed platform S6. In other words, the shielding member 50 has a first surface facing the exterior of the housing, and the height of the first surface is lower than or flush with the outer surface 21a of the end cover 21.

By providing the sixth recessed platform S6 and accommodating at least part of the shielding member 50 in the sixth recessed platform S6, on the one hand, the space occupied by the shielding member 50 in the thickness direction of the end cover 21 can be reduced, which is beneficial to optimizing the volume of the battery cell 20. On the other hand, the sixth recessed platform S6 can play a specific positioning and limiting role on the shielding member 50, which is beneficial to reducing the assembly difficulty of connecting the shielding member 50 to the end cover 21.

According to some embodiments of the present application, the shielding member 50 may be installed on the end cover 21 by welding, interference fit, bolt connection, snap connection, or bonding.

According to some embodiments of the present application, the shielding member 50 covers the valve cover 312 of the one-way valve 30. The side of the valve cover 312 facing the shielding member 50 is provided with a seventh recessed platform S7. The seventh recessed platform S7 is arranged around the fifth through hole 3123, which can leave a first discharge passage between the shielding member 50 and the valve cover 312, which is beneficial to the discharge of gas.

Still refer to FIG. 31. A first discharge passage is formed between the shielding member 50 and the end cover 21. The first discharge passage communicates the air outlet 313b of the one-way valve 30 with the exterior of the battery cell 20.

The first discharge passage includes a third exhaust gap 501. The third exhaust gap 501 is formed between the shielding member 50 and the recessed platform side surface of the sixth recessed platform S6. The third exhaust gap 501 is configured to communicate the air outlet 313b and the exterior of the housing.

The third exhaust gap 501 is configured to communicate the air outlet 313b and the exterior of the housing. The third exhaust gap 501 may be in direct communication with the air outlet 313b. For example, at least part of the projection of the third exhaust gap 501 in the thickness direction X of the wall portion is located in the first exhaust hole 291, so that the air outlet 313b of the one-way valve 30 arranged in the first exhaust hole 291 may be in direct communication with the third exhaust gap 501. Certainly, the third exhaust gap 501 may alternatively be in indirect communication with the air outlet 313b. For example, the exhaust passage may alternatively include a fourth exhaust gap. The fourth exhaust gap is formed between the shielding member 50 and the recessed platform bottom surface of the sixth recessed platform. The fourth exhaust gap communicates the third exhaust gap 501 and the air outlet 313b of the one-way valve 30.

By providing the third exhaust gap 501, the gas discharged by the one-way valve 30 may be discharged to the exterior of the housing through the third exhaust gap 501. The battery cell 20 with such structure does not need to have holes on the shielding member 50, which is beneficial to reducing the processing difficulty and can improve the aesthetics of the appearance of the battery cell 20.

In one implementation, the side surface of the shielding member 50 abuts and is connected to the recessed platform side surface of the sixth recessed platform. A protrusion (or groove) may be provided on the side surface of the shielding member 50, so that a third exhaust gap 501 is formed between the side surface of the shielding member 50 and the recessed platform side surface of the sixth recessed platform.

In one implementation, the first discharge passage further includes a fourth exhaust gap (not shown in the figure). The fourth exhaust gap is formed between the shielding member 50 and the recessed platform bottom surface of the sixth recessed platform. The fourth exhaust gap communicates the third exhaust gap 501 and the air outlet 313b.

The shielding member 50 has a second surface facing the end cover 21. A recessed groove may be provided on the second surface. A fourth exhaust gap is formed between the surface of the shielding member 50 facing the end cover 21 and the recessed platform bottom surface of the sixth recessed platform.

Refer to FIG. 32. FIG. 32 is a schematic diagram of an exploded structure of a battery cell 20 according to one or more embodiments. According to some embodiments of the present application, the battery cell 20 further includes a protective patch 60. The protective patch 60 is arranged on the side of the end cover 21 facing the exterior of the housing. That is, the protective patch 60 is arranged on the outer surface 21a of the end cover 21 to play a specific protective role on the end cover 21. The material of the protective patch 60 may be various, such as rubber, silicone or plastic.

According to some embodiments of the present application, the protective patch 60 is provided with a first avoidance hole 601 penetrating the protective patch 60, and the first avoidance hole 601 is configured to allow the one-way valve 30 to pass through.

According to some embodiments of the present application, in the embodiment in which the electrode terminal 25 is provided on the end cover 21, as shown in FIG. 32, the protective patch 60 is provided with a second avoidance hole 602 at a position corresponding to the electrode terminal 25. The second avoidance hole 602 penetrates both sides of the protective patch 60. The second avoidance hole 602 is configured to allow the electrode terminal 25 to pass through to avoid the electrode terminal 25. For example, two electrode terminals 25 are provided on the end cover 21. Correspondingly, the protective patch 60 is provided with two second avoidance holes 602, and each second avoidance hole 602 is configured to allow one electrode terminal 25 to pass through.

In the embodiment in which the pressure relief mechanism 70 is provided on the end cover 21, as shown in FIG. 32, the protective patch 60 is provided with a third avoidance hole 603 at a position corresponding to the pressure relief mechanism 70. The third avoidance hole 603 penetrates both sides of the protective patch 60. The orthographic projection of the pressure relief mechanism 70 on the protective patch 60 is located in the third avoidance hole 603, so that the third avoidance hole 603 can avoid the pressure relief mechanism 70.

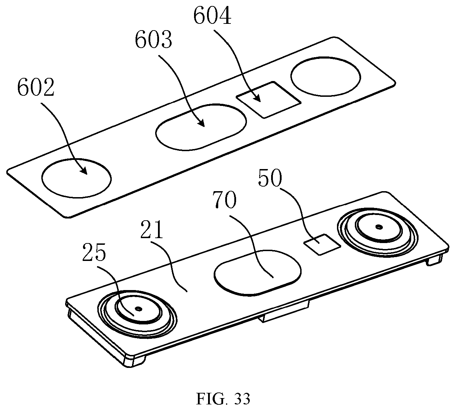

Refer to FIG. 33. FIG. 33 is a schematic diagram of a partial exploded structure of a battery cell 20 according to one or more embodiments. According to some embodiments of the present application, the protective patch 60 is used to cover the shielding member 50. The protective patch 60 is provided with an information collection hole 604 penetrating the protective patch 60. The information collection hole 604 plays the role of exposing part of the end cover 21, so as to facilitate provision of an information code or connection of a detection element for sampling on the end cover 21. The orthographic projection of the information collection hole 604 on the end cover 21 is located in the shielding member 50. That is, the information collection hole 604 is arranged corresponding to the shielding member 50, so that the area exposed by the information collection hole 604 is the surface of the shielding member 50, and then the information code or the detection element for sampling can be provided on the shielding member 50.

According to some embodiments of the present application, the structure in which the protective patch 60 is arranged on the end cover 21 may be various. The protective patch 60 may be arranged on the end cover 21 by bonding, adsorption, or the like.

When the bonding method is used, the adhesive layer 610 bonds the protective patch 60 and the end cover 21. The adhesive layer 610 is provided with an avoidance groove 611, and a second discharge passage is formed between the avoidance groove 611 and the end cover 21.

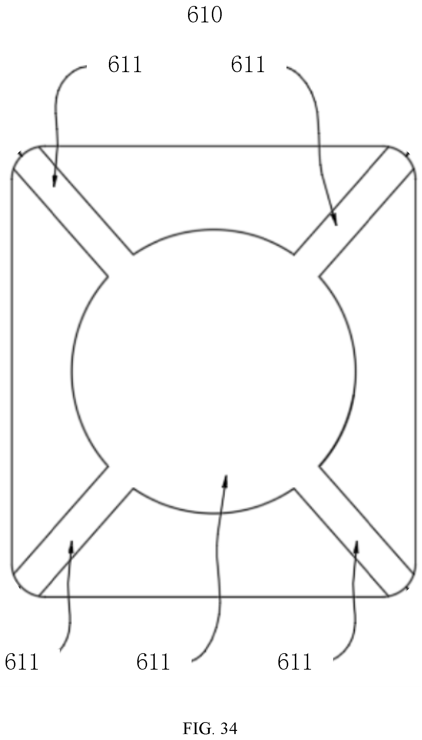

Refer to FIG. 34. FIG. 34 is a bottom view of the adhesive layer of the protective patch 60 according to one or more embodiments. An avoidance groove 611 is provided on the adhesive layer 610. Further, the orthographic projection of the air outlet 313b on the protective patch 60 is located in the area of the avoidance groove 611.

Still refer to FIG. 31. According to some embodiments of the present application, the battery cell 20 further includes an insulating member 24. The insulating member 24 is arranged on the side of the end cover 21 facing the interior of the housing; that is, an insulating member 24 may be further provided on the inner side of the end cover 21. The insulating member 24 may be used to isolate the electrical connection components in the shell 22 from the end cover 21 to reduce the risk of short circuit. For example, the insulating member 24 may be plastic, rubber, or the like.

The insulating member 24 includes a body portion 242. The body portion 242 is made of a material that is not in contact with the electrode assembly 23 inside the battery 100 to form a short circuit. The body portion 242 is used to protect the end cover 21 from being directly exposed to the electrode assembly 23 in the height direction to avoid contact with the electrode assembly 23 to form a short circuit.

The insulating member 24 is provided with a second exhaust hole 292 penetrating the body portion 242 of the insulating member 24, so that the gas inside the battery 100 enters the exhaust assembly 90 area through the first exhaust hole 291. Further, the second exhaust hole 292 is in communication with the first exhaust hole 291 to make the exhaust smoother.

According to some embodiments of the present application, when the gas-permeable film assembly 40 is arranged on the side of the end cover 21 facing the exterior of the housing, and/or when the valve body 31 of the one-way valve 30 protrudes from the inner surface 21b of the end cover 21, the exhaust assembly 90 causes the end cover 21 to have a protruding area facing the interior of the housing. In this case, the body portion 242 of the insulating member 24 may be provided with an accommodating portion recessed relative to the surface of the insulating member 24 to accommodate the exhaust assembly 90.

According to some embodiments of the present application, referring to FIG. 1, FIG. 20c, and FIG. 23c, the battery cell 20 further includes a pressure relief mechanism 70. The pressure relief mechanism 70 is arranged on the housing. The pressure relief mechanism 70 is configured to be actuated to relieve the internal pressure of the battery cell 20 when the battery cell 20 is in thermal runaway.

The pressure relief mechanism 70 is arranged on the housing, which may be arranged on the end cover 21 or on the shell 22. For example, in FIG. 1, the pressure relief mechanism 70 is arranged on the end cover 21.

The pressure relief mechanism 70 is configured to be actuated to relieve the internal pressure of the battery cell 20 when the battery cell 20 is in thermal runaway, that is, when thermal runaway occurs inside the battery cell 20, the pressure relief mechanism 70 may be actuated and opened to relieve the gas generated by the thermal runaway inside the battery cell 20. It should be noted that when the battery cell 20 is in thermal runaway, the gas inside the housing of the battery cell 20 may increase rapidly to open the pressure relief mechanism 70 for pressure relief, while the gas generated inside the housing of the battery cell 20 during normal use may be discharged through the exhaust assembly 90, but cannot open the pressure relief mechanism 70.

Optionally, the pressure relief mechanism 70 and the housing may be an integrally formed structure or a separate structure. If the pressure relief mechanism 70 and the housing are an integrally formed structure, the pressure relief mechanism 70 is an area on the housing with a weak structure, for example, an area on the housing with a score groove. If the pressure relief mechanism 70 and the housing are separate structures, the pressure relief mechanism 70 may be connected to the housing by welding, hot melting, injection molding, or bonding. For example, in FIG. 20c and FIG. 23c, the pressure relief mechanism 70 and the housing are separate structures, and the pressure relief mechanism 70 is arranged on the end cover 21 of the housing. The pressure relief mechanism 70 may be a pressure relief component such as an explosion-proof valve, an explosion-proof sheet, a pressure relief valve, or a safety valve.

For example, in FIG. 1, both the electrode terminal 25 and the pressure relief mechanism 70 are arranged on the end cover 21. The battery cell 20 with such structure can reduce the space occupied by the battery cell 20. Certainly, in other embodiments, the electrode terminal 25 and the pressure relief mechanism 70 may alternatively be arranged on different walls of the housing. The battery cell 20 with such structure can make the electrode terminal 25 used for outputting or inputting electric energy of the battery cell 20 and the pressure relief mechanism 70 used for relieving internal pressure be far away from each other, so as to reduce the use risk of the battery cell 20. For example, the pressure relief mechanism 70 is arranged on the shell 22, and the electrode terminal 25 is arranged on the end cover 21.

By providing the exhaust assembly 90, when gas is generated inside the housing during the normal use of the battery cell 20, the gas may be discharged out of the housing through the exhaust assembly 90, so as to alleviate the phenomenon that the pressure relief mechanism 70 is actuated prematurely to relieve pressure due to the increase of the internal air pressure of the battery cell 20 before the battery cell 20 is in thermal runaway, thereby effectively improving the use stability of the battery cell 20 and improving the service life and use reliability of the battery cell 20.

In some embodiments, the exhaust assembly 90 and the pressure relief mechanism 70 may be arranged on a same wall of the housing. For example, both the exhaust assembly 90 and the pressure relief mechanism 70 are arranged on the end cover 21. The battery cell 20 with such structure is beneficial to reducing the space occupied by the battery cell 20 and improving the energy density of the battery cell 20.

In some embodiments, the exhaust assembly 90 and the pressure relief mechanism 70 may be arranged on different walls of the housing. For example, the exhaust assembly 90 is arranged on the shell 22, and the pressure relief mechanism 70 is arranged on the end cover 21. The battery cell 20 with such structure can reduce the mutual influence between the exhaust assembly 90 and the pressure relief mechanism 70, and may be suitable for different use environments. It is preferred that the exhaust assembly 90 and the pressure relief mechanism 70 are arranged on the wall at the top when the battery 100 is in a placed state, so as to facilitate exhaust.

In some embodiments, the actuation pressure of the pressure relief mechanism 70 is greater than the opening pressure of the one-way valve 30, that is, the pressure of the gas inside the housing to open the pressure relief mechanism 70 is greater than the pressure of the gas inside the housing to open the one-way valve 30. When the battery cell 20 is in thermal runaway, the gas inside the housing of the battery cell 20 may increase rapidly to open the pressure relief mechanism 70 for pressure relief, while the gas generated inside the housing 21 of the battery cell 20 during normal use can open the one-way valve 30 when reaching the threshold, but cannot open the pressure relief mechanism 70.

In some embodiments, the exhaust rate of the one-way valve 30 is less than the exhaust rate of the pressure relief mechanism 70.

By setting the exhaust rate of the one-way valve 30 to be less than the exhaust rate of the pressure relief mechanism 70, when the battery cell 20 is in thermal runaway, the phenomenon that the pressure relief mechanism 70 cannot be actuated and opened due to the excessively fast exhaust of the one-way valve 30 can be alleviated, so that the pressure relief mechanism 70 can be actuated and stably relieve the internal pressure of the battery cell 20 when the battery cell 20 is in thermal runaway, making it easier to relieve pressure, thereby helping to reduce the risk of fire and explosion of the battery cell 20 during thermal runaway.

The end cover 21 is provided with a pressure relief hole 701, and the pressure relief hole 701 is in communication with the pressure relief mechanism 70. The aperture of the pressure relief hole 701 may be larger than the aperture of the first exhaust hole 291 communicating with the exhaust assembly 90, so that the exhaust rate of the pressure relief mechanism 70 is greater than the exhaust rate of the exhaust assembly 90.

In some embodiments, in the exhaust assembly 90, the one-way valve 30 and the gas-permeable film assembly 40 are arranged in series, the gas is discharged through both the gas-permeable film assembly 40 and the one-way valve 30, and the exhaust rate depends on a gas-permeable rate of the gas-permeable film 41. The gas-permeable rate of the gas-permeable film 41 is 3-10 mL/day, and may be 3-4 mL/day, 5-8 mL/day, or 9-10 mL/day. By setting the exhaust rate of the gas-permeable film 41 to 3-10 mL/day, when the battery cell 20 is in thermal runaway, the phenomenon that the pressure relief mechanism 70 cannot be actuated and opened due to the excessively fast exhaust of the exhaust assembly 90 can be alleviated, so that the pressure relief mechanism 70 can be actuated and stably relieve the internal pressure of the battery cell 20 when the battery cell 20 is in thermal runaway, thereby helping to reduce the risk of fire and explosion of the battery cell 20 during thermal runaway. In addition, the air tightness of the system is also considered to prevent the exhaust rate from being too fast, resulting in poor air tightness of the system. In this way, during discharge of the gas, the air tightness of the system of the battery 100 is maintained.

For the test method of the exhaust rate of the gas-permeable film 41, refer to GB/T1038-2000.

In some embodiments, the end cover 21 is provided with a liquid injection hole, and the first exhaust hole 291 used to assemble the one-way valve 30 may be a liquid injection hole; that is, after the battery cell 20 is filled with liquid, the one-way valve 30 is assembled on the liquid injection hole, and the one-way valve 30 is used to replace the sealing structure of the original liquid injection hole. By providing the first exhaust hole 291 for assembling the one-way valve 30 as a liquid injection hole, liquid can be injected into the housing through the first exhaust hole 291 before the one-way valve 30 is assembled in the first exhaust hole 29128, with no need to separately open a liquid injection hole on the housing, which is beneficial to improving the production efficiency of the battery cell 20 and reducing the manufacturing cost of the battery cell 20. The first exhaust hole 291 may alternatively be arranged at an interval from the liquid injection hole.

In some embodiments, the battery cell 20 is an alkali metal battery 100, and for example, may be a sodium metal battery 100, a lithium metal battery 100, a magnesium metal battery 100, or the like. The alkali metal battery 100 is used in conjunction with the exhaust assembly 90, which can discharge, in a timely manner, the gas generated by the alkali metal battery 100 during normal operation, improving the service life of the alkali metal battery 100.

The electrode assembly 23 is mainly formed by winding or stacking a positive electrode sheet and a negative electrode sheet, and a separator is usually provided between the positive electrode sheet and the negative electrode sheet. The parts of the positive electrode sheet and the negative electrode sheet with active materials form the main body of the electrode assembly 23, and the parts of the positive electrode sheet and the negative electrode sheet without active materials each form a tab. The positive tab and the negative tab may be located together at one end of the main body or at both ends of the main body respectively. During the charging and discharging process of the battery 100, the positive electrode active material and the negative electrode active material react with the electrolyte, and the tabs are connected to the electrode terminals 25 to form a current loop.

In one implementation, the positive electrode sheet includes a positive current collector and a positive active layer arranged on at least one side of the positive current collector, and the positive active layer includes a positive electrode active material.

As an example, the positive current collector has two surfaces opposite in its own thickness direction, and the positive active layer may be arranged on any one or both of the two opposite surfaces of the positive current collector.

In one implementation, the positive current collector may be a metal foil or a composite current collector. For example, as a metal foil, an aluminum foil may be used. The composite current collector may include a polymer material base layer and a metal layer formed on at least one surface of the polymer material base layer. The composite current collector may be obtained by forming a metal material (aluminum, aluminum alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In one implementation, the positive electrode material includes one or more of polyanion positive electrode material, phosphate positive electrode material, sulfate positive electrode material, silicate positive electrode material, and borate positive electrode material. For example, in the positive electrode active material of a sodium battery 100, the polyanion compound includes compounds based on phosphoric acid and fluorophosphoric acid. Compounds based on phosphoric acid include Nax1Fey1Pm1On1, for example, sodium iron phosphate with a higher capacity or sodium iron pyrophosphate with a higher voltage platform. The polyanion compound includes one or more of sodium vanadium trifluorophosphate Na3V2(PO4)2F3, sodium vanadium fluorophosphate NaVPO4F, sodium vanadium phosphate Na3V2(PO4)3, Na4Fe3(PO4)2P2O7, NaFePO4, and Na3V2(PO4)3. The Prussian blue compound is NaxMM(CN)6, where M and M are one or more of Fe, Mn, Co, Ni, Cu, Zn, Cr, Ti, V, Zr, and Ce, where 0<x≤2. The positive electrode active material in the lithium metal battery 100 may include at least one of lithium nickel cobalt manganese oxide, lithium nickel cobalt aluminum oxide, lithium iron phosphate, lithium cobalt oxide, lithium manganese oxide, or lithium manganese iron phosphate.

In one implementation, the negative electrode sheet includes a negative current collector and a negative active layer arranged on at least one surface of the negative current collector, and the negative active layer includes a negative electrode active material. In this implementation, the battery cell 20 is an ion battery 100. During the charging and discharging process of the battery 100, active ions (such as Li+ or Na+) are intercalated/deintercalated in the negative electrode active material.

As an example, the negative current collector has two surfaces opposite in its own thickness direction, and the negative active layer may be arranged on any one or both of the two opposite surfaces of the negative current collector.

In one implementation, the negative current collector may be a metal foil or a composite current collector. For example, as a metal foil, a copper foil may be used. The composite current collector may include a polymer material base layer and a metal layer formed on at least one surface of the polymer material substrate. The composite current collector may be obtained by forming a metal material (copper, copper alloy, nickel, nickel alloy, titanium, titanium alloy, silver, silver alloy, or the like) on a polymer material substrate (such as polypropylene (PP), polyethylene terephthalate (PET), polybutylene terephthalate (PBT), polystyrene (PS), or polyethylene (PE)).

In one implementation, the negative electrode active material may include one or more of silicon-based material, silicon-carbon material, carbon material, and selenium-based material. Specifically, it includes one or more of artificial graphite, natural graphite, hard carbon, soft carbon, silicon-based material, and selenium-based material. The silicon-based material may be selected from one or more of elemental silicon, silicon oxide (such as silicon monoxide), silicon-carbon composite, silicon-nitrogen composite, and silicon alloy. The selenium-based material may be selected from one or more of elemental selenium, selenium oxide, and selenium alloy.

In one implementation, the negative electrode sheet includes a negative current collector and a carbon-containing coating arranged on at least one surface of the negative current collector. In this implementation, the battery cell 20 is a metal battery 100. During the charging and discharging process of the battery 100, active ions are deposited/stripped at the negative electrode sheet. The metal battery 100 may be an alkali metal battery 100, such as one of a lithium metal battery 100, a sodium metal battery 100, a potassium metal battery 100, a zinc metal battery 100, and an aluminum metal battery 100. This type of battery 100 can also be called a "negative electrode-free battery 100". During the charging process, active ions (such as Na+) extracted from the positive electrode active material are deposited on the negative current collector to form sodium metal. The arrangement of the carbon-containing coating helps make the metal deposition more uniform. The carbon-containing material includes one or more of conductive carbon, graphite, hard carbon, and carbon nanotubes.

In other implementations, a conductive film layer may alternatively be deposited on the negative current collector, for example, alloy material, titanium-based material, active metal (such as sodium metal), carbon-based material deposited with metal, composite material containing metal, alloy material containing metal, or the like. The above alloy material includes but is not limited to sodium-tin alloy, sodium-germanium alloy, and sodium-antimony alloy. The above titanium-based material includes but is not limited to titanium dioxide, titanate, and titanium phosphate.

In one implementation, the positive active layer and the negative active layer may further include a binder and a conductive agent. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. As an example, the conductive agent may include at least one of superconducting carbon, acetylene black, carbon black, Ketjen black, carbon dots, carbon nanotubes, graphene, and carbon nanofibers.

In one embodiment, the separator may be any well-known porous structure separator with good chemical stability and mechanical stability.

In one embodiment, the material of the separator may be selected from at least one of glass fiber, non-woven fabric, polyethylene, polypropylene, and polyvinylidene fluoride. The separator may be a single-layer film or a multi-layer composite film, which is not particularly limited. When the separator is a multi-layer composite film, the materials of each layer may be the same or different, which is not particularly limited.

The electrolyte plays a role in conducting ions between the positive electrode sheet and the negative electrode sheet. The electrolyte may be liquid, gel, or all-solid.

In some embodiments, the electrolyte is an electrolyte solution. The electrolyte solution includes an electrolyte salt and a solvent. The electrolyte salt dissolves to form electrolyte ions, which conduct electricity through the movement of the electrolyte ions in the electrolyte salt.

In one embodiment, in the sodium battery 100, the electrolyte salt includes sodium salts such as sodium hexafluorophosphate (NaPF6), sodium bis(fluorosulfonyl)imide (NaFSI), sodium trifluoromethanesulfonate (CF3NaO3S), and sodium sulfide (Na2S). The lithium battery 100 includes at least one lithium salt of lithium perchlorate, lithium hexafluoroarsenate, lithium hexafluorophosphate, lithium bis(trifluoromethylsulfonyl)imide, lithium bis(fluorosulfonyl)imide, lithium difluorooxalate borate, lithium tetrafluoroborate, and lithium trifluoromethanesulfonate.

In one embodiment, the solvent includes one or more solvents of chain ethers, ethylene glycol dimethyl ether and its derivatives, diethylene glycol dimethyl ether, triethylene glycol dimethyl ether, tetraethylene glycol dimethyl ether, and cyclic ethers. Specifically, it includes dimethyl ether (DME), diethylene glycol diethyl ether, tetraethylene glycol dimethyl ether, 2,2,2,2-tetrafluoroethyl ether, ethylene glycol diethyl ether, triethylene glycol dimethyl ether, ethylene glycol dimethyl ether derivatives, methyl trifluoroethyl carbonate (FEMC), dioxolane (DOL), acetonitrile (AN), fluorobenzene, triethyl phosphate (TEP), sulfolane, 2-methyltetrahydrofuran, tetrahydrofuran, dimethyl sulfoxide, N,N-dimethylacetamide, or the like.

In one embodiment, the electrolyte may further include additives. For example, the additives may include negative electrode film-forming additives and positive electrode film-forming additives, and may further include additives that can improve specific properties of the battery 100, such as additives that improve the overcharge performance of the battery 100, or additives that improve the high-temperature or low-temperature performance of the battery 100.

According to some embodiments of the present application, the present application further provides a battery 100, and the battery 100 includes the battery cell 20 according to any of the above solutions. Refer to FIG. 34. FIG. 34 is a schematic diagram of an exploded structure of a battery 100 according to one or more embodiments. The battery 100 includes a box body 10 and a battery cell 20, and the battery cell 20 is accommodated in the box body 10. The box body 10 is configured to provide an accommodating space for the battery cell 20, and the box body 10 may adopt a variety of structures. In some embodiments, the box body 10 may include a first part 11 and a second part 12. The first part 11 and the second part 12 cover each other, and the first part 11 and the second part 12 jointly define an accommodating space for accommodating the battery cell 20. The second part 12 may be a hollow structure with one end open, the first part 11 may be a plate-like structure, and the first part 11 covers the open side of the second part 12, so that the first part 11 and the second part 12 jointly define an accommodating space. The first part 11 and the second part 12 may alternatively be hollow structures with one side open, and the open side of the first part 11 covers the open side of the second part 12. Certainly, the box body 10 formed by the first part 11 and the second part 12 may have a variety of shapes, such as cylinders or rectangular parallelepipeds.

In the battery 100, there may be multiple battery cells 20, and the multiple battery cells 20 may be connected in series or in parallel or in a mixed connection. The mixed connection means that there are both series and parallel connections among the multiple battery cells 20. The multiple battery cells 20 may be directly connected in series or in parallel or in a mixed connection, and then the whole formed by the multiple battery cells 20 is accommodated in the box body 10. Certainly, the battery 100 may alternatively be that multiple battery cells 20 are first connected in series or in parallel or in a mixed connection to form a battery 100 module, and multiple battery 100 modules are then connected in series or in parallel or in a mixed connection to form a whole and accommodated in the box body 10. The battery 100 may further include other structures. For example, the battery 100 may further include a busbar component for realizing electrical connection between multiple battery cells 20.

Each battery cell 20 may be a secondary battery 100 or a primary battery 100; and its specific examples include all types of primary batteries 100 or secondary batteries 100. For example, it may be different types of secondary batteries 100 such as lithium batteries 100, sodium batteries 100, and potassium batteries 100. Lithium secondary batteries 100 may include lithium metal secondary batteries 100, lithium ion secondary batteries 100, lithium polymer secondary batteries 100, or lithium ion polymer secondary batteries 100. It may alternatively be a lithium-sulfur battery 100, a sodium-ion battery 100, or a magnesium-ion battery 100, but is not limited thereto. The battery cell 20 may be in the shape of a cylinder, a flat body, a rectangular parallelepiped, or other shapes.

In some embodiments, the battery 100 may be an energy storage device. The energy storage device includes an energy storage container, an energy storage cabinet, or the like.

According to some embodiments of the present application, the present application further provides an electrical device. The electrical device includes the battery cell 20 according to any of the above solutions. The battery cell 20 is used to provide electric energy for the electrical device. The electrical device may be any device or system that uses the battery cell 20 in any of the foregoing applications.

In some embodiments, the use of the electrical device of the present application is not particularly limited, and it can be used in any electronic apparatus known in the prior art. The battery 100 disclosed in the embodiments of the present application can be used in electrical devices that use the battery 100 as a power source or in various energy storage systems that use the battery 100 as an energy storage element. That is, an electrical device is provided. In some embodiments, the electrical device of the present application can be used in, but is not limited to, notebook computers, pen-input computers, mobile computers, e-book players, portable phones, portable fax machines, portable copiers, portable printers, head-mounted stereo headphones, video recorders, LCD TVs, portable cleaners, portable CD players, mini discs, transceivers, electronic notebooks, calculators, memory cards, portable tape recorders, radios, backup power supplies, motors, cars, motorcycles, power-assisted bicycles, bicycles, ships, spacecraft, lighting fixtures, toys, game consoles, clocks, power tools, flashlights, cameras, household large batteries 100, lithium-ion capacitors, or the like.

The battery cell 20, the battery 100 module, or the battery 100 pack may be selected for the electrical device according to its use requirements.

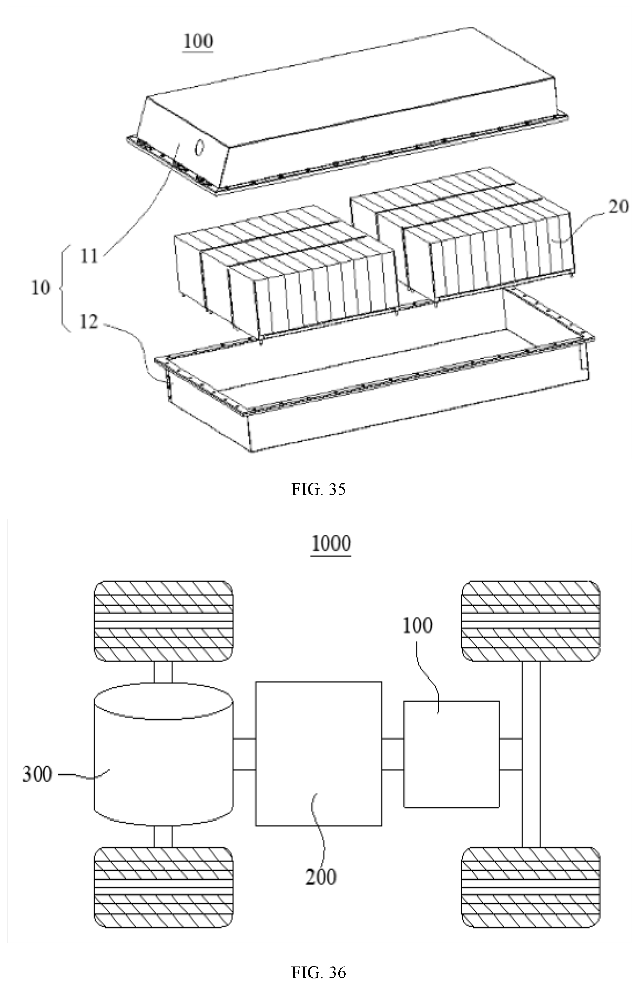

Refer to FIG. 35. FIG. 35 is a schematic structural diagram of a vehicle 1000 according to one or more embodiments. The vehicle 1000 may be a fuel vehicle, a gas vehicle, or a new energy vehicle. The new energy vehicle may be a pure electric vehicle, a hybrid vehicle, an extended-range vehicle, or the like. A battery 100 is provided inside the vehicle 1000, and the battery 100 may be arranged at the bottom or head or tail of the vehicle 1000. The battery 100 may be used to supply power to the vehicle 1000. For example, the battery 100 may be used as an operating power source for the vehicle 1000. The vehicle 1000 may further include a controller 200 and a motor 300. The controller 200 is configured to control the battery 100 to supply power to the motor 300, for example, to meet the working power requirements for starting, navigation, and driving of the vehicle 1000.

In some embodiments of the present application, the battery 100 can not only be used as an operating power source for the vehicle 1000, but also as a driving power source for the vehicle 1000, replacing or partially replacing fuel or natural gas to provide driving power for the vehicle 1000.

In the above implementations, by providing the gas-permeable film assembly 40, the battery cell 20 can discharge internal gas through the gas-permeable film 41 in a sealed state, so as to discharge the gas inside the housing of the battery 100 to the outside of the housing in a timely manner; in this way, the air pressure inside the housing of the battery 100 is not too high, thereby reducing the risk of the pressure relief mechanism 70 being actuated prematurely and greatly improving the service life of the battery cell 20. One or more gas-permeable film assemblies 40 may be provided on one battery cell 20, and the arrangement position and method of each gas-permeable film assembly 40 may be different. For example, one gas-permeable film assembly 40 is arranged on the side of the end cover 21 facing the interior of the housing of the battery 100, and one gas-permeable film assembly 40 is arranged on the side of the end cover 21 facing the exterior of the housing of the battery 100; or it may be that one gas-permeable film assembly 40 is arranged on the end cover 21, and another gas-permeable film assembly 40 is arranged on the shell 22.

The above are only the embodiments of the present application, and do not therefore limit the patent scope of the present application. Any equivalent structure or equivalent process transformation made by using the contents of the description and drawings of the present application, or directly or indirectly applied in other related technical fields, are all included in the patent protection scope of the present application in the same way.

## Claims

1. A battery cell, **characterized by** comprising:
a housing having a wall portion; and
an exhaust assembly arranged on the wall portion, wherein the exhaust assembly comprises a one-way valve and a gas-permeable film assembly, the gas-permeable film assembly comprises a gas-permeable film, and the exhaust assembly is configured to discharge gas from inside the housing.

2. The battery cell according to claim 1, **characterized in that**:
the one-way valve comprises a valve body and a valve core, the valve body has a valve cavity inside, the valve body is provided with an air inlet and an air outlet, the air inlet is configured to communicate the valve cavity with an interior of the housing, the air outlet is configured to communicate the valve cavity with an exterior of the housing, the valve core is arranged in the valve cavity, the valve core is configured to block an air inlet passage of the valve cavity, and the valve core is configured to open the air inlet passage under the action of gas inside the housing.

3. The battery cell according to claim 1 or 2, **characterized in that**:
the wall portion has a first exhaust hole, the first exhaust hole communicates the interior of the housing with the exterior of the housing, and the exhaust assembly is configured such that gas discharged through the first exhaust hole flows through the one-way valve and the gas-permeable film assembly.

4. The battery cell according to any one of claims 1 to 3, **characterized in that**:
along a thickness direction of the wall portion, the gas-permeable film is closer to the interior of the housing than the one-way valve.

5. The battery cell according to any one of claims 2 and 3, **characterized in that**:
the gas-permeable film is arranged on an air inlet side of the air inlet; and/or
the gas-permeable film is arranged on an air outlet side of the air inlet; and/or
the gas-permeable film is arranged on an air inlet side of the air outlet; and/or
the gas-permeable film is arranged on an air outlet side of the air outlet.

6. The battery cell according to any one of claims 1 to 5, **characterized in that**:
the wall portion has an outer surface and an inner surface arranged opposite each other, the outer surface is arranged toward an exterior of the housing, and the inner surface is arranged toward an interior of the housing;
a valve body of the one-way valve is arranged on the outer surface, and at least part of the valve body protrudes from the outer surface; and
at least part of the gas-permeable film assembly is arranged on the outer surface.

7. The battery cell according to any one of claims 1 to 5, **characterized in that**:
the wall portion has an outer surface and an inner surface arranged opposite each other, the outer surface is arranged toward an exterior of the housing, and the inner surface is arranged toward an interior of the housing;
a valve body of the one-way valve is arranged on the outer surface; and at least part of the valve body protrudes from the inner surface; and
the gas-permeable film assembly is arranged on a part of the valve body protruding from the inner surface.

8. The battery cell according to any one of claims 1 to 5, **characterized in that**:
the wall portion has an outer surface and an inner surface arranged opposite each other, the outer surface is arranged toward an exterior of the housing, and the inner surface is arranged toward an interior of the housing;
a valve body of the one-way valve is arranged on the outer surface; and at least part of the valve body protrudes from the outer surface; and
at least part of the gas-permeable film assembly is arranged on the inner surface.

9. The battery cell according to any one of claims 1 to 3 and 5, **characterized in that**:
the wall portion has an outer surface and an inner surface arranged opposite each other, the outer surface is arranged toward an exterior of the housing, and the inner surface is arranged toward an interior of the housing;
a valve body of the one-way valve is arranged on the outer surface; and at least part of the valve body protrudes from the inner surface; and
the gas-permeable film assembly is arranged on a side of the one-way valve facing the exterior of the housing.

10. The battery cell according to any one of claims 1 to 7, **characterized in that**:
the gas-permeable film assembly is connected to the one-way valve, and the one-way valve is connected to the wall portion; or
the one-way valve is connected to the gas-permeable film assembly, and the gas-permeable film assembly is connected to the wall portion.

11. The battery cell according to any one of claims 1 to 9, **characterized in that**:
the gas-permeable film assembly and the one-way valve are each independently connected to the wall portion.

12. The battery cell according to any one of claims 2 to 6, 8, 10, and 11, **characterized in that** the valve body comprises:
a valve seat; and
a valve cover comprising a cover top wall and a cover side wall connected to the cover top wall, wherein the cover top wall, the cover side wall, and the valve seat enclose to form the valve cavity, the valve seat is provided with the air inlet, and the valve cover is provided with the air outlet.

13. The battery cell according to claim 12, **characterized in that**:
the valve seat has a first through hole penetrating the valve seat, and the air inlet is the first through hole.

14. The battery cell according to claim 12 or 13, **characterized in that**:
the cover side wall has a second through hole penetrating the cover side wall, and the air outlet is the second through hole.

15. The battery cell according to claim 14, **characterized in that**:
along a direction away from the cover top wall, the second through hole extends to an end of the cover side wall; and
optionally, the second through hole is provided in plurality, and the plurality of the second through holes are distributed at intervals in a circumferential direction of the cover side wall.

16. The battery cell according to any one of claims 12 to 15, **characterized in that**:
a first guide post is convexly provided on a side of the cover top wall facing the valve seat, the cover top wall has a third through hole penetrating the cover top wall and the first guide post, or the cover top wall has a third through hole penetrating the cover top wall, and the air outlet is the third through hole.

17. The battery cell according to any one of claims 12 to 16, **characterized in that**:
the valve cover further comprises a flanging wall, wherein the cover side wall connects the cover top wall and the flanging wall, the flanging wall extends relative to the cover side wall toward a side away from the valve cavity, and the flanging wall is connected to the valve seat.

18. The battery cell according to claim 17, **characterized in that**:
a side of the valve seat facing the valve cover is provided with a first recessed groove recessed relative to a surface of the valve seat, and at least part of the flanging wall is accommodated in the first recessed groove and connected to the valve seat.

19. The battery cell according to claim 18, **characterized in that**:
a surface of the flanging wall facing the cover top wall is flush with a surface of the valve seat facing the valve cover; or the surface of the flanging wall facing the cover top wall is lower than the surface of the valve seat facing the valve cover.

20. The battery cell according to any one of claims 17 to 19, **characterized in that**:
the flanging wall is connected to the valve seat by welding; wherein, in a circumferential direction of the cover side wall, at least part of a first weld mark of the flanging wall and the valve seat is staggered from the second through hole on the cover side wall.

21. The battery cell according to claim 17, **characterized in that**:
an outer peripheral surface of the valve seat is convexly provided with a connecting protrusion, an inner peripheral surface of the flanging wall is provided with an accommodating groove, and the connecting protrusion is accommodated in the accommodating groove and connected to the flanging wall.

22. The battery cell according to claim 21, **characterized in that**:
the connecting protrusion is connected to the flanging wall by welding, wherein the flanging wall has an upper surface and a lower surface arranged opposite each other, the upper surface is arranged toward the cover top wall, and a second weld mark at which the connecting protrusion is welded to the flanging wall is located on the lower surface of the flanging wall.

23. The battery cell according to any one of claims 12 to 22, **characterized in that**:
the wall portion has an outer surface and an inner surface arranged opposite each other, the outer surface is arranged toward an exterior of the housing, the inner surface is arranged toward an interior of the housing, the wall portion is provided with a first exhaust hole, the first exhaust hole comprises a through hole section and a first hole section, the through hole section and the first hole section are arranged along a thickness direction of the wall portion, the through hole section communicates an interior of the housing with an exterior of the housing, the first hole section is located on a side of the through hole section facing away from the interior of the housing, an aperture of the first hole section is larger than an aperture of the through hole section, the first hole section is recessed relative to the outer surface, the one-way valve is at least partially accommodated in the first hole section, and at least part of the valve body protrudes from the outer surface.

24. The battery cell according to claim 23, **characterized in that**:
at least part of the gas-permeable film assembly is arranged on the inner surface, wherein the gas-permeable film assembly comprises a gas-permeable film and a connecting member, the connecting member is provided with a first gas-permeable hole, the gas-permeable film is arranged on the connecting member and covers the first gas-permeable hole, and the connecting member is connected to the wall portion.

25. The battery cell according to claim 24, **characterized in that**:
the wall portion has a first recessed platform recessed relative to the inner surface, the first recessed platform is arranged around the through hole section of the first exhaust hole, and the gas-permeable film assembly is at least partially accommodated in the first recessed platform.

26. The battery cell according to claim 25, **characterized in that**:
the wall portion further has a second recessed platform recessed relative to the inner surface, the first recessed platform is closer to the inner surface of the wall portion than the second recessed platform, the first recessed platform is arranged around the second recessed platform, the second recessed platform is arranged around the through hole section of the first exhaust hole, and the connecting member is at least partially accommodated in the first recessed platform.

27. The battery cell according to claims 24 to 26, **characterized in that**:
the gas-permeable film is arranged on a side of the connecting member away from the wall portion; or
the gas-permeable film is arranged on a side of the connecting member close to the wall portion.

28. The battery cell according to claims 24 to 27, **characterized in that**:
an orthographic projection of the first gas-permeable hole on the wall portion is located in an area in which the through hole section of the first exhaust hole is located; or
an orthographic projection of the first gas-permeable hole on the wall portion does not overlap with an area in which the through hole section of the first exhaust hole is located.

29. The battery cell according to any one of claims 24 to 28, **characterized in that**:
the wall portion further has a third recessed platform recessed relative to the inner surface, the third recessed platform is closer to the inner surface of the wall portion than the first recessed platform, and the third recessed platform is arranged around the first recessed platform.

30. The battery cell according to claim 23, **characterized in that**:
at least part of the gas-permeable film assembly is arranged on the outer surface, at least part of the gas-permeable film assembly is accommodated in the first exhaust hole, and the gas-permeable film assembly is located on a side of the one-way valve facing the wall portion.

31. The battery cell according to claim 30, **characterized in that**:
the first exhaust hole further comprises a second hole section, along the thickness direction of the wall portion, the second hole section is located between the through hole section and the first hole section, an aperture of the second hole section is smaller than an aperture of the first hole section, the aperture of the second hole section is larger than an aperture of the through hole section, and at least part of the gas-permeable film assembly is accommodated in the second hole section.

32. The battery cell according to claim 30 or 31, **characterized in that**:
the gas-permeable film assembly comprises a gas-permeable film and a connecting member, the connecting member is provided with a first gas-permeable hole, the gas-permeable film is arranged on the connecting member and covers the first gas-permeable hole, and the connecting member is connected to the wall portion by welding.

33. The battery cell according to claim 32, **characterized in that**:
a stress relief groove is provided around a weld mark between the connecting member and the wall portion;
optionally, a third stress relief groove is provided on the connecting member around a fifth weld mark between the connecting member and the wall portion; and/or
a second stress relief groove is provided on the wall portion around the fifth weld mark between the connecting member and the wall portion.

34. The battery cell according to claim 32 or 33, **characterized in that**:
a weld mark avoidance groove is provided on a side surface of the one-way valve facing the gas-permeable film assembly, and the weld mark avoidance groove covers the weld mark between the connecting member and the wall portion.

35. The battery cell according to any one of claims 12 to 23, **characterized in that**:
the gas-permeable film assembly is arranged on a side of the one-way valve facing the wall portion, and the gas-permeable film assembly is connected to the one-way valve, and the one-way valve is connected to the wall portion.

36. The battery cell according to any one of claims 12 to 23, **characterized in that**:
the gas-permeable film assembly is arranged on a side of the valve seat facing the valve cavity, and the one-way valve is connected to the wall portion.

37. The battery cell according to any one of claims 12 to 36, **characterized in that**:
a valve cover or valve seat of the one-way valve is connected to the wall portion by welding;
optionally, a stress relief groove is provided around a weld mark between the valve cover or valve seat and the wall portion;
optionally, a first stress relief groove is provided on the valve cover or valve seat around a third weld mark between the valve cover or valve seat and the wall portion; and/or
a second stress relief groove is provided on the wall portion around the third weld mark between the valve cover or valve seat and the wall portion.

38. The battery cell according to any one of claims 12 to 23, **characterized in that**:
at least part of the gas-permeable film assembly is arranged on the outer surface, the gas-permeable film assembly comprises a gas-permeable film and a connecting member, the connecting member is provided with a first gas-permeable hole, the gas-permeable film is arranged on the connecting member and covers the first gas-permeable hole, the one-way valve is arranged on a side of the connecting member facing the exterior of the housing, the one-way valve is connected to the connecting member, and the connecting member is connected to the wall portion.

39. The battery cell according to any one of claims 12 to 23, 30, and 35 to 37, **characterized in that**:
the gas-permeable film assembly comprises a gas-permeable film, wherein
the gas-permeable film is arranged on the inner surface of the wall portion, and the gas-permeable film is connected to the wall portion and covers a through hole section of the first exhaust hole on the wall portion; or
the gas-permeable film is arranged on the outer surface of the wall portion, the gas-permeable film is located on a side of the one-way valve facing the wall portion, the one-way valve covers the gas-permeable film, and the gas-permeable film is connected to the wall portion or one-way valve.

40. The battery cell according to any one of claims 2 to 6, 8, 10, and 11, **characterized in that**:
the valve body comprises a valve cover, the valve cover comprises a cover top wall and a cover side wall connected to the cover top wall, the cover top wall, the cover side wall, and the wall portion enclose to form the valve cavity, the wall portion is provided with the air inlet, and the cover side wall is provided with the air outlet.

41. The battery cell according to claim 40, **characterized in that**:
a side of the wall portion facing the exterior of the housing is provided with a second recessed groove recessed relative to an outer surface of the wall portion, the valve cover further comprises a flanging wall, the cover side wall connects the cover top wall and the flanging wall, the flanging wall extends relative to the cover side wall toward a side away from the valve cavity, and at least part of the flanging wall is accommodated in the second recessed groove and connected to the wall portion.

42. The battery cell according to claim 40 or 41, **characterized in that**:
the gas-permeable film assembly comprises a gas-permeable film, the gas-permeable film is arranged on an inner surface or outer surface of the wall portion, the gas-permeable film is connected to the wall portion, and the gas-permeable film covers a through hole section of the first exhaust hole of the wall portion; or
the gas-permeable film assembly comprises a gas-permeable film and a connecting member, the connecting member is provided with a first gas-permeable hole, the gas-permeable film is arranged on the connecting member and covers the first gas-permeable hole, the gas-permeable film is arranged on an inner surface or outer surface of the wall portion, and the connecting member is connected to the wall portion or one-way valve.

43. The battery cell according to any one of claims 2 to 6, 7, 9, and 11, **characterized in that** the valve body comprises:
a valve seat, comprising a seat bottom wall and a seat side wall connected to the seat bottom wall; and
a valve cover, arranged at an end of the valve seat away from the seat bottom wall, wherein the valve cover, the seat side wall, and the seat bottom wall enclose to form the valve cavity, the valve seat is provided with a fourth through hole, and the air inlet is the fourth through hole.

44. The battery cell according to claim 43, **characterized in that**:
the valve cover has a fifth through hole penetrating the valve cover, and the air outlet comprises the fifth through hole.

45. The battery cell according to claim 43 or 44, **characterized in that**:
the valve cover is connected to the valve seat, and the air outlet comprises a first exhaust gap formed between the valve cover and the valve seat.

46. The battery cell according to claim 43 or 44, **characterized in that**:
the valve cover is connected to the wall portion, and the air outlet comprises a second exhaust gap formed between the valve cover and the wall portion.

47. The battery cell according to any one of claims 2 to 6, 7, 9, and 11, **characterized in that**:
the valve body comprises a valve seat, the valve seat comprises a seat bottom wall and a seat side wall connected to the seat bottom wall, the seat bottom wall, the seat side wall, and the wall portion enclose to form the valve cavity, the valve seat is provided with a fourth through hole, the air inlet is the fourth through hole, the wall portion is provided with a first exhaust hole, the first exhaust hole communicates the valve cavity with an exterior of the housing, and the air outlet is the first exhaust hole.

48. The battery cell according to any one of claims 43 to 47, **characterized in that**:
the gas-permeable film assembly is arranged on a side of the seat bottom wall away from the valve cavity, wherein the gas-permeable film assembly comprises a gas-permeable film, the gas-permeable film is connected to the seat bottom wall, and the gas-permeable film covers the fourth through hole.

49. The battery cell according to any one of claims 43 to 47, **characterized in that**:
the gas-permeable film assembly is arranged on a side of the seat bottom wall away from the valve cavity, wherein the gas-permeable film assembly comprises a gas-permeable film and a connecting member, the connecting member is provided with a first gas-permeable hole, the gas-permeable film is arranged on the connecting member and covers the first gas-permeable hole, and the connecting member is connected to the seat bottom wall.

50. The battery cell according to claim 49, **characterized in that**:
the seat bottom wall has an inner wall surface and an outer wall surface arranged opposite each other, the inner wall surface is arranged toward the valve cavity, a side of the seat bottom wall away from the valve cavity has a fourth recessed platform recessed relative to an outer wall surface of the seat bottom wall, the fourth recessed platform is arranged around the fourth through hole, and the gas-permeable film assembly is at least partially accommodated in the fourth recessed platform.

51. The battery cell according to claim 50, **characterized in that**:
the seat bottom wall further has a fifth recessed platform recessed relative to the outer wall surface, the fourth recessed platform is closer to the outer wall surface of the seat bottom wall than the fifth recessed platform, the fourth recessed platform is arranged around the fifth recessed platform, the fifth recessed platform is arranged around the fourth through hole, and the connecting member is at least partially accommodated in the fourth recessed platform.

52. The battery cell according to claims 49 to 51, **characterized in that**:
the gas-permeable film is arranged on a side of the connecting member facing the valve cavity; or
the gas-permeable film is arranged on a side of the connecting member away from the valve cavity.

53. The battery cell according to any one of claims 43 to 47, **characterized in that**:
the gas-permeable film assembly is arranged on a side of the seat bottom wall facing the valve cavity, wherein
the valve cavity comprises a first cavity and a second cavity that are in communication with each other, the second cavity is closer to the seat bottom wall, along a direction parallel to the seat bottom wall, a cross-sectional area of the first cavity is larger than a cross-sectional area of the second cavity, the valve core is located in the first cavity, and the gas-permeable film assembly is located in the second cavity.

54. The battery cell according to claim 53, **characterized in that**:
the seat side wall comprises a first side wall portion, a second side wall portion, and a third side wall portion, the first side wall portion and the second side wall portion enclose the first cavity, the third side wall portion and the seat bottom wall enclose the second cavity, and a blocking member of the valve core abuts against the second side wall portion.

55. The battery cell according to claim 54, **characterized in that**:
the gas-permeable film assembly comprises a gas-permeable film and a connecting member, the connecting member is provided with a first gas-permeable hole, the gas-permeable film is arranged on the connecting member and covers the first gas-permeable hole, and the connecting member is connected to the third side wall portion.

56. The battery cell according to claim 54 or 55, **characterized in that**:
a surface of the gas-permeable film assembly facing the valve cavity is lower than a surface of the second side wall portion facing the valve cavity.

57. The battery cell according to claim 55 or 56, **characterized in that**:
the gas-permeable film is arranged on a side of the connecting member facing the seat bottom wall; or
the gas-permeable film is arranged on a side of the connecting member away from the seat bottom wall.

58. The battery cell according to any one of claims 53 to 57, **characterized in that**:
the battery cell further comprises a sealing ring, and the sealing ring is arranged between the gas-permeable film assembly and the seat bottom wall.

59. The battery cell according to claim 58, **characterized in that**:
the sealing ring is arranged between the gas-permeable film and the seat bottom wall, the sealing ring is arranged around the fourth through hole, the sealing ring is provided with a second gas-permeable hole, an aperture of the second gas-permeable hole is larger than an aperture of the fourth through hole, and the gas-permeable film covers the second gas-permeable hole.

60. The battery cell according to any one of claims 55 to 59, **characterized in that**:
the connecting member is connected to the third side wall portion by welding; or
the connecting member is in interference fit with the third side wall portion.

61. The battery cell according to any one of claims 48 to 60, **characterized in that**:
the gas-permeable film is arranged at an interval from the valve core.

62. The battery cell according to any one of claims 43 to 47, **characterized in that**:
the gas-permeable film assembly is arranged on a side of the one-way valve facing the exterior of the housing, and the gas-permeable film assembly covers the air outlet of the one-way valve.

63. The battery cell according to claim 62, **characterized in that**:
the gas-permeable film assembly comprises a gas-permeable film and a connecting member, the connecting member is provided with a first gas-permeable hole, the gas-permeable film is arranged on the connecting member and covers the first gas-permeable hole, and the connecting member is connected to the wall portion or valve cover.

64. The battery cell according to any one of claims 43 to 63, **characterized in that**:
the wall portion has an outer surface and an inner surface arranged opposite each other, the outer surface is arranged toward an exterior of the housing, the inner surface is arranged toward an interior of the housing, the wall portion is provided with a first exhaust hole, the first exhaust hole comprises a through hole section and a first hole section, the through hole section and the first hole section are arranged along a thickness direction of the wall portion, the through hole section communicates the interior of the housing with the exterior of the housing, the first hole section is located on a side of the through hole section facing away from the interior of the housing, an aperture of the first hole section is larger than an aperture of the through hole section, the first hole section is recessed relative to the outer surface, the one-way valve is at least partially accommodated in the first hole section, and at least part of the valve body protrudes from the inner surface; and
optionally, a valve seat of the one-way valve is connected to the wall portion by welding, and a stress relief groove is provided around a weld mark between the valve seat and the wall portion.

65. The battery cell according to any one of claims 43 to 64, **characterized in that** the battery cell further comprises:
a shielding member, installed on the wall portion, wherein the shielding member is located on a side of the wall portion facing the exterior of the housing, and the shielding member covers the one-way valve and the gas-permeable film assembly;
wherein a first discharge passage is formed between the shielding member and the wall portion, and the first discharge passage communicates the air outlet of the one-way valve with an exterior of the battery cell.

66. The battery cell according to claim 65, **characterized in that**:
the wall portion has an outer surface and an inner surface arranged opposite each other, the outer surface is arranged toward an exterior of the housing, the inner surface is arranged toward an interior of the housing, the wall portion has a first exhaust hole, the first exhaust hole communicates an interior of the housing with an exterior of the housing, the one-way valve and the gas-permeable film assembly are at least partially accommodated in the first exhaust hole, the wall portion has a sixth recessed platform recessed relative to the outer surface, the sixth recessed platform is arranged around the first exhaust hole, the sixth recessed platform is closer to the outer surface than the first exhaust hole, and the shielding member is at least partially accommodated in the sixth recessed platform.

67. The battery cell according to claim 65 or 66, **characterized in that**:
the first discharge passage comprises a third exhaust gap, the third exhaust gap is formed between the shielding member and a recessed platform side surface of the sixth recessed platform, and the third exhaust gap is configured to communicate the air outlet and the exterior of the housing.

68. The battery cell according to claim 67, **characterized in that**:
the first discharge passage further comprises a fourth exhaust gap, the fourth exhaust gap is formed between the shielding member and a recessed platform bottom surface of the sixth recessed platform, and the fourth exhaust gap communicates the third exhaust gap and the air outlet.

69. The battery cell according to any one of claims 65 to 68, **characterized in that**:
the shielding member covers a valve cover of the one-way valve, a side of the valve cover facing the shielding member is provided with a seventh recessed platform recessed relative to a surface of the valve cover, the seventh recessed platform is arranged around a fifth through hole on the valve cover, and the seventh recessed platform communicates with the first discharge passage.

70. The battery cell according to any one of claims 2 to 69, **characterized in that** the valve core comprises:
an elastic member, arranged in the valve cavity; and
a blocking member, movably arranged in the valve cavity, wherein the blocking member is configured to block the air inlet passage under an action of the elastic member, and to open the air inlet passage under an action of gas inside the housing.

71. The battery cell according to claim 70, **characterized in that**:
the valve body comprises a valve cover, wherein a first guide post is convexly provided on a side of the valve cover facing the blocking member, and part of the elastic member is sleeved on an outer side of the first guide post.

72. The battery cell according to claim 71, **characterized in that**:
a diameter of the first guide post is D1, and an inner diameter of the elastic member is D2, satisfying 0mm<D2-D1≤5mm.

73. The battery cell according to claim 71 or 72, **characterized in that**:
a second guide post is convexly provided on a side of the blocking member facing the valve cover, and part of the elastic member is sleeved on an outer side of the second guide post.

74. The battery cell according to claim 73, **characterized in that**:
a diameter of the second guide post is D3, and an inner diameter of the elastic member is D2, satisfying 0mm<D3-D1≤5mm.

75. The battery cell according to claim 73 or 74, **characterized in that**:
in an axial direction of the elastic member, there is a gap between an end surface of the first guide post away from the valve cover and an end surface of the second guide post close to the valve cover; and
optionally, a height H1 of the gap satisfies 0mm<H1≤0.5mm.

76. The battery cell according to any one of claims 70 to 75, **characterized in that**:
in an axial direction of the valve cavity, two ends of the elastic member respectively abut against the valve cover and the blocking member, a distance between a first abutting surface of the valve cover and a second abutting surface of the blocking member is L1, and a solid length of the elastic member is L2, satisfying L1>L2, wherein the solid length of the elastic member is a length occupied by a solid of the elastic member after the elastic member is completely compressed; and
optionally, L1-L2>0.5mm.

77. The battery cell according to claim 76, **characterized in that**:
the elastic member is a spring, and the solid length L2 of the elastic member is d1*n1+d2+d3, wherein d1 is a wire diameter of the spring, n1 is a maximum number of turns of the spring in an axial direction, d2 is a thickness of an outermost spring at one end of the spring, d3 is a thickness of an outermost spring at another end of the spring, d2≤d1, and d3≤d1.

78. The battery cell according to any one of claims 70 to 77, **characterized in that**:
a plurality of limiting protrusions are convexly provided on an outer peripheral surface of the blocking member, and the plurality of limiting protrusions are arranged at intervals along a circumferential direction of the blocking member.

79. The battery cell according to any one of claims 70 to 78, **characterized in that**:
the blocking member comprises a pressing portion and a sealing portion, wherein along an axial direction of the valve cavity, two ends of the elastic member respectively abut against the valve cover and the pressing portion, the sealing portion is connected to a side of the pressing portion facing away from the valve cover, and the sealing portion is configured to block the air inlet passage.

80. The battery cell according to claim 79, **characterized in that**:
a material of the sealing portion comprises ethylene propylene diene monomer, fluororubber or Teflon; and/or
a material of the elastic member comprises steel, iron or aluminum.

81. The battery cell according to any one of claims 12 to 80, **characterized in that**:
the valve cover comprises a cover side wall, wherein the cover side wall has a second through hole penetrating the cover side wall, the air outlet is the second through hole, and along an axial direction of the valve cavity, a sealing interface between the valve core and the valve seat is higher than or flush with a bottom wall of the second through hole.

82. The battery cell according to any one of claims 1 to 81, **characterized in that**:
the gas-permeable film assembly comprises a gas-permeable film and a connecting member, wherein the connecting member is provided with a first gas-permeable hole, the gas-permeable film is arranged on the connecting member and covers the first gas-permeable hole, and the gas-permeable film is configured to allow gas inside the battery cell to pass through the gas-permeable film and be discharged.

83. The battery cell according to claim 82, **characterized in that**:
the connecting member has a first annular table surface recessed relative to a surface of the connecting member, wherein the first annular table surface is arranged around the first gas-permeable hole, and the gas-permeable film is arranged on the first annular table surface.

84. The battery cell according to claim 82 or 83, **characterized in that**:
the gas-permeable film assembly further comprises a backing member, wherein the backing member is arranged between the gas-permeable film and the connecting member, and a gas-permeable rate of the backing member is greater than a gas-permeable rate of the gas-permeable film.

85. The battery cell according to claim 84, **characterized in that**:
the connecting member further has a second annular table surface recessed relative to a surface of the connecting member, wherein the second annular table surface is arranged around the first gas-permeable hole, and the backing member is arranged on the second annular table surface.

86. The battery cell according to any one of claims 82 to 85, **characterized in that**:
the connecting member is a metal member.

87. The battery cell according to any one of claims 1 to 86, **characterized in that** the battery cell further comprises:
an insulating member arranged on a side of the wall portion facing an interior of the housing; wherein the insulating member is provided with a second exhaust hole penetrating a body of the insulating member, and the second exhaust hole is in communication with the first exhaust hole on the wall portion.

88. The battery cell according to any one of claims 1 to 42 and 70 to 87, **characterized in that** the battery cell further comprises:
a protective patch, wherein the protective patch is arranged on a side of the wall portion facing an exterior of the housing, the protective patch is provided with a first avoidance hole penetrating the protective patch, and the first avoidance hole is configured to allow the one-way valve to pass through.

89. The battery cell according to any one of claims 43 to 87, **characterized in that** the battery cell further comprises:
a protective patch, wherein the protective patch is arranged on a side of the wall portion facing an exterior of the housing, the protective patch covers the exhaust assembly, a second discharge passage is formed between the protective patch and the wall portion, and the second discharge passage communicates an air outlet of the one-way valve with an exterior of the battery cell.

90. The battery cell according to claim 89, **characterized in that**:
the battery cell further comprises a shielding member, wherein the shielding member covers the exhaust assembly, and the protective patch covers the shielding member and the second discharge passage formed between the shielding member and the wall portion.

91. The battery cell according to claim 89 or 90, **characterized in that**:
a side of the protective patch facing the wall portion is provided with an adhesive layer, the adhesive layer bonds the protective patch and the wall portion, the adhesive layer is provided with an avoidance groove, and the first discharge passage is formed between the avoidance groove and the wall portion.

92. The battery cell according to any one of claims 1 to 91, **characterized in that**:
the wall portion is provided with a first exhaust hole, at least part of the exhaust assembly is installed in the first exhaust hole, and the first exhaust hole is a liquid injection hole of the battery cell; or the first exhaust hole is arranged at an interval from the liquid injection hole.

93. The battery cell according to any one of claims 1 to 92, **characterized in that** the housing comprises:
a shell, wherein an accommodating cavity with an opening is formed inside, and the accommodating cavity is configured to accommodate an electrode assembly; and
an end cover closing the opening;
wherein the end cover is the wall portion; or
the shell comprises the wall portion; or
the wall portion is a wall located at a top of the housing when the battery cell is in a placed state.

94. The battery cell according to any one of claims 1 to 93, **characterized in that** the battery cell further comprises:
a pressure relief mechanism arranged on the housing, wherein the pressure relief mechanism is configured to be actuated to relieve an internal pressure of the battery cell when the battery cell is in thermal runaway, and an actuation pressure of the pressure relief mechanism is greater than an opening pressure of the one-way valve.

95. The battery cell according to claim 94, **characterized in that**:
the wall portion has a first exhaust hole, wherein the first exhaust hole communicates an interior of the housing with an exterior of the housing, and the first exhaust hole communicates with the exhaust assembly; and
the wall portion has a pressure relief hole, wherein the pressure relief hole communicates the interior of the housing with the exterior of the housing, the pressure relief mechanism is installed on the pressure relief hole, and an aperture of the pressure relief hole is larger than an aperture of the first exhaust hole.

96. The battery cell according to claim 94 or 95, **characterized in that**:
an exhaust rate of the one-way valve is less than an exhaust rate of the pressure relief mechanism.

97. A battery, **characterized by** comprising the battery cell according to any one of claims 1 to 96.

98. An electrical device, **characterized by** comprising the battery cell according to any one of claims 1 to 96, wherein the battery cell is configured to provide electric energy.
